# EUROPEAN PATENT APPLICATION

(11) **EP 1 689 200 A1**
(43) Date of publication of application: **09.08.2006**
(21) Application number: 04792821.3
(22) Date of filing: 15.10.2004
(51) Int. Cl.: H04Q 7/34

(54) **LOCATION INFORMATION NOTIFYING SYSTEM AND METHOD, TERMINAL LOCATION DETERMINING APPARATUS, AND PRIVACY CHECK APPARATUS**

(30) Priority: 17.10.2003 JP 2003357732
(71) Applicant: NEC CORPORATION, Minato-ku, Tokyo 108-8001 (JP)
(72) Inventor: UEMATSU, Akira, c/o NEC Corporation, Tokyo 108-8001 (JP); KURASHIMA, Akihisa, c/o NEC Corporation, Tokyo 108-8001 (JP); ISHII, Kenichi, c/o NEC Corporation, Tokyo 108-8001 (JP)
(74) Representative: Glawe, Delfs, Moll
(86) International application number: PCT/JP2004/015679
(87) International publication number: WO 2005/039223

(57) **Abstract**

A terminal (101) sends a position request message to a terminal position determination device (103) of a mobile network (100) in order to notify a server (102) of the positional information of the terminal itself. The terminal position determination device (103) determines whether to permit the notification of the positional information from the terminal (101) to the server (102) based on privacy setting information for a user who uses the terminal (101), and performs position measurement between the terminal (101) and the terminal position determination device only if it has been determined to be permitted, and the terminal position determination device provides to the terminal (101) the positional information of the terminal (101). The terminal (101) notifies the server (102) of the provided positional information of the terminal itself.

## Description

### BACKGROUNDS OF THE INVENTION

### Field of the Invention

The present invention relates to a positional information notification system, wherein a terminal in a mobile network obtains information on the position of the terminal itself from the mobile network to determine the current position of the terminal itself, and notify a server that can communicate with the terminal of the information, and, more particularly, to a privacy protection function during acquisition from the mobile network of the information on the position by the terminal.

### Description of the Related Art

In a mobile network, positional information service using positional information of a terminal is an important function that allows various value-added service to be provided. For example, the terminal can obtain and notify a server of the positional information of the terminal itself, based on the history of positional information notified from the terminal, the server can analyze the behavior of a user and provide information that is optimum for the user behavior.

The 3rd Generation Partnership Project (3GPP), which specifies international standards for mobile networks, established "Functional stage 2 Description of LCS version 6.3.0", March 2003 (hereinafter referred to as Document 1), as a method whereby a terminal obtains the positional information of the terminal itself. A scheme whereby a terminal obtains the position of the terminal itself in the mobile network of the Document 1 will be described by referring to diagrams.

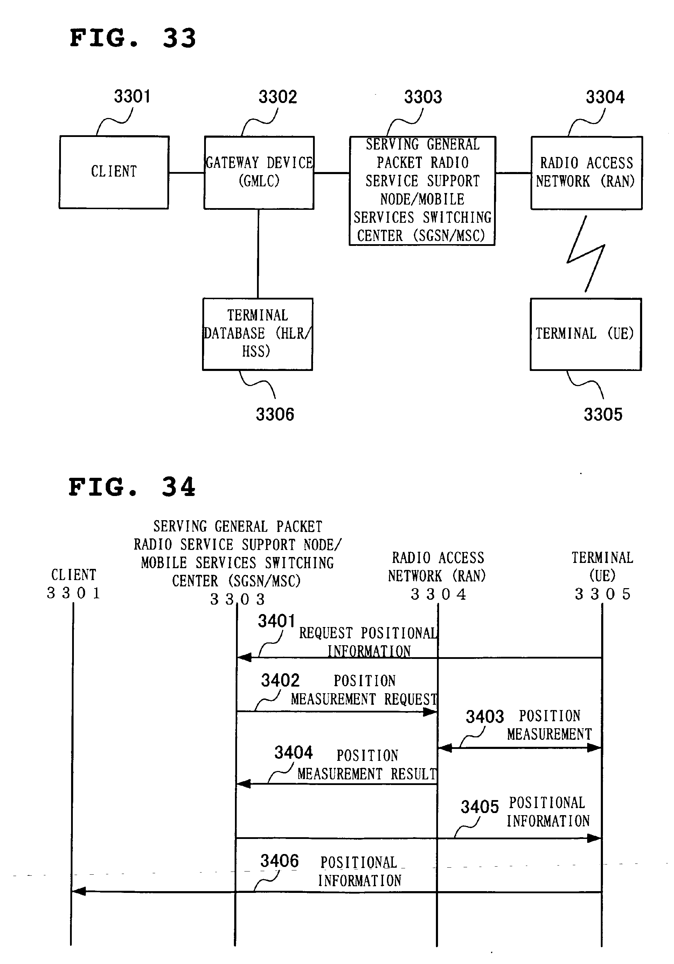

Fig. 33 shows only a configuration that is required to determine the positional information of a terminal in a mobile network according to 3GPP. Referring to Fig. 33, the mobile network according to 3GPP comprises a plurality of nodes, such as a client device 3301 to which the position of the terminal is provided from the mobile network, and a plurality of other client devices, a gateway mobile location center (GMLC) device 3302, which is a gateway device for receiving position measurement request from the client device in the mobile network, and a plurality of other GMLC devices, a serving general packet radio service support node/mobile services switching center (SGSN/MSC) device 3303, which is a radio access network management device for managing one or more radio access networks, and a plurality of other SGSN/MSC devices, a radio access network (RAN) 3304, and a plurality of other RANs, a user equipment (UE) device 3305, which is a terminal whose position is to be measured, and a plurality of other UE devices, and a home location resister/home subscriber server (HLR/HSS) device 3306, which is a mobile device database for holding information of the radio access networks to which each terminal is connected, and a plurality of other HLR/HSS devices.

Fig. 34 shows a sequence whereby the UE device 3305 obtains the positional information of the device itself and notifies the client device 3301 of the information, in a mobile network according to 3GPP.

Using Figs. 33 and 34, a method whereby the UE device 3305 obtains the positional information of the device itself and notifies the client device 3301 of the information, in the mobile network according to 3GPP will be described. When the UE device 3305 requests positional information from the RAN 3304 (Step 3401), the SGSN/MSC device 3303 transmits a position measurement request from the UE device 3305 to the RAN 3304 (Step 3402), and position measurement is performed between the RAN 3304 and the UE device 3305 (Step 3403). When the position measurement is finished, the result is provided through the SGSN/MSC device 3303 (Step 3404) to the UE device (Step 3405). Finally, the UE device 3305 notifies the client device 3301 of the obtained positional information (Step 3406).

There are various methods whereby the UE device 3305 obtains positional information by performing position measurement between the RAN 3304 and the UE device 3305. "Stage 2 functional specification of User Equipment (UE) positioning in UTRAN V5.6.0", 3GPP, June 2003 (hereinafter referred to as Document 2), discloses a method whereby the UE device 3305 obtains the positional information between the RAN 3304 and the UE device 3305 by a cell ID scheme or a network-assisted global positioning system (GPS) scheme.

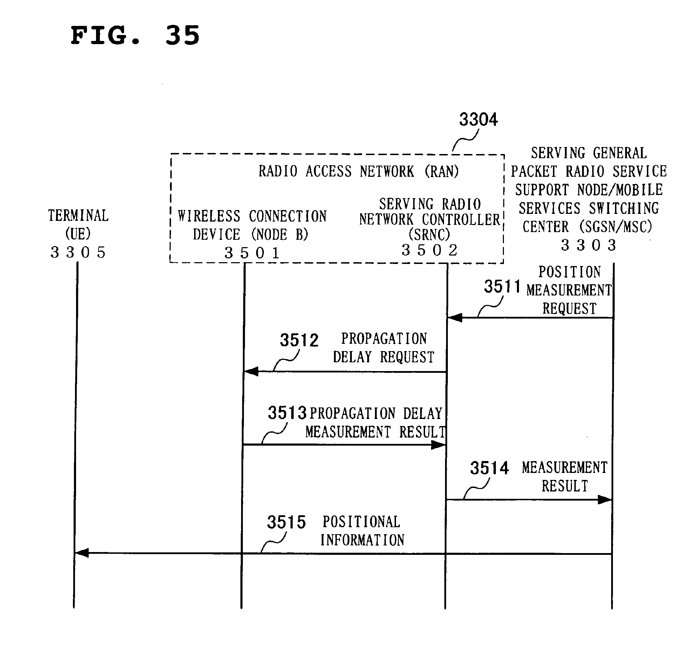

In the cell ID scheme, if the network device to which a terminal is wirelessly connected can be identified, it can be determined that the terminal is present in a distance range (cell) from the network to which the terminal is wirelessly connected, such that the cell is represented as the position of the terminal. Fig. 35 describes a sequence whereby the UE device 3305 obtains positional information from a mobile network using the cell ID scheme. In Fig. 35, the radio access network RAN 3304 includes a wireless connection device (Node B) 3501 wirelessly connected to the UE device 3305 and a serving radio network controller (SRNC) 3502 for controlling the wireless connection between the UE device 3305 and the wireless connection device 3501. In the cell ID scheme, when the SRNC device 3502 receives the position measurement request from the SGSN/MSC device 3303 (Step 3511), the SRNC device 3502 notifies the SGNS/MSC device 3303 of the information on the cell to which the UE device connects, as a positional result 3514. In order to improve the precision of position measurement, the SRNC device 3502 requests a propagation delay from the Node B device 3501 in Step 3512, the Node B device 3501 measures the propagation time of a radio wave between the UE device 3305 and the Node B device and notifies the SRNC device of the result in Step 3513.

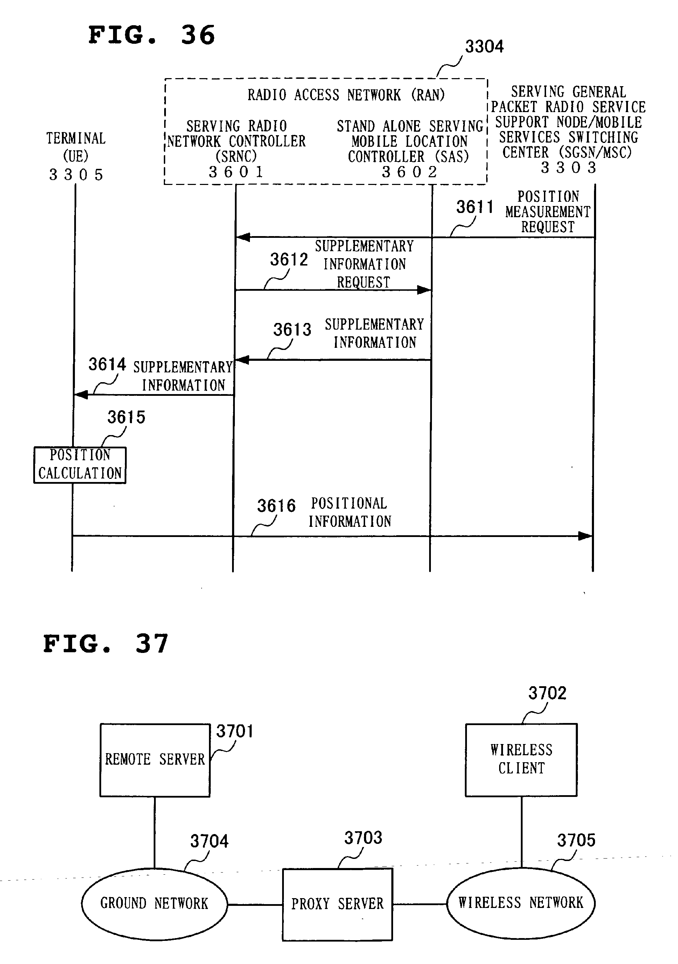

In the network-assisted GPS scheme, the UE device 3305 having a global positioning system (GPS) function obtains supplementary information from the mobile network to increase speed and precision. Fig. 36 describes a sequence whereby the UE device 3305 obtains positional information from a mobile network using the network-assisted GPS scheme. Supplementary information to calculate a position using the GPS function of the UE device is determined by a stand alone serving mobile location controller (SAS) 3602 contained in the RAN 3304. When the SRNC device 3601 receives a position measurement request from the SGSN/MSC device 3303 in Step 3611, the SRNC device 3601 requests supplementary information from the SAS device 3602 (Step 3612), and the SAS device 3602 determines the supplementary information with which the GPS function of the UE device 3305 calculates the position to notify the SRNC device of the information (Step 3613). The SRNC device 3601 provides the supplementary information to the UE device 3305 in Step 3614, the UE device calculates the position using the supplementary information (Step 3615), and notifies the SGSN/MSC device 3303 of the calculated positional information in Step 3616.

Since the positional information of the terminal is important privacy information for the user of the terminal, the mobile network that provides a function for determining the position of the terminal is required to have a function for privacy protection in regards to the positional information of the user. For the privacy protection in regards to the positional information of the user, for example, Japanese Patent Laid-open No. 2000-21151 (hereinafter referred to as Document 3) discloses a method for exchanging sensitive information in a wireless communication system.

A privacy protection scheme disclosed in Document 3 will be described below. Fig. 37 schematically shows the configuration of a wireless communication system that achieves privacy protection disclosed in Document 3, which comprises a wireless client 3702 connected to a wireless network 3705, a remote server 3701 connected to a ground network 3704, and a proxy server 3703 connected to both the wireless network 3705 and the ground network 3704. In the method for exchanging positional information from the wireless client to the remote server, disclosed in Document 3, the wireless client device transmits the positional information to a proxy server every time a request is issued. The proxy server receives the positional information on the wireless client device from the wireless network to which the wireless client is connected. In receiving both sets of information, the proxy server performs normalization and mediation of the two groups of information. After privacy agreement has been established, the normalized and mediated positional information is released to the remote server by the proxy server only. For example, the information is not released to the remote server until the privacy agreement is established between a particular wireless client device and the remote server.

The method established in Document 1, whereby the UE device obtains the positional information of the device itself does not include a privacy protection function in the process of obtaining positional information. In this case, the positional information obtained by the UE device may be carelessly or unknowingly disclosed to the outside of the mobile network.

Meanwhile, in the method of privacy protection disclosed in Document 3, when disclosing the positional information owned by the wireless client device to the remote server, if the positional information is sent to the proxy server, privacy mediation is performed at the proxy server, and privacy agreement has been established, the positional information is released from the proxy server to the remote server. In this method, the privacy of the positional information is protected when the wireless client device exchanges information with the remote server through the proxy server; however, the privacy of the positional information cannot be protected when the wireless client device exchanges the information with the remote server directly. For example, if the wireless client device is a mobile phone terminal, the mobile phone terminal is connected only to a mobile phone network, and the exchange of information between the mobile phone terminal and the remote server must go through the proxy server disposed in the network, the privacy of the positional information of the mobile phone terminal can be protected using the method for privacy protection disclosed in Document 3. However, if the mobile phone is connected to a wireless LAN in addition to the mobile phone network, and the positional information obtained from the mobile phone network is released to the remote server directly connected through the wireless LAN, the method of privacy protection disclosed in Document 3 does not apply.

### SUMMARY OF THE INVENTION

An object of the present invention is to achieve privacy protection when a terminal obtains the position of the terminal itself and notifies a server of the position in a mobile network, by applying a privacy protection function when the terminal obtains the positional information from the mobile network.

A first positional information notification system of the present invention is a positional information notification system comprising a mobile communication network to which one or more terminals and one or more terminal position determination devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the terminal position determination device has privacy settings for users who use each of the terminals, and a privacy check unit, the privacy check unit having a function for determining, based on the privacy setting, whether to permit the notification of the positional information from the terminal to the selected server, wherein the terminal position determination device, upon receiving the position request message from the terminal, determines in the privacy check unit whether to permit the notification of the positional information from the terminal to the selected server, and if permitted, provides to the terminal the information on the position of the terminal.

A second positional information notification system of the present invention is the first positional information notification system, wherein the terminal position determination device inquires, in the privacy check unit, of the user of the terminal about whether to permit the notification of the positional information to the selected server, and provides to the terminal the information on the position of the terminal only when the user permits the notification of the positional information to the selected server.

A third positional information notification system of the present invention is the second positional information notification system, wherein a condition for the inquiry of the user of the terminal in the privacy check unit is that the notification of the positional information from the terminal to the selected server is not permitted based on the privacy setting for the user who uses the terminal.

A fourth positional information notification system of the present invention is a positional information notification system comprising a mobile communication network to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the privacy check device holds privacy settings for users who use each of the terminals and has a privacy check unit, the privacy check unit having a function for determining whether to permit, based on the privacy setting, the notification of the positional information from the terminal to the server, wherein the terminal position determination device, upon receiving the position request message from the terminal, inquires of a privacy check device for holding the privacy setting for the user who uses the terminal about whether to permit the notification of the positional information from the terminal to the selected server, wherein the privacy check device, upon receiving the inquiry from the terminal position determination device, determines in the privacy check unit whether to permit, based on the privacy setting, the notification of the positional information from the terminal to the selected server, and notifies the terminal position determination device of the result of the determination, wherein the terminal position determination device provides to the terminal the information on the position of the terminal if the notification of the positional information from the terminal to the selected server is permitted based on the result of the determination notified from the privacy check device.

A fifth positional information notification system of the present invention is the fourth positional information notification system, wherein the privacy check device for holding the privacy setting of the terminal inquires of the user of the terminal about whether to permit the notification of the positional information to the selected server, and notifies the terminal position determination device of the result, notified from the terminal, of the determination by the user.

A sixth positional information notification system of the present invention is the fifth positional information notification system, wherein a condition for the inquiry of the user of the terminal in the privacy check device for holding the privacy setting of the terminal is that the notification of the positional information from the terminal to the selected server is not permitted based on the privacy setting for the user who uses the terminal.

A seventh positional information notification system of the present invention is a positional information notification system comprising two or more mobile communication networks to which one or more terminals and one or more terminal position determination devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the first terminal position determination device associated with the first mobile communication network has privacy settings for users who use each of the terminals associated with the first mobile communication network, and a privacy check unit, the privacy check unit having a function for determining whether to permit, based on the privacy setting, the notification of the positional information from the terminal associated with the first mobile communication network to the selected server, wherein the second terminal position determination device associated with the second mobile communication network, upon receiving the position request message from the terminal associated with the first mobile communication network, inquires of the first terminal position determination device about whether to permit the notification of the positional information from the terminal to the selected server, wherein the first terminal position determination device determines in the privacy check unit whether to permit, based on the privacy setting, the notification of the positional information from the terminal to the selected server, and notifies the second terminal position determination device of the result of the determination, wherein the second terminal position determination device provides to the terminal the information on the position of the terminal, if the notification of the positional information from the terminal to the selected server is permitted based on the result of the determination notified from the first terminal position determination device.

An eighth positional information notification system of the present invention is the seventh positional information notification system, wherein the first terminal position determination device inquires, in the privacy check unit, of the user of the terminal about whether to permit the notification of the positional information to the selected server, and notifies the second terminal position determination device of the result, notified from the terminal, of the determination by the user.

A ninth positional information notification system of the present invention is the eighth positional information notification system, wherein a condition for the inquiry of the user of the terminal in the privacy check unit in the first terminal position determination device is that the notification of the positional information from the terminal to the selected server is not permitted based on the privacy setting for the user who uses the terminal.

A tenth positional information notification system of the present invention is a positional information notification system comprising two or more mobile communication networks to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the first privacy check device associated with the first mobile communication network holds privacy settings for users who use each of the terminals associated with the first mobile communication network, and has a privacy check unit, the privacy check unit having a function for determining whether to permit, based on the privacy setting, the notification of the positional information from the terminal associated with the first network to the selected server, wherein the second the terminal position determination device associated with the second mobile communication network, upon receiving the position request message from the terminal associated with the first mobile communication network, inquiries of the second privacy check device associated with the second mobile communication network about whether to permit the notification of the positional information from the terminal to the selected server, wherein the second privacy check device inquires of the first privacy check device about whether to permit the notification of the positional information from the terminal to the selected server, wherein the first privacy check device determines in the privacy check unit whether to permit, based on the privacy setting, the notification of the positional information from the terminal to the selected server, and notifies the second privacy check device of the result of the determination, wherein the second privacy check device notifies the second terminal position determination device of the result of the determination from the first privacy check device, wherein the second terminal position determination device provides to the terminal the information on the position of the terminal, if the notification of the positional information from the terminal to the selected server is permitted based on the result of the determination notified from the second privacy check device.

An eleventh positional information notification system of the present invention is the tenth positional information notification system, wherein the first privacy check device inquires, in the privacy check unit, of the user of the terminal about whether to permit the notification of the positional information to the server, and notifies the second privacy check device of the result, notified from the terminal, of the determination by the user.

A twelfth positional information notification system of the present invention is the tenth positional information notification system, wherein the second terminal position determination device associated with the second mobile communication network, upon receiving the position request message from the terminal associated with the first mobile communication network, inquires of the first privacy check device about whether to permit the notification of the positional information from the terminal to the selected server, wherein the first privacy check device determines in the privacy check unit whether to permit, based on the privacy setting, the notification of the positional information from the terminal to the selected server, and notifies the second terminal position determination device of the result of the determination, wherein the second terminal position determination device provides to the terminal the information on the position of the terminal, if the notification of the positional information from the terminal to the selected server is permitted based on the result of the determination notified from the first privacy check device.

A thirteenth positional information notification system of the present invention is the twelfth positional information notification system, wherein the first privacy check device inquires, in the privacy check unit, of the user of the terminal about whether to permit the notification of the positional information to the server, and notifies the second terminal position determination device of the result, notified from the terminal, of the determination by the user.

A fourteenth positional information notification system of the present invention is the eleventh or the thirteenth positional information notification system, wherein a condition for the inquiry of the user of the terminal in the first privacy check device for holding the privacy setting of the terminal is that the notification of the positional information from the terminal to the selected server is not permitted based on the privacy setting for the user who uses the terminal.

A fifteenth positional information notification system of the present invention is any of the first positional information notification system to the fourteenth positional information notification system, wherein the information on the position provided to the terminal from the terminal position determination device is the positional information of the terminal.

A sixteenth positional information notification system of the present invention is any of the first positional information notification system to the fourteenth positional information notification system, wherein the information on the position provided to the terminal from the terminal position determination device is supplementary information required for the terminal to determine the positional information of the terminal itself.

A first positional information notification method of the present invention comprises the following steps: (1) a terminal for notifying a server that can communicate with the terminal of the positional information of the terminal itself transmits a position request message to a terminal position determination device, (2) the terminal position determination device determines whether to permit the notification of the positional information from the terminal to the server based on privacy setting information for a user who uses the terminal, (3) if the notification of the positional information from the terminal to the server has been determined to be permitted, position measurement is performed between the terminal position determination device and the terminal, (4) the terminal position determination device provides to the terminal the positional information of the terminal obtained by the position measurement, and (5) the terminal notifies the server of the provided positional information of the terminal itself.

A second positional information notification method of the present invention comprises the following steps: (1) a terminal for notifying a server that can communicate with the terminal of the positional information of the terminal itself transmits a position request message to a terminal position determination device, (2) position measurement is performed between the terminal position determination device and the terminal, (3) the terminal position determination device determines whether to permit the notification of the positional information from the terminal to the server based on privacy setting information for a user who uses the terminal, (4) if the notification of the positional information from the terminal to the server has been determined to be permitted, the terminal position determination device provides to the terminal the positional information of the terminal obtained by the position measurement, and (5) the terminal notifies the server of the provided positional information of the terminal itself.

A third positional information notification method of the present invention comprises the following steps: (1) a terminal for notifying a server that can communicate with the terminal of the positional information of the terminal itself transmits a position request message to-a terminal position determination device, (2) the terminal position determination device determines whether to permit the notification of the positional information from the terminal to the server based on privacy setting information for a user who uses the terminal, while performing position measurement between the terminal position determination device and the terminal, (3) if the notification of the positional information from the terminal to the server has been determined to be permitted, the terminal position determination device provides to the terminal the positional information of the terminal obtained by the position measurement, and (4) the terminal notifies the server of the provided positional information of the terminal itself.

A fourth positional information notification method of the present invention comprises the following steps: (1) a terminal for notifying a server that can communicate with the terminal of the positional information of the terminal itself transmits a position request message to a terminal position determination device, (2) the terminal position determination device determines whether to permit the notification of the positional information from the terminal to the server based on privacy setting information for a user who uses the terminal, (3) if the notification of the positional information from the terminal to the server has been determined to be permitted, the terminal position determination device provides to the terminal supplementary information required for the terminal to determine the positional information of the terminal itself, (4) the terminal determines the positional information of the terminal itself using the provided supplementary information, and (5) the terminal notifies the server of the determined positional information of the terminal itself.

A fifth positional information notification method of present invention comprises the following steps: (1) a terminal for notifying a server that can communicate with the terminal of the positional information of the terminal itself transmits a position request message to a terminal position determination device, (2) the terminal position determination device inquires of a user of the terminal about whether to permit the notification of the positional information to the server, (3) the terminal notifies the terminal position determination device of the user-determined result for the terminal itself, (4) the terminal position determination device confirms the notified user-determined result, (5) if the notification of the positional information from the terminal to the server has been determined to be permitted, position measurement is performed between the terminal position determination device and the terminal, (6) the terminal position determination device provides to the terminal the positional information of the terminal obtained by the position measurement, and (7) the terminal notifies the server of the provided positional information of the terminal itself.

A sixth positional information notification method of the present invention comprises the following steps: (1) a terminal for notifying a server that can communicate with the terminal of the positional information of the terminal itself transmits a position request message to a terminal position determination device, (2) the terminal position determination device determines whether the notification of the positional information from the terminal to the server is permitted based on privacy setting information for a user who uses the terminal, (3) if the notification of the positional information from the terminal to the server has been determined to be not permitted, the terminal position determination device inquires of the user of the terminal about whether to permit the notification of the positional information to the server, (4) the terminal notifies the terminal position determination device of the user-determined result of the terminal itself, (5) the terminal position determination device confirms the notified user-determined result, (6) if the notification of the positional information from the terminal to the server has been determined to be permitted, position measurement is performed between the terminal position determination device and the terminal, (7) the terminal position determination device provides to the terminal the positional information of the terminal obtained by the position measurement, and (8) the terminal notifies the server of the provided positional information of the terminal itself.

A seventh positional information notification method of the present invention comprises the following steps: (1) a terminal for notifying a server that can communicate with the terminal of the positional information of the terminal itself transmits a position request message to a terminal position determination device, (2) upon receiving the position request message, the terminal position determination device requests a privacy check from a privacy check device, (3) the privacy check device determines whether the notification of the positional information from the terminal to the server is permitted based on privacy setting information for a user who uses the terminal, (4) the privacy check device notifies the terminal position determination device of the privacy check result, (5) if the notification of the positional information from the terminal to the server has been permitted based on the privacy check result, position measurement is performed between the terminal position determination device and the terminal, (6) the terminal position determination device provides to the terminal the positional information of the terminal obtained by the position measurement, and (7) the terminal notifies the server of the provided positional information of the terminal itself.

An eighth positional information notification method of the present invention comprises the following steps: (1) a terminal for notifying a server that can communicate with the terminal of the positional information of the terminal itself transmits a position request message to a terminal position determination device, (2) upon receiving the position request message, the terminal position determination device requests a privacy check from a privacy check device, (3) the privacy check device determines whether the notification of the positional information from the terminal to the server is permitted based on privacy setting information for a user who uses the terminal, (4) if the notification of the positional information from the terminal to the server has been determined to be not permitted, the privacy check device inquires of the user of the terminal about whether to permit the notification of the positional information to the server, (5) the terminal notifies the privacy check device of the user-determined result of the terminal itself, (6) the privacy check device confirms the notified user-determined result, (7) the privacy check device notifies the terminal position determination device of the privacy check result, (8) if the notification of the positional information from the terminal to the server has been determined to be permitted based on the privacy check result, position measurement is performed between the terminal position determination device and the terminal, (9) the terminal position determination device provides to the terminal the positional information of the terminal obtained by the position measurement, and (10) the terminal notifies the server of the provided positional information of the terminal itself.

A ninth positional information notification method of the present invention comprises the following steps: (1) a terminal for notifying a server that can communicate with the terminal of the positional information of the terminal itself transmits a position request message to a first terminal position determination device connected to a first mobile communication network to which the terminal itself is connected, (2) the first terminal position determination device requests a privacy check from a second terminal position determination device connected to a second mobile communication network with which the terminal is associated, (3) the second terminal position determination device determines whether the notification of the positional information from the terminal to the server is permitted based on privacy setting information for a user who uses the terminal, (4) the second terminal position determination device notifies the first terminal position determination device of the privacy check result, (5) if the notification of the positional information from the terminal to the server has been permitted based on the privacy check result, position measurement is performed between the first terminal position determination device and the terminal, (6) the first terminal position determination device provides to the terminal the positional information of the terminal obtained by the position measurement, and (7) the terminal notifies the server of the provided positional information of the terminal itself.

A tenth positional information notification method of the present invention comprises the following steps: (1) a terminal for notifying a server that can communicate with the terminal of the positional information of the terminal itself transmits a position request message to a first terminal position determination device connected to a first mobile communication network to which the terminal itself is connected, (2) the first terminal position determination device requests a privacy check from a second terminal position determination device connected to a second mobile communication network with which the terminal is associated, (3) the second terminal position determination device inquires of a user of the terminal about whether to permit the notification of the positional information to the server, (4) the terminal notifies the second terminal position determination device of the user-determined result of the terminal itself, (5) the second terminal position determination device confirms the notified user-determined result, (6) the second terminal position determination device notifies the first terminal position determination device of the privacy check result, (7) if the notification of the positional information from the terminal to the server has been permitted based on the privacy check result, position measurement is performed between the first terminal position determination device and the terminal, (8) the first terminal position determination device provides to the terminal the positional information of the terminal obtained by the position measurement, and (9) the terminal notifies the server of the provided positional information of the terminal itself.

An eleventh positional information notification method of the present invention comprises the following steps: (1) a terminal for notifying a server that can communicate with the terminal of the positional information of the terminal itself transmits a position request message to a first terminal position determination device connected to a first mobile communication network to which the terminal itself is connected, (2) the first terminal position determination device requests a privacy check from a second terminal position determination device connected to a second mobile communication network with which the terminal is associated, (3) the second terminal position determination device determines whether the notification of the positional information from the terminal to the server is permitted based on privacy setting information for a user who uses the terminal, (4) if the notification of the positional information from the terminal to the server has been determined to be not permitted, the second terminal position determination device inquires of the user of the terminal about whether to permit the notification of the positional information to the server, (5) the terminal notifies the second terminal position determination device of the user-determined result of the terminal itself, (6) the second terminal position determination device confirms the notified user-determined result, (7) the second terminal position determination device notifies the first terminal position determination device of the privacy check result, (8) if the notification of the positional information from the terminal to the server is permitted based on the privacy check result, position measurement is performed between the first terminal position determination device and the terminal, (9) the first terminal position determination device provides to the terminal the positional information of the terminal obtained by the position measurement, and (10) the terminal notifies the server of the provided positional information of the terminal itself.

A twelfth positional information notification method of the present invention comprises the following steps: (1) a terminal for notifying a server that can communicate with the terminal of the positional information of the terminal itself transmits a position request message to a first terminal position determination device connected to a first mobile communication network to which the terminal itself is connected, (2) the first terminal position determination device requests a privacy check from a first privacy check device connected to the same first mobile communication network, (3) the first privacy check device requests a privacy check from a second privacy check device connected to a second mobile communication network with which the terminal is associated, (4) the second privacy check device determines whether the notification of the positional information from the terminal to the server is permitted based on privacy setting information for a user who uses the terminal, (5) the second privacy check device notifies the first privacy check device of the privacy check result, (6) the first privacy check device notifies the first terminal position determination device of the notified privacy check result, (7) if the notification of the positional information from the terminal to the server is permitted based on the privacy check result, position measurement is performed between the first terminal position determination device and the terminal, (8) the first terminal position determination device provides to the terminal the positional information of the terminal obtained by the position measurement, and (9) the terminal notifies the server of the provided positional information of the terminal itself.

A thirteenth positional information notification method of the present invention comprises the following steps: (1) a terminal for notifying a server that can communicate with the terminal of the positional information of the terminal itself transmits a position request message to a first terminal position determination device connected to a first mobile communication network to which the terminal itself is connected, (2) the first terminal position determination device requests a privacy check from the first privacy check device connected to the same first mobile communication network, (3) the first privacy check device requests a privacy check from a second privacy check device connected to a second mobile communication network with which the terminal associated, (4) the second privacy check device inquires of a user of the terminal about whether to permit the notification of the positional information to the server, (5) the terminal notifies the second privacy check device of the user-determined result of the terminal itself, (6) the second privacy check device confirms the notified user-determined result, (7) the second privacy check device notifies the first privacy check device of the privacy check result, (8) the first privacy check device notifies the first terminal position determination device of the notified privacy check result, (9) if the notification of the positional information from the terminal to the server is permitted based on the privacy check result, position measurement is performed between the first terminal position determination device and the terminal, (10) the first terminal position determination device provides to the terminal the positional information of the terminal obtained by the position measurement, and (11) the terminal notifies the server of the provided positional information of the terminal itself.

A fourteenth positional information notification method of the present invention comprises the following steps: (1) a terminal for notifying a server that can communicate with the terminal of the positional information of the terminal itself transmits a position request message to a first terminal position determination device connected to a first mobile communication network to which the terminal itself is connected, (2) the first terminal position determination device requests a privacy check from a first privacy check device connected to the same first mobile communication network, (3) the first privacy check device requests a privacy check from a second privacy check device connected to a second mobile communication network with which the terminal is associated, (4) the second privacy check device determines whether the notification of the positional information from the terminal to the server is permitted based on privacy setting information for a user who uses the terminal, (5) if the notification of the positional information from the terminal to the server has been determined to be not permitted, the second privacy check device inquires of the user of the terminal about whether to permit the notification of the positional information to the server, (6) the terminal notifies the second privacy check device of the user-determined result of the terminal itself, (7) the second privacy check device confirms the notified user-determined result, (8) the second privacy check device notifies the first privacy check device of the privacy check result, (9) the first privacy check device notifies the first terminal position determination device of the notified privacy check result, (10) if the notification of the positional information from the terminal to the server is permitted based on the privacy check result, position measurement is performed between the first terminal position determination device and the terminal, (11) the first terminal position determination device provides to the terminal the positional information of the terminal obtained by the position measurement, and (12) the terminal notifies the server of the provided positional information of the terminal itself.

A first terminal position determination device of the present invention is a terminal position determination device in a positional information notification system comprising a mobile communication network to which one or more terminals and one or more terminal position determination devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal, the terminal obtaining via the position request message the information on the position of the terminal itself from the terminal position determination device, determining the positional information of the terminal itself and notifying the selected server of the positional information, wherein the terminal position determination device comprises a holding unit for holding a privacy setting for a user who uses the terminal, a privacy check unit for determining whether to permit, based on the privacy setting, the notification of the positional information from the terminal to the selected server, and a providing unit for, upon receiving the position request message from the terminal, determining in the privacy check unit whether to permit the notification of the positional information from the terminal to the selected server, and, if permitted, providing to the terminal the information on the position of the terminal.

A second terminal position determination device of the present invention is the first terminal position determination device, wherein the user of the terminal is inquired in the privacy check unit about whether to permit the notification of the positional information to the selected server, and the information on the position of the terminal is provided to the terminal only when the user permits the notification of the positional information to the selected server.

A third terminal position determination device of the present invention is the second terminal position determination device, wherein a condition for the inquiry of the user of the terminal in the privacy check unit is that the notification of the positional information from the terminal to the selected server is not permitted based on the privacy setting for the user who uses the terminal.

A fourth terminal position determination device of the present invention is a terminal position determination device in a positional information notification system comprising a mobile communication network to which one or more terminals, one or more terminal position determination devices and one or more privacy check devices are connected, and one or more servers that can communicate with the terminal, the privacy check device holding privacy settings for users who use each of the terminals, and having a privacy check unit, the privacy check unit having a function for determining whether to permit, based on the privacy setting, the notification of the positional information from the terminal to the server, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the terminal position determination device, upon receiving the position request message from the terminal, inquires of a privacy check device for holding the privacy setting for the user who uses the terminal about whether to permit the notification of the positional information from the terminal to the selected server, when the terminal position determination device is notified of the result of the determination, if the notification of the positional information from the terminal to the selected server is permitted based on the result of the determination notified from the privacy check device, the information on the position of the terminal is provided to the terminal.

A fifth terminal position determination device of the present invention is a terminal position determination device in a positional information notification system comprising two or more mobile communication networks to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the terminal position determination device comprises a holding unit for holding privacy settings for users who use each of the terminals associated with the mobile communication network to which the terminal position determination device itself is connected, and a privacy check unit for determining whether to permit, based on the privacy setting, the notification of the positional information from the terminal associated with the mobile communication network to which the device itself is connected to the selected server, wherein the terminal position determination device, upon receiving the position request message from the terminal associated with the mobile communication network to which the terminal position determination device itself is connected, determines in the privacy check unit whether to permit, based on the privacy setting, the notification of the positional information from the terminal to the selected server, and, if permitted, provides to the terminal the information on the position of the terminal, wherein the terminal position determination device, upon receiving the position request message from the terminal not associated with the mobile communication network to which the terminal position determination device itself is connected, inquires of other terminal position determination devices connected to other mobile communication networks with which the terminal is associated about whether to permit the notification of the positional information from the terminal to the selected server, and based on the result of the inquiry, if permitted, provides to the terminal the information on the position of the terminal, wherein the terminal position determination device, when inquired by the other terminal position determination devices connected to the other mobile communication networks than the mobile communication network to which the terminal position determination device itself is connected, about whether to permit the notification of the positional information from the terminal to the selected server regarding the position request message issued by the terminal associated with the mobile communication network to which the terminal position determination device itself is connected, determines in the privacy check unit whether to permit, based on the privacy setting, the notification of the positional information from the terminal to the selected server, and notifies the other terminal position determination devices of the result of the determination.

A sixth terminal position determination device of the present invention is the fifth terminal position determination device, wherein the privacy check unit inquires of the user of the terminal about whether to permit the notification of the positional information to the server, and uses the result, notified from the terminal, of the determination by the user.

A seventh terminal position determination device of the present invention is the sixth terminal position determination device, wherein a condition for the inquiry of the user of the terminal in the privacy check unit is that the notification of the positional information from the terminal to the server is not permitted based on the privacy setting for the user who uses the terminal.

An eighth positional information notification system of the present invention is any of the first positional information notification system to the seventh positional information notification system, wherein the information on the position provided to the terminal is the positional information of the terminal.

A ninth positional information notification system of the present invention is any of the first positional information notification system to the seventh positional information notification system, wherein the information on the position provided to the terminal is supplementary information required for the terminal to determine the positional information of the terminal itself.

A first privacy check device of the present invention is a privacy check device in a positional information notification system comprising a mobile communication network to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the privacy check device comprises a holding unit for holding privacy settings for users who use each of the terminals, and a privacy check unit for determining whether to permit, based on the privacy setting, the notification of the positional information from the terminal to the server, wherein, when the terminal position determination device receives the position request message from the terminal, and inquires of the privacy check device about whether to permit the notification of the positional information from the terminal to the selected server, the privacy check device determines in the privacy check unit whether to permit, based on the privacy setting, the notification of the positional information from the terminal to the selected server, and notifies the terminal position determination device of the result of the determination.

A second privacy check device of the present invention is the first privacy check device, wherein the privacy check device inquires of the user of the terminal about whether to permit the notification of the positional information to the selected server, and notifies the terminal position determination device of the result, notified from the terminal, of the determination by the user.

A third privacy check device of the present invention is the second privacy check device, wherein a condition for the inquiry of the user of the terminal is that the notification of the positional information from the terminal to the selected server is not permitted based on the privacy setting for the user who uses the terminal.

A fourth privacy check device of the present invention is a privacy check device in a positional information notification system comprising two or more mobile communication networks to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the privacy check device comprises a holding unit for holding privacy settings for users who use each of the terminals associated with the mobile communication network to which the privacy check device itself is connected, and a privacy check unit for determining whether to permit, based on the privacy setting, the notification of the positional information from the terminal associated with the mobile communication network to which the device itself is connected to the selected server, wherein, when the terminal position determination device connected to the mobile communication network to which the privacy check device itself is connected receives the position request message from the terminal, and inquires of the privacy check device about whether to permit the notification of the positional information from the terminal to the selected server, if the terminal is the one associated with the mobile communication network to which the privacy check device itself is connected, the privacy check device determines in the privacy check unit whether to permit, based on the privacy setting, the notification of the positional information from the terminal to the selected server, and notifies the terminal position determination device of the result of the determination, on the other hand, if the terminal is the one not associated with the mobile communication network to which the privacy check device itself is connected, the privacy check device inquires of other privacy check devices connected to other mobile communication networks with which the terminal is associated about whether to permit the notification of the positional information from the terminal to the selected server, and notifies the terminal position determination device of the result of the inquiry, wherein the privacy check device, when inquired by the other privacy check devices connected to the other mobile communication networks than the mobile communication network to which the privacy check device itself is connected, about whether to permit the notification of the positional information from the terminal associated with the mobile communication network to which the privacy check device itself is connected to the selected server, determines in the privacy check unit whether to permit, based on the privacy setting, the notification of the positional information from the terminal to the selected server, and notifies the other privacy check devices of the result of the determination.

A fifth privacy check device of the present invention is the fourth privacy check device, wherein the privacy check unit inquires of the user of the terminal about whether to permit the notification of the positional information to the server, and uses the result, notified from the terminal, of the determination by the user.

A sixth privacy check device of the present invention is a privacy check device in a positional information notification system comprising two or more mobile communication networks to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, wherein the privacy check device comprises a holding unit for holding privacy settings for users who use each of the terminals associated with the mobile communication network to which the privacy check device itself is connected, and a privacy check unit for determining whether to permit, based on the privacy setting, the notification of the positional information from the terminal associated with the mobile communication network to which the device itself is connected to the selected server, wherein, when the terminal position determination device connected to the mobile communication network to which the privacy check device itself is connected receives the position request message from the terminal, and inquires of the privacy check device about whether to permit the notification of the positional information from the terminal to the selected server, if the terminal is the one associated with the mobile communication network to which the privacy check device itself is connected, the privacy check device determines in the privacy check unit whether to permit, based on the privacy setting, the notification of the positional information from the terminal to the selected server, and notifies the terminal position determination device of the result of the determination, on the other hand, if the terminal is the one not associated with the mobile communication network to which the privacy check device itself is connected, the privacy check device inquires of other privacy check devices connected to other mobile communication networks with which the terminal is associated about whether to permit the notification of the positional information from the terminal to the selected server, and notifies the terminal position determination device of the result of the inquiry, wherein, the privacy check device, when inquired by the terminal position determination device connected to the other mobile communication networks than the mobile communication network to which the privacy check device itself is connected, about whether to permit the notification of the positional information from the terminal residing the mobile communication network to which the privacy check device itself is connected to the selected server, determines in the privacy check unit whether to permit, based on the privacy setting, the notification of the positional information from the terminal to the selected server, and notifies the terminal position determination device of the result of the determination.

A seventh privacy check device of the present invention is the sixth privacy check device, wherein the privacy check unit inquires of the user of the terminal about whether to permit the notification of the positional information to the server, and uses the result, notified from the terminal, of the determination by the user.

An eighth privacy check device of the present invention is the fifth or the seventh privacy check device, wherein a condition for the inquiry of the user of the terminal in the privacy check unit is that the notification of the positional information from the terminal to the server is not permitted based on the privacy setting for the user who uses the terminal.

A ninth privacy check unit of the present invention is any of the first privacy check unit to the eighth privacy check unit, wherein the information on the position provided to the terminal from the terminal position determination device is the positional information of the terminal.

A tenth privacy check unit of the present invention is any of the first privacy check unit to the eighth privacy check unit, wherein the information on the position provided to the terminal from the terminal position determination device is the supplementary information required for the terminal to determine the positional information of the terminal itself.

A program for the first terminal position determination device of the present invention causes, in a positional information notification system comprising a mobile communication network to which one or more terminals and one or more terminal position determination devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal, the terminal obtaining via the position request message the information on the position of the terminal itself from the terminal position determination device, determining the positional information of the terminal itself, and notifying the selected server of the positional information, a computer constituting the terminal position determination device to function as a holding unit for holding the privacy setting for a user who uses the terminal, a privacy check unit for determining whether to permit, based on the privacy setting, the notification of the positional information from the terminal to the selected server, and a providing unit for, upon receiving the position request message from the terminal, determining in the privacy check unit' whether to permit the notification of the positional information from the terminal to the selected server, and, if permitted, providing to the terminal the information on the position of the terminal.

A program for the second terminal position determination device of the present invention causes, in a positional information notification system comprising a mobile communication network to which one or more terminals, one or more terminal position determination devices and one or more privacy check devices are connected, and one or more servers that can communicate with the terminal, the privacy check device holding privacy settings for users who use each of the terminals, and having a privacy check unit, the privacy check unit having a function for determining whether to permit, based on the privacy setting, the notification of the positional information from the terminal to the server, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, a computer constituting the terminal position determination device to function as a means for, upon receiving the position request message from the terminal, inquiring of the privacy check device for holding the privacy setting for the user who uses the terminal about whether to permit the notification of the positional information from the terminal to the selected server, and a means for providing to the terminal the information on the position of the terminal if the notification of the positional information from the terminal to the selected server is permitted based on the result of the determination notified from the privacy check device.

A program for the third terminal position determination device of the present invention causes, in a positional information notification system comprising two or more mobile communication networks to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, a computer constituting the terminal position determination device to function as a holding unit for holding privacy settings for users who use each of the terminals associated with the mobile communication network to which the terminal position determination device itself is connected, and a privacy check unit for determining whether to permit, based on the privacy setting, the notification of the positional information from the terminal associated with the mobile communication network to which the device itself is connected to the selected server, wherein the terminal position determination device, upon receiving the position request message from the terminal associated with the mobile communication network to which the terminal position determination device itself is connected, determines in the privacy check unit whether to permit, based on the privacy setting, the notification of the positional information from the terminal to the selected server, and, if permitted, provides to the terminal the information on the position of the terminal, wherein the terminal position determination device, upon receiving the position request message from the terminal not associated with the mobile communication network to which the terminal position determination device itself is connected, inquires of other terminal position determination devices connected to other mobile communication networks with which the terminal is associated about whether to permit the notification of the positional information from the terminal to the selected server, and based on the result of the inquiry, if permitted, provides to the terminal the information on the position of the terminal , wherein the terminal position determination device, when inquired by the other terminal position determination devices connected to the other mobile communication networks than the mobile communication network to which the terminal position determination device itself is connected, about whether to permit the notification of the positional information from the terminal to the selected server, regarding the position request message issued by the terminal associated with the mobile communication network to which the terminal position determination device itself is connected, determines in the privacy check unit whether to permit, based on the privacy setting, the notification of the positional information from the terminal to the selected server, and notifies the other terminal position determination devices of the result of the determination.

A program for the first privacy check device of the present invention causes, in a positional information notification system comprising a mobile communication network to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, a computer constituting the privacy check device to function as a holding unit for holding privacy settings for users who use each of the terminals, and a privacy check unit for determining whether to permit, based on the privacy setting, the notification of the positional information from the terminal to the server, wherein, when the terminal position determination device receives the position request message from the terminal, and inquires of the privacy check device about whether to permit the notification of the positional information from the terminal to the selected server, the privacy check device determines in the privacy check unit whether to permit, based on the privacy setting, the notification of the positional information from the terminal to the selected server, and notifies the terminal position determination device of the result of the determination.

A program for the second privacy check device of the present invention causes, in a positional information notification system comprising two or more mobile communication networks to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, a computer constituting the privacy check device to function as a holding unit for holding privacy settings for users who use each of the terminals associated with the mobile communication network to which the privacy check device itself is connected, and a privacy check unit for determining whether to permit, based on the privacy setting, the notification of the positional information from the terminal associated with the mobile communication network to which the device itself is connected to the selected server, wherein, when the terminal position determination device connected to the mobile communication network to which the privacy check device itself is connected receives the position request message from the terminal, and inquires of the privacy check device about whether to permit the notification of the positional information from the terminal to the selected server, if the terminal is the one associated with the mobile communication network to which the privacy check device itself is connected, the privacy check device determines in the privacy check unit whether to permit, based on the privacy setting, the notification of the positional information from the terminal to the selected server, and notifies the terminal position determination device of the result of the determination, on the other hand, if the terminal is the one not associated with the mobile communication network to which the privacy check device itself is connected, the privacy check device inquires of other privacy check devices connected to other mobile communication networks with which the terminal is associated about whether to permit the notification of the positional information from the terminal to the selected server, and notifies the terminal position determination device of the result of the inquiry, wherein the privacy check device, when inquired by the other privacy check devices connected to the other mobile communication networks than the mobile communication network to which the privacy check device itself is connected, about whether to permit the notification of the positional information from the terminal associated with the mobile communication network to which the privacy check device itself is connected to the selected server, determines in the privacy check unit whether to permit, based on the privacy setting, the notification of the positional information from the terminal to the selected server, and notifies the other privacy check devices of the result of the determination.

A program for the third privacy check device of the present invention causes, in a positional information notification system comprising two or more mobile communication networks to which one or more terminals, one or more terminal position determination devices and one or more privacy check devices are connected, and one or more servers that can communicate with the terminal, the terminal position determination device having a function for receiving a position request message from the terminal and providing to the terminal, information on the position of the terminal, when the terminal notifies the server selected from the one or more servers that can communicate with the terminal of the positional information of the terminal itself, the terminal obtaining via the position request message the information on the position of the terminal itself from the terminal position determination device, determining the positional information of the terminal itself and notifying the selected server of the positional information, a computer constituting the privacy check device to function as a holding unit for holding privacy settings for users who use each of the terminals associated with the mobile communication network to which the privacy check device itself is connected, and a privacy check unit for determining whether to permit, based on the privacy setting, the notification of the positional information from the terminal associated with the mobile communication network to which the device itself is connected to the selected server, wherein, when the terminal position determination device connected to the mobile communication network to which the privacy check device itself is connected receives the position request message from the terminal, and inquires of the privacy check device about whether to permit the notification of the positional information from the terminal to the selected server, if the terminal is the one associated with the mobile communication network to which the privacy check device itself is connected, the privacy check device determines in the privacy check unit whether to permit, based on the privacy setting, the notification of the positional information from the terminal to the selected server, and notifies the terminal position determination device of the result of the determination, on the other hand, if the terminal is the one not associated with the mobile communication network to which the privacy check device itself is connected, the privacy check device inquires of other privacy check devices connected to other mobile communication networks with which the terminal is associated about whether to permit the notification of the positional information from the terminal to the selected server, and notifies the terminal position determination device of the result of the inquiry, wherein the privacy check device, when inquired by the terminal position determination device connected to the other mobile communication networks than the mobile communication network to which the privacy check device itself is connected, about whether to permit the notification of the positional information from the terminal associated with the mobile communication network to which the privacy check device itself is connected to the selected server, determines in the privacy check unit whether to permit, based on the privacy setting, the notification of the positional information from the terminal to the selected server, and notifies the terminal position determination device of the result of the determination.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a configuration diagram of a positional information notification system according to the first, second, third and fourth embodiments of the present invention;
Fig. 2 is a block diagram illustrating the configuration of a terminal position determination device in the positional information notification system according to the first embodiment of the present invention;
Fig. 3 is a flow chart illustrating the activity of a privacy check unit of the terminal position determination device in the positional information notification system according to the first and second embodiment of the present invention;
Fig. 4 is a diagram illustrating a sequence whereby a terminal obtains the position of the terminal itself and notifies a server of the position in the positional information notification system according to the first embodiment of the present invention;
Fig. 5 is a block diagram illustrating the configuration of the terminal position determination device in the positional information notification system according to the second embodiment of the present invention;
Fig. 6 is a diagram illustrating a sequence whereby the terminal obtains the position of the terminal itself and notifies the server of the position in the positional information notification system according to the second embodiment of the present invention;
Fig. 7 is a block diagram illustrating the configuration of the terminal position determination device in the positional information notification system according to the third embodiment of the present invention;
Fig. 8 is a flow chart illustrating the activity of the privacy check unit of the terminal position determination device in the positional information notification system according to the third embodiment of the present invention;
Fig. 9 is a diagram illustrating a sequence whereby the terminal obtains the position of the terminal itself and notifies the server of the position in the positional information notification system according to the third embodiment of the present invention;
Fig. 10 is a diagram illustrating the configuration of the terminal position determination device in the positional information notification system according to the fourth embodiment of the present invention;
Fig. 11 is a flow chart illustrating the activity of the privacy check unit of the terminal position determination device in the positional information notification system according to the fourth embodiment of the present invention;
Fig. 12 is a diagram illustrating a sequence whereby the terminal obtains the position of the terminal itself and notifies the server of the position, if the notification of the positional information from the terminal to the server is not permitted based on a privacy setting for a user, in the positional information notification system according to the fourth embodiment of the present invention;
Fig. 13 is a configuration diagram of the positional information notification system according to the fifth and sixth embodiment of the present invention;
Fig. 14 is a block diagram illustrating the configuration of the terminal position determination device in the positional information notification system according to the fifth, sixth and eighth embodiment of the present invention;
Fig. 15 is a block diagram illustrating the configuration of a privacy check device in the positional information notification system according to the fifth embodiment of the present invention;
Fig. 16 is a flow chart illustrating the activity of the privacy check unit of the privacy check device in the positional information notification system according to the fifth embodiment of the present invention;
Fig. 17 is a diagram illustrating a sequence whereby the terminal obtains the position of the terminal itself and notifies the server of the position in the positional information notification system according to the fifth embodiment of the present invention;
Fig. 18 is a block diagram illustrating the configuration of the privacy check device in the positional information notification system according to the sixth embodiment of the present invention;
Fig. 19 is a flow chart illustrating the activity of the privacy check unit of the privacy check device in the positional information notification system according to the sixth embodiment of the present invention;
Fig. 20 is a diagram illustrating a sequence whereby the terminal obtains the position of the terminal itself and notifies the server of the position, if the notification of the positional information from the terminal to the server is not permitted based on a privacy setting for a user, in the positional information notification system according to the sixth embodiment of the present invention;
Fig. 21 is a configuration diagram of the positional information notification system according to the seventh embodiment of the present invention;
Fig. 22 is a diagram illustrating the configuration of the terminal position determination device in the positional information notification system according to the seventh embodiment of the present invention;
Fig. 23 is a flow chart illustrating the activity of the privacy check unit of the terminal position determination device in the positional information notification system according to the seventh embodiment of the present invention;
Fig. 24 is a diagram illustrating a sequence whereby the terminal obtains the position of the terminal itself and notifies the server of the position in the positional information notification system according to the seventh embodiment of the present invention;
Fig. 25 is a configuration diagram of the positional information notification system according to the eighth embodiment of the present invention;
Fig. 26 is a diagram illustrating the configuration of the privacy check device in the positional information notification system according to the eighth embodiment of the present invention;
Fig. 27 is a flow chart illustrating the activity of the privacy check unit of the privacy check device in the positional information notification system according to the eighth embodiment of the present invention;
Fig. 28 is a diagram illustrating a sequence whereby the terminal obtains the position of the terminal itself and notifies the server of the position in the positional information notification system according to the eighth embodiment of the present invention;
Fig. 29 is a block diagram illustrating the configuration of the positional information notification system according to the ninth embodiment of the present invention;
Fig. 30 is a diagram illustrating a sequence whereby a UE device obtains the positional information of the device itself and notifies an external device of the positional information in the positional information notification system according to the ninth embodiment of the present invention;
Fig. 31 is a block diagram illustrating the configuration of the positional information notification system according to the tenth embodiment of the present invention;
Fig. 32 is a diagram illustrating a sequence whereby the UE device obtains the positional information of the device itself and notifies the external device of the positional information in the positional information notification system according to the tenth embodiment of the present invention;
Fig. 33 is a block diagram illustrating the configuration required to determine the positional information of a terminal in a mobile network in Document 1;
Fig. 34 is a diagram illustrating a sequence whereby the terminal obtains the positional information of the terminal itself and notifies a client device of the positional information in the mobile network according to Document 1;
Fig. 35 is a diagram illustrating a sequence whereby the terminal obtains the positional information from the mobile network using a cell ID scheme disclosed in Document 2;
Fig. 36 is a diagram illustrating a sequence whereby the terminal obtains supplementary information from the mobile network to determine the positional information using a network-assisted GPS scheme disclosed in Document 2; and
Fig. 37 is a diagram illustrating the configuration of the mobile communication system that achieves privacy protection in Document 3.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

A positional information notification system according to the first embodiment of the present invention comprises a mobile network, which includes one or more terminals, one or more terminal position determination devices and a plurality of other necessary communication devices, and one or more servers that can communicate with the terminal, the terminal position determination device holding privacy conditions set by a user of the terminal. In the process whereby the terminal obtains information on the position from the terminal position determination device in order to determine the positional information the server will be notified of, the terminal position determination device, upon receiving a position request message from the terminal, determines whether to permit the notification of the positional information from the terminal to the server based on the privacy setting for the user who uses the terminal, and, only if permitted, provides to the terminal, information on the position of the terminal.

In the positional information notification system according to the first embodiment, prior to providing the information on the position to the terminal, the terminal position determination device that has received the position request message from the terminal performs a privacy determination based on the privacy setting for the user of the terminal and provides the information on the position to the terminal, only if the notification of the positional information from the terminal to the server is permitted, thereby achieving the object of the present invention.

### [SECOND EMBODIMENT]

In the positional information notification system according to the second embodiment of the present invention, the terminal position determination device in the positional information notification system according to the first embodiment, upon receiving a position request message from the terminal, inquires of the user of the terminal about whether to permit the notification of the positional information to the server, and provides to the terminal, information on the position of the terminal, only if the user permits the notification.

In a positional information notification unit according to the second embodiment, the terminal position determination device that has received the position request message from the terminal inquires of the user of the terminal about whether to permit the notification of the positional information from the terminal to the server, and provides the information on the position to the terminal, only if the user permits the notification, thereby achieving the object the present invention.

### [THIRD EMBODIMENT]

In the positional information notification system according to the third embodiment of the present invention, the terminal position determination device in the positional information notification system according to the second embodiment, upon receiving a position request message from the terminal, first verifies the privacy setting for the user who uses the terminal, and lets the user of the terminal determine whether to notify the server of the positional information if the privacy setting does not permit the notification of the positional information from the terminal to the server.

In the positional information notification system according to the third embodiment, the terminal position determination device that has received the position request message from the terminal first performs the privacy determination based on the privacy setting for the user of the terminal, if the notification of the positional information from the terminal to the server is not permitted based on the privacy setting, the terminal position determination device inquires of the user of the terminal about whether to permit the notification of the positional information, and provides the information on the position to the terminal, only if the user permits the notification of the positional information to the server, thereby achieving the object of the present invention.

### [FOURTH EMBODIMENT]

A positional information notification system according to the fourth embodiment of the present invention comprises a mobile network, which includes one or more terminals, one or more terminal position determination devices, one ore more privacy check devices and a plurality of other necessary communication devices, and one or more servers that can communicate with the terminal, the privacy check device holding privacy conditions set by a user of the terminal. In the process whereby the terminal obtains information on the position from the terminal position determination device in order to determine the positional information the server will be notified of, the terminal position determination device, upon receiving a position request message from the terminal, inquires of the privacy check device about whether the notification of the positional information from the terminal to the server is permitted. The privacy check device determines whether to permit the notification of the positional information from the terminal to the server based on the privacy setting for the user who uses the terminal, and notifies the terminal position determination device of the result of the determination, and the terminal position determination device determines the information on the position of the terminal and provides the information to the terminal, only if the notification of the positional information is permitted based on the notified result of the determination.

In the positional information notification system according to the fourth embodiment, prior to providing the information on the position to the terminal, the terminal position determination device that has received the position request message from the terminal requests the privacy check device to perform a privacy determination, the privacy check device determines whether to permit the notification of the positional information from the terminal to the server based on the privacy setting by the user, and the terminal position determination device provides the information on the position to the terminal only if the notification is permitted, thereby achieving the object of the present invention.

### [FIFTH EMBODIMENT]

In the positional information notification system according to the fifth embodiment of the present invention, the privacy check device in the positional information notification system according to the fourth embodiment inquires of the user of the terminal about whether to permit the notification of the positional information to the server, and notifies the terminal position determination device of the result of the determination by the user.

In the positional information notification system according to the fifth embodiment, the privacy check device that has been requested to perform the privacy determination by the terminal position determination device inquires of the user of the terminal about whether to permit the notification of the positional information to the server, and notifies the terminal position determination device of the determination by the user, thereby achieving the object of the present invention.

### [SIXTH EMBODIMENT]

In the positional information notification system according to the sixth embodiment of the present invention, the privacy check device in the positional information notification system according to the fifth embodiment first verifies the privacy setting for the user of the terminal, and lets the user of the terminal determine whether to notify the server of the positional information if the privacy setting does not permit the notification of the positional information from the terminal to the server.

In the positional information notification system according to the sixth embodiment, the privacy check device that has been requested to perform the privacy determination by the terminal position determination device first performs the privacy determination based on the privacy setting for the user of the terminal, if the notification of the positional information from the terminal to the server is not permitted based on the privacy setting, the privacy check device inquires of the user of the terminal about whether to permit the notification of the positional information, and notifies the terminal position determination device of the determination by the user, thereby achieving the object of the present invention.

### [SEVENTH EMBODIMENT]

A positional information notification system according to the seventh embodiment of the present invention comprises two or more mobile networks, which include one or more terminals, one or more terminal position determination devices and a plurality of other necessary communication devices, and one or more servers that can communicate with the terminal. A first terminal position determination device associated with a first mobile network holds a privacy setting of the terminal associated with the first mobile network. If the terminal associated with the first mobile network is connected to a second mobile network, a position request message is sent to a second terminal position determination device associated with the second mobile network in order to determine the positional information the server is to be notified of. The second terminal position determination device inquires of the first terminal position determination device about whether the notification of the positional information from the terminal to the server is permitted. The first terminal position determination device determines whether to permit the notification of the positional information from the terminal to the server based on the privacy setting for the user who uses the terminal, and notifies the second terminal position determination device of the result of the determination. The second terminal position determination device provides to the terminal the information on the position of the terminal only if the notification of the positional information from the terminal to the server is permitted based on the result of the determination notified from the first terminal position determination device.

In the positional information notification system according to the seventh embodiment, a plurality of mobile networks are present, and the terminal position determination device holds the privacy setting for the user who uses the terminal associated with the same mobile network. If the terminal connects to a mobile network different from the mobile network with which the terminal is associated, the terminal position determination device that has received the position request message from the terminal requests the terminal position determination device, which holds the privacy information of the terminal to perform a privacy determination, and the terminal position determination device that has received the request of the privacy determination determines whether to permit the notification of the positional information from the terminal to the server based on the privacy setting for the user who uses the terminal, thereby achieving the object of the present invention.

### [EIGHTH EMBODIMENT]

In the positional information notification system according to the eighth embodiment of the present invention, the first terminal position determination device in the positional information notification system according to the seventh embodiment inquires of the user of the terminal about whether to permit the notification of the positional information to the server, and notifies the terminal position determination device of the result of the determination by the user.

In the positional information notification system according to the eighth embodiment, the terminal position determination device that has been requested to perform the privacy determination inquires of the user of the terminal about whether to permit the notification of the positional information to the server, and the result of the determination by the user serves as the result of the privacy determination, thereby achieving the object of the present invention.

### [NINTH EMBODIMENT]

In the positional information notification system according to the ninth embodiment of the present invention, the first terminal position determination device in the positional information notification system according to the eighth embodiment first verifies the privacy setting for the user of the terminal, and inquires of the user of the terminal about whether to notify the server of the positional information if the privacy setting does not permit the notification of the positional information from the terminal to the server.

In the positional information notification system according to the ninth embodiment, the terminal position determination device that has been requested to perform the privacy determination first performs the privacy determination based on the privacy setting for the user of the terminal, if the notification of the positional information from the terminal to the server is not permitted based on the privacy setting, the terminal position determination device inquires of the user of the terminal about whether to permit the notification of the positional information, and the determination by the user serves as the result of the privacy determination, thereby achieving the object of the present invention.

### [TENTH EMBODIMENT]

A positional information notification system according to the tenth embodiment of the present invention comprises two or more mobile networks, which include one or more terminals, one or more terminal position determination devices, one or more privacy check devices and a plurality of other necessary communication devices, and one or more servers that can communicate with the terminal. A first privacy check device associated with a first mobile network holds a privacy setting of the terminal associated with the first mobile network. If the terminal associated with the first mobile network is connected to a second mobile network, a position request message is sent to a second terminal position determination device associated with the second mobile network in order to determine the positional information the server is to be notified of. The second terminal position determination device inquires of a second privacy check device associated with the second mobile network about whether the notification of the positional information from the terminal to the server is permitted, and the second privacy check device inquires of the first privacy check device about whether to permit the notification of the positional information. The first privacy check device determines whether to permit the notification of the positional information from the terminal to the server based on the privacy setting for the user who uses the terminal, and the second terminal position determination device is notified of the result of the determination through the second privacy check device. The second terminal position determination device provides to the terminal the information on the position of the terminal only if the notification of the positional information from the terminal to the server is permitted based on the result of the determination notified from the second privacy check device.

In the positional information notification system according to the tenth embodiment, a plurality of mobile networks are present, and the privacy check device holds the privacy setting for the user who uses the terminal associated with the same mobile network. If the terminal connects to a mobile network different from the mobile network with which the terminal is associated, the terminal position determination device that has received the position request message from the terminal requests the second privacy check device associated with the same mobile network to perform a privacy determination, the second privacy check device requests the first privacy check device, which holds the privacy information of the terminal to perform a privacy determination, the first privacy check device that has received the request of the privacy determination determines whether to permit the notification of the positional information from the terminal to the server based on the privacy setting for the user who uses the terminal, and the terminal position determination device is notified of the result of the privacy determination through the second privacy check device, thereby achieving the object of the present invention.

### [ELEVENTH EMBODIMENT]

In the positional information notification system according to the eleventh embodiment of the present invention, the first privacy check device in the positional information notification system according to the tenth embodiment inquires of the user of the terminal about whether to permit the notification of the positional information to the server, and notifies the second privacy check device of the result of the determination by the user.

In the positional information notification system according to the eleventh embodiment, the first privacy check device that has been requested to perform the privacy determination inquires of the user of the terminal about whether to permit the notification of the positional information to the server, and notifies the second privacy check device of the result of the determination by the user as the result of the privacy determination, thereby achieving the object of the present invention.

### [TWELFTH EMBODIMENT]

A positional information notification system according to the twelfth embodiment of the present invention comprises two or more mobile networks, which include one or more terminals, one or more terminal position determination devices, one or more privacy check devices and a plurality of other necessary communication devices, and one or more servers that can communicate with the terminal. A first privacy check device associated with a first mobile network holds a privacy setting of the terminal associated with the first mobile network. If the terminal associated with the first mobile network is connected to a second mobile network, a position request message is sent to a second terminal position determination device associated with the second mobile network in order to determine the positional information the server is to be notified of. The second terminal position determination device inquires of the second privacy check device associated with the first mobile network about whether the notification of the positional information from the terminal to the server is permitted. The first privacy check device determines whether to permit the notification of the positional information from the terminal to the server based on the privacy setting for the user who uses the terminal, and notifies the second terminal position determination device of the result of the determination. The second terminal position determination device provides to the terminal the information on the position of the terminal only if the notification of the positional information from the terminal to the server is permitted based on the result of the determination notified from the first privacy check device.

In the positional information notification system according to the twelfth embodiment, a plurality of mobile networks are present, and the privacy check device holds the privacy setting for the user who uses the terminal associated with the same mobile network. If the terminal connects to a mobile network different from the mobile network with which the terminal is associated, the terminal position determination device that has received the position request message from the terminal requests the privacy check device, which holds the privacy information of the terminal to perform a privacy determination, and the privacy check device that has received the request of the privacy determination determines whether to permit the notification of the positional information from the terminal to the server based on the privacy setting for the user who uses the terminal, and notifies the terminal position determination device of the result of the privacy determination, thereby achieving the object of the present invention.

### [THIRTEENTH EMBODIMENT]

In the positional information notification system according to the thirteenth embodiment of the present invention, the first privacy check device in the positional information notification system according to the twelfth embodiment inquires of the user of the terminal about whether to permit the notification of the positional information to the server, and notifies the second terminal position determination device of the result of the determination by the user.

In the positional information notification system according to the thirteenth embodiment, the privacy check device that has been requested to perform the privacy determination inquires of the user of the terminal about whether to permit the notification of the positional information to the server, and notifies the terminal position determination device of the result of the determination by the user as the result of the privacy determination, thereby achieving the object of the present invention.

### [FOURTEENTH EMBODIMENT]

In the positional information notification system according to the fourteenth embodiment of the present invention, the first privacy check device in the positional information notification system according to the eleventh or thirteenth embodiment first verifies the privacy setting for the user of the terminal, and inquires of the user of the terminal about whether to notify the server of the positional information if the privacy setting does not permit the notification of the positional information from the terminal to the server.

In the positional information notification system according to the fourteenth embodiment, the privacy check device for performing the privacy determination first performs the privacy determination based on the privacy setting for the user of the terminal, if the notification of the positional information from the terminal to the server is not permitted based on the privacy setting, the privacy check device inquires of the user of the terminal about whether to permit the notification of the positional information, and the determination by the user serves as the result of the privacy determination, thereby achieving the object of the present invention.

Examples of the embodiments according to the present invention will now be described by referring to diagrams.

### (EXAMPLE 1)

A positional information notification system according to a first example of the present invention will be described by referring to diagrams.

### [DESCRIPTION OF CONFIGURATION]

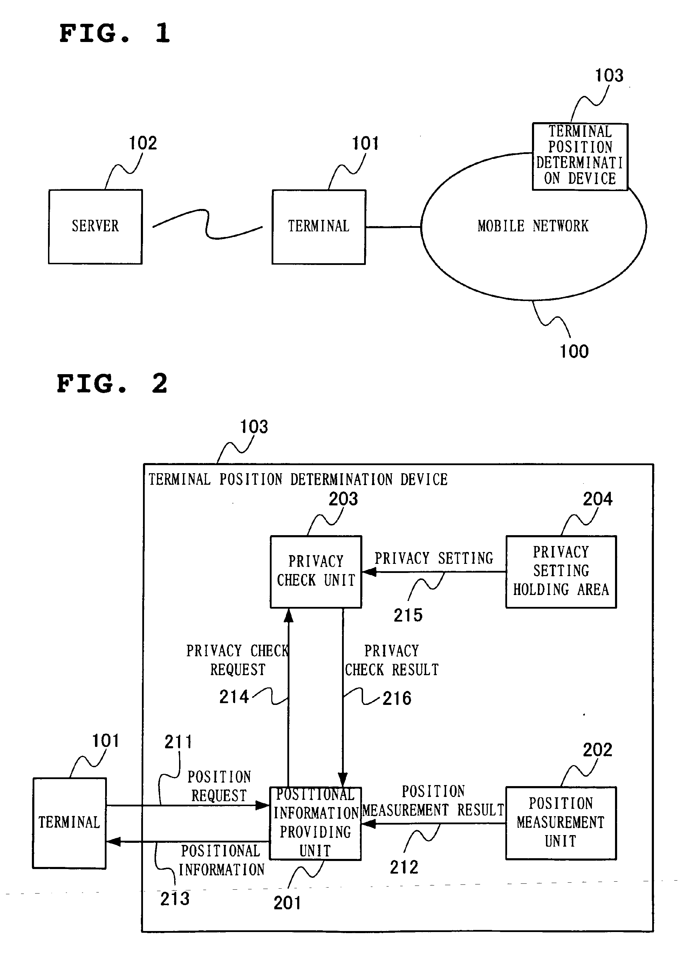

Fig. 1 shows the system configuration of the positional information notification system according to the first example of the present invention. In Fig. 1, the positional information notification system according to the first example of the present invention comprises a terminal 101 and a terminal position determination device 103 connected to a mobile network 100, and a server 102 that can communicate with the terminal 101. Since the communication method between the terminal 101 and the server 102 is not directly related to the present invention, it is omitted herein. In addition, to simplify the description, Fig. 1 includes one terminal, one terminal position determination device and one server; however, one or more terminals, terminal determination devices, and servers may be included.

Fig. 2 shows the configuration of the terminal position determination device 103 in the positional information notification system according to the first example of the present invention. The terminal position determination device 103 comprises a positional information providing unit 201, a position measurement unit 202, a privacy check unit 203 and a privacy setting holding area 204. Privacy settings for users of the terminals connected to the positional information notification system are held in the privacy setting holding area 204. For example, a list of servers that are allowed to be notified of the positional information may be set as a privacy setting for a user. For example, the precision of the positional information that the server can be notified of may also be set as a privacy setting for a user. Further, such a privacy setting for a user as setting the precision of the positional information that can be communicated for each type of service may be considered. In addition, the examples of the above-mentioned privacy setting for the user are intended to be illustrative, and do not limit the privacy setting method.

### [DESCRIPTION OF OPERATION]

By referring to Figs. 1, 2, 3 and 4, an operation whereby the terminal 101 obtains the positional information from the terminal position determination device 103 and notifies the server 102 of the information in the positional information notification system according to the first example of the present invention will be described.

In Fig. 2, when the positional information providing unit 201 receives a position request 211 from the terminal 101, the terminal position determination device 103 in the positional information notification system according to the first example of the present invention inquires of the privacy check unit 203 about whether the notification of the positional information from the terminal 101 to the server 102 is permitted. In so doing, the position request 211 contains a terminal identifier for specifying the terminal 101, and a server identifier for specifying a counterpart server 102, which the terminal 101 attempts to notify of the positional information, and the privacy check request 214 contains these terminal identifier and server identifier.

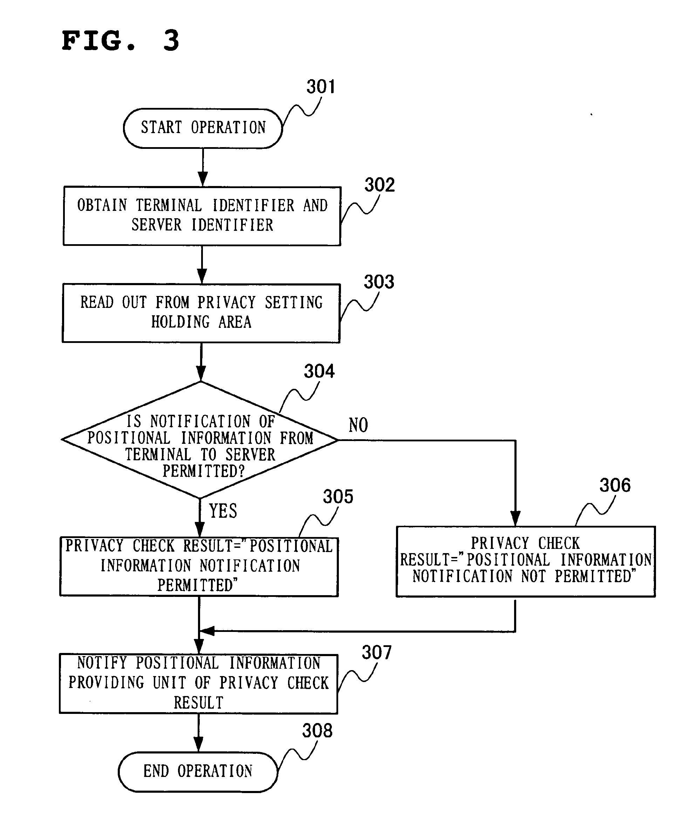

Fig. 3 shows an operation flow for the privacy check unit 203 of the terminal position determination device 103 in the positional information notification system according to the first example of the present invention. The privacy check unit 203 is started for operation by the privacy check request 214 from the positional information providing unit 201 (Step 301), and obtains the terminal identifier and the server identifier contained in the privacy check request 214 in Step 302. In Step 303, the privacy check unit 203 reads out the privacy setting 215 for the user of the terminal specified by the terminal identifier from the privacy setting holding area 204, and determines whether to permit the notification of the positional information to the server specified by the server identifier (Step 304). For example, when the list of servers that are allowed to be notified of the positional information is set as the privacy setting for the user, if the server specified by the server identifier obtained in Step 302 is contained in the list of the servers that are allowed to be notified of the positional information, the notification of the positional information is determined to be permitted. Further, for example, when the precision of the positional information that the server can be notified of is set as the privacy setting for the user, the notification of the positional information is determined to be permitted, only if the precision of the positional information requested by the server specified by the server identifier obtained in Step 302 is equal to or coarser than the precision permitted by the user. In addition, the examples of the above-mentioned determination in Step 304 are intended to be illustrative, and do not limit the determination method. If the notification of the positional information from the terminal to the server is determined to be permitted in Step 304, "positional information notification permitted" is set as a privacy check result (Step 305). If the notification of the positional information from the terminal to the server is determined to be not permitted in Step 304, "positional information notification not permitted" is set as a privacy check result (Step 306). In Step 307, the positional information providing unit 201 is notified of the privacy check result 216, and the operation ends (Step 308).

In Fig. 2, the positional information providing unit 201, upon notification of the privacy check result 216 by the privacy check unit 203, if the privacy check result 216 is "positional information notification permitted", performs position measurement of the terminal 101 with the position measurement unit 202, obtains a position measurement result 212 from the position measurement unit 202, and provides the positional information 213 to the terminal 101. If the privacy check result 216 is "positional information notification not permitted", the position measurement is not performed, and the terminal 101 is notified of an error as the positional information 213. A method using the cell ID scheme may be mentioned as the position measurement method of the terminal 101 by the position measurement unit 202; however, the method is not limited herein.

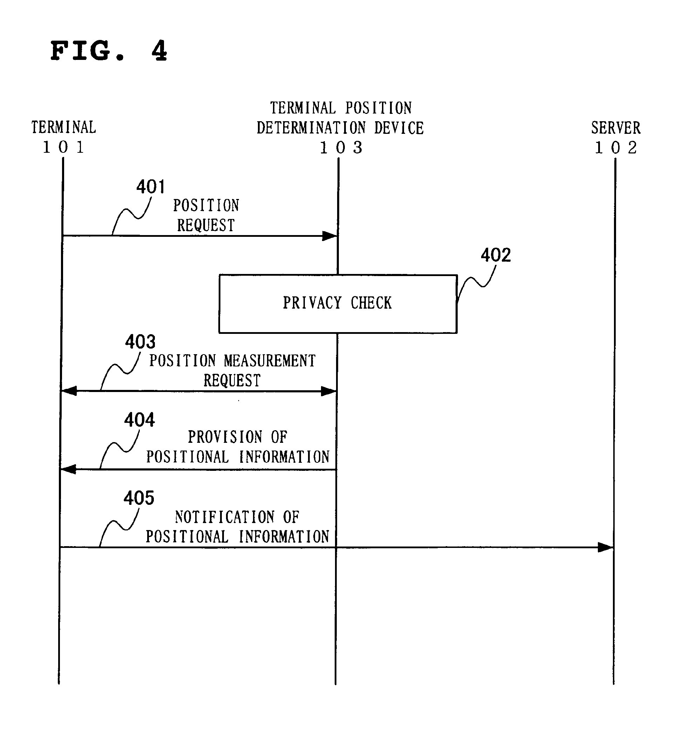

Fig. 4 is a sequence diagram illustrating a procedure whereby the terminal 101 obtains the positional information from the terminal position determination device 103, and notifies the server 102 of the positional information in the positional information notification system according to the first example of the present invention. The terminal 101 sends a position request message to the terminal position determination device 103 in Procedure 401, the terminal position determination device 103, upon receiving the position request message, determines whether the server 102 can be notified of the positional information from the terminal 101 in the privacy check procedure 402 according to the operation flow descried in Fig. 3. In the privacy check procedure 402, if the notification of the positional information from the terminal 101 to the server 102 is permitted, position measurement 403 is performed between the terminal 101 and the terminal positional determination device 103, the terminal position determination device 103 obtains the positional information of the terminal 101, and the positional information is provided to the terminal 101 in Procedure 404. In the privacy check procedure 402, if the notification of the positional information from the terminal 101 to the server 102 is not permitted, the terminal position determination device 103 does not perform position measurement 403, and notifies the terminal 101 of an error in Procedure 404. If the positional information is provided in Procedure 404, the terminal 101 notifies the server 102 of the positional information in Procedure 405.

An example where the position measurement shown in Procedure 403 in Fig. 4 is performed before the privacy check in Procedure 402 in Fig. 4 can also be considered. Further, another example where the position measurement shown in Procedure 403 in Fig. 4 is performed simultaneously with the privacy check in Procedure 402 in Fig. 4 can also be considered. In this way, the time required for the overall procedure for the notification of the positional information from the terminal 101 to the server 102 can be shortened.

### (EXAMPLE 2)

### [DESCRIPTION OF CONFIGURATION]

A positional information notification system according to a second example of the present invention will be described by referring to diagrams.

The system configuration of the positional information notification system according to the second example of the present invention is the same as that of the positional information notification system according to the first example of the present invention shown in Fig. 1.

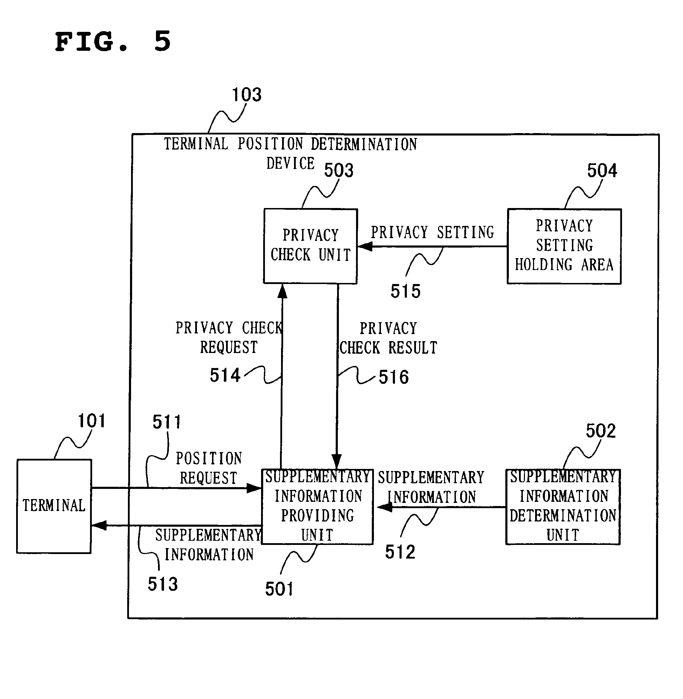

Fig. 5 shows the configuration of the terminal position determination device 103 in the positional information notification system according to the second example of the present invention. The terminal position determination device 103 comprises a supplementary information providing unit 501, a supplementary information determination unit 502, a privacy check unit 503 and a privacy setting holding area 504. The supplementary information determination unit 502 has a function for determining the supplementary information required for the terminal 101 to determine the current positional information. Privacy settings for users of the terminals connected to the positional information notification system are held in the privacy setting holding area 504. Although examples similar to those of the privacy settings described in the first example can be considered as examples of privacy settings for users, the method of the setting is not limited.

### [DESCRIPTION OF OPERATION]

By referring to Figs. 1, 5 and 6, an operation whereby the terminal 101 obtains the supplementary information from the terminal position determination device 103 to determine the positional information of the terminal itself, and notifies the server 102 of the information in the positional information notification system according to the second example of the present invention will be described.

In Fig. 5, when the supplementary information providing unit 501 receives a position request message 511 from the terminal 101, the terminal position determination device 103 in the positional information notification system according to the second example of the present invention inquires of the privacy check unit 503 about whether the notification of the positional information from the terminal 101 to the server 102 is permitted. In so doing, the position request message 511 contains a terminal identifier for specifying the terminal 101, and a server identifier for specifying a counterpart server 102, which the terminal 101 attempts to notify of the positional information, and the privacy check request 514 contains these terminal identifier and server identifier.

Since the operation of the privacy check unit 503 is the same as that of the privacy check unit 203 of the terminal position determination device in the positional information notification system according to the first example shown in Fig. 3, except that the supplementary information providing unit is the destination for the notification of the result of the privacy check in Step 307, the description is omitted herein.

In Fig. 5, when the supplementary information providing unit 501 is notified of the privacy check result 516 by the privacy check unit 503, if the privacy check result 516 is "positional information notification permitted", the supplementary information providing unit 501 obtains from the supplementary information determination unit 502 the supplementary information 512 required for the terminal 101 to determine the current position, and provides the supplementary information 513 to the terminal 101. If the privacy check result 516 is "positional information notification not permitted", the supplementary information providing unit 501 notifies the terminal 101 of an error 513. The supplementary information required for the GPS function of the terminal 101 to calculate the positional information in the network-assisted GPS scheme, for example, can be considered as the supplementary information obtained from the supplementary information determination unit 502 and required for the terminal 101 to determine the current position; however, the content of the supplementary information is not limited herein.

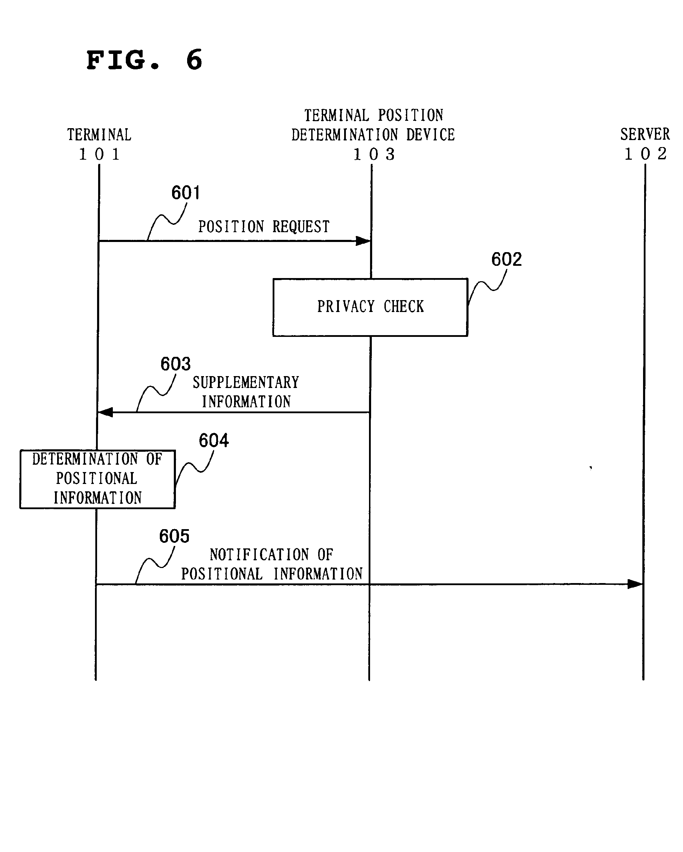

Fig. 6 is a sequence diagram illustrating a procedure whereby the terminal 101 obtains the supplementary information from the terminal position determination device 103 to determine the positional information, and notifies the server 102 of the positional information in the positional information notification system according to the second example of the present invention. The terminal 101 sends a position request message to the terminal position determination device 103 in Procedure 601, the terminal position determination device 103, upon receiving the position request message, determines whether the server 102 can be notified of the positional information from the terminal 101 in the privacy check procedure 602. In the privacy check procedure 602, if the notification of the positional information from the terminal 101 to the server 102 is permitted, the terminal position determination device 103 provides the supplementary information to the terminal 101 through Procedure 603, the terminal 101 determines the current positional information in Procedure 604, and notifies the server 102 of the positional information in Procedure 605. In the privacy check procedure 602, if the notification of the positional information from the terminal 101 to the server 102 is not permitted, the terminal position determination device 103 notifies the terminal 101 of an error in Procedure 603 and terminates the sequence.

### (EXAMPLE 3)

### [DESCRIPTION OF CONFIGURATION]

The positional information notification system according to a third example of the present invention will be described by referring to diagrams.

The positional information notification system according to the third example of the present invention has the same system configuration as that of the first example.

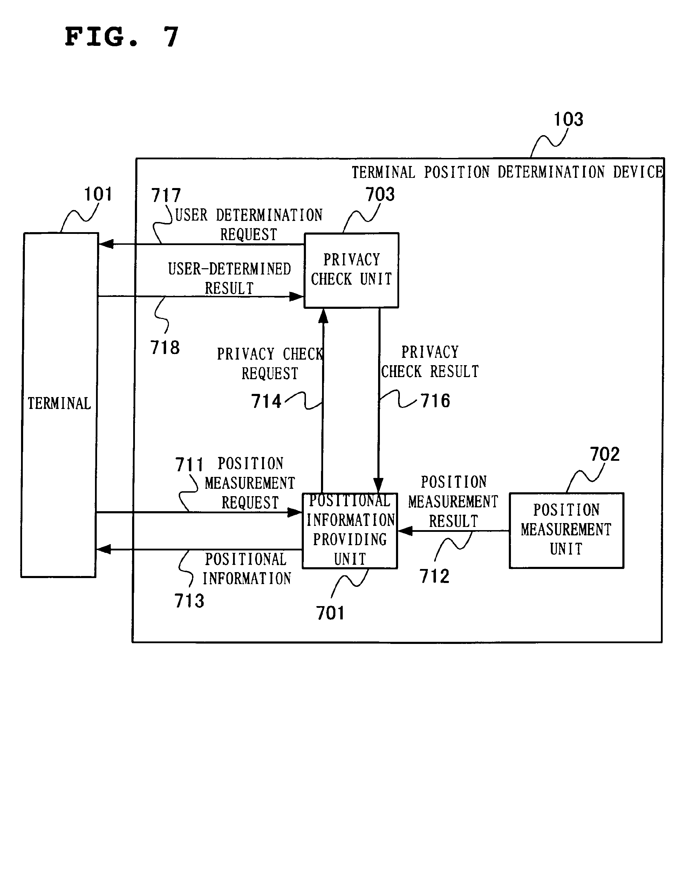

Fig. 7 shows the configuration of the terminal position determination device 103 in the positional information notification system according to the third example of the present invention, which, compared to the configuration of the positional information determination device in the positional information notification system according to the first example shown in Fig. 2, is different on the points that the terminal position determination device 103 according to the third example of the present invention has no privacy setting holding area, and that the privacy check unit 703 has an interface with the terminal 101. Further, since the operation of the terminal position determination device in the positional information notification system according to the third example of the present invention, compared to the operation of the terminal position determination device in the positional information notification system according to the first example of the present invention, is different only in the operation flow for the privacy check unit, the description other than the operation of the privacy check unit is omitted herein.

### [DESCRIPTION OF OPERATION]

By referring to Figs. 1, 7, 8 and 9, an operation whereby the terminal 101 obtains the positional information from the terminal position determination device 103 and notifies the server 102 of the information in the positional information notification system according to the third example of the present invention will be described.

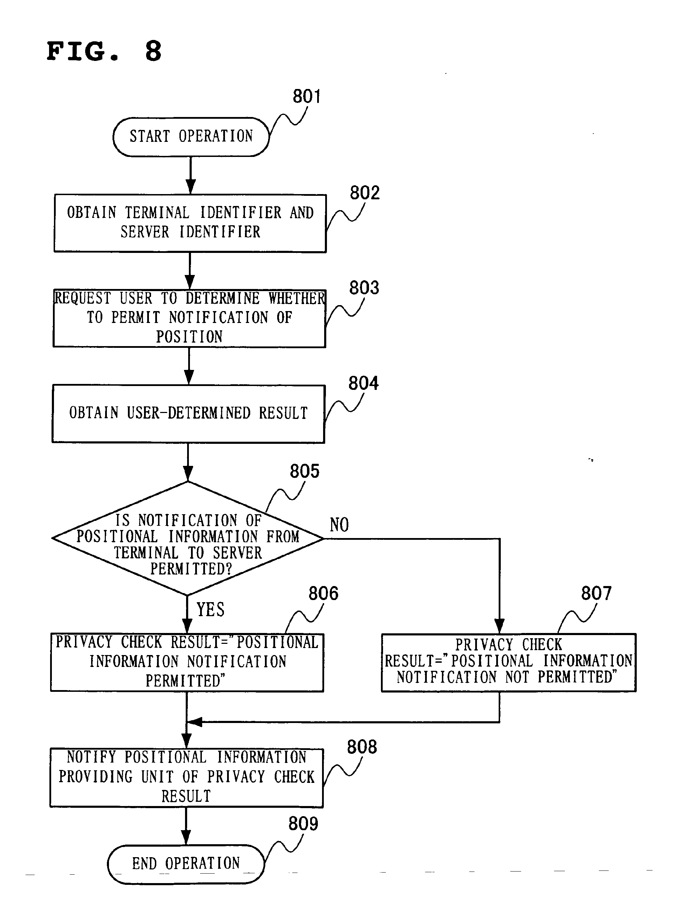

Fig. 8 shows an operation flow for the privacy check unit 703 of the terminal position determination device 103 in the positional information notification system according to the third example of the present invention. Since the processes in Steps 801, 802, 808 and 809 shown in Fig. 8 are the same as the processes in Steps 301, 302, 307 and 308 of the operation flow for the privacy check unit 203 of the terminal position determination device 103 in the positional information notification system according to the first example described in connection with Fig. 3, the description is omitted herein. The privacy check unit 703 in the positional information notification system according to the third example of the present invention sends a user determination request message to the terminal (717 in Fig. 7) to request the user of the terminal to determine whether the notification of the position from the terminal to the server is to be performed in Step 803. When the privacy check unit receives a user-determined result message (718 in Fig. 7) from the user of the terminal in Step 804, the privacy check unit checks the result of the determination (Step 805), and if the privacy check unit determines that the notification of the positional information to the server can be performed based on the determination by the user, the privacy check unit sets the privacy check result to "positional information notification permitted" in Step 806. If the positional information notification to the server is determined to be not permitted by the determination of the user in Step 805, the privacy check result is set to "positional information notification not permitted" in Step 806.

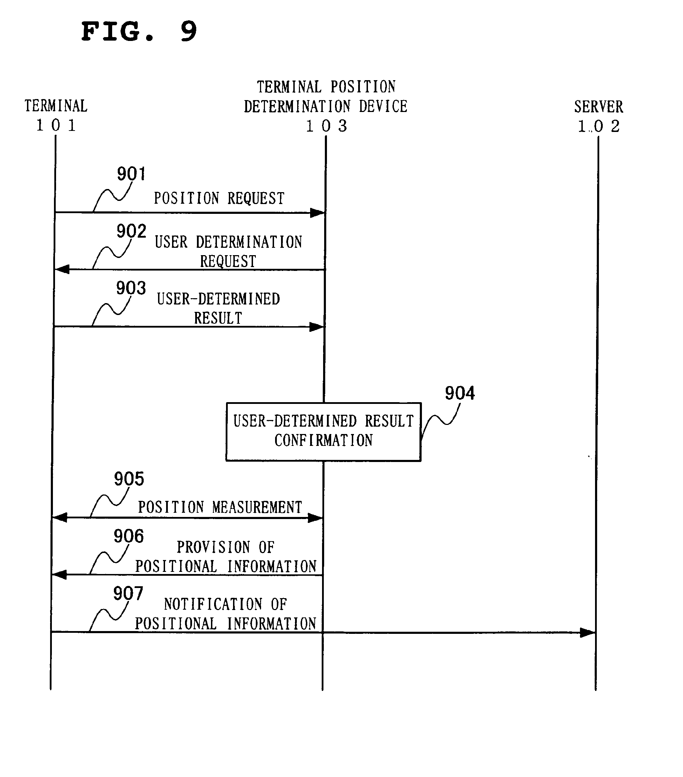

Fig. 9 is a sequence diagram illustrating a procedure whereby the terminal 101 obtains the positional information from the terminal position determination device 103, and notifies the server 102 of the positional information in the positional information notification system according to the third example of the present invention.

The terminal 101 sends the position request message to the terminal position determination device 103 in Procedure 901, and the terminal position determination device 103, upon receiving the position request message, sends the user of the terminal 101 a user determination request message to inquire about whether the positional information is to be notified to the server 102 (Procedure 902), then the user-determined result is notified from the terminal 101 to the terminal position determination device 103 (Procedure 903). The user-determined result confirmation procedure 904 contains Step 805 to Step 808 in the operation flow for the privacy check unit shown in Fig. 8. If the privacy check result from the privacy check unit is "positional information notification permitted", position measurement 905 is performed between the terminal 101 and the terminal position determination device 103, the terminal position determination device 103 obtains the positional information of the terminal 101, and the positional information is provided to the terminal 101 in Procedure 906. If the privacy check result from the privacy check unit is "positional information notification not permitted", the position measurement 905 is not performed, and the terminal position determination device 103 notifies the terminal 101 of an error in Procedure 906. If the result of position measurement is provided as the positional information, the terminal 101 notifies the server 102 of the positional information in Procedure 907.

An example where the position measurement shown in Procedure 905 in Fig. 9 is performed before the user determination request from Procedure 902 to Procedure 904 in Fig. 9 can also be considered. Further, another example where the position measurement shown in Procedure 905 in Fig. 9 is performed simultaneously with the privacy check from Procedure 902 to Procedure 904 in Fig. 9 can also be considered. In this way, the time required for the overall procedure for the notification of the positional information from the terminal 101 to the server 102 can be shortened.

Furthermore, an example where a change from the privacy check unit of the positional information determination device in the positional information notification system according to the first example to the privacy check unit of the positional information determination device in the positional information notification system according to the third example is applied to the privacy check unit of the terminal position determination device in the positional information notification system according to the second example can also be considered.

### (EXAMPLE 4)

### [DESCRIPTION OF CONFIGURATION]

A positional information notification system according to a fourth example of the present invention will be described by referring to diagrams.

The positional information notification system according to the fourth example of the present invention has the same configuration as that of the first example.

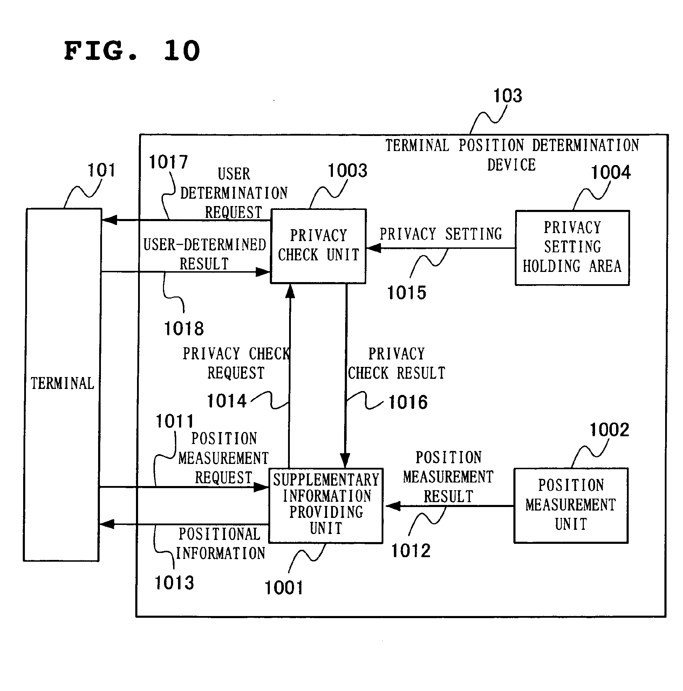

Fig. 10 shows the configuration of the terminal position determination device 103 in the positional information notification system according to the fourth example of the present invention, which, compared to the configuration of the positional information determination device in the positional information notification system according to the first example shown in Fig. 2, is different only on the point that the privacy check unit 1003 has an interface with the terminal 101. Further, since the operation of the terminal position determination device in the positional information notification system according to the fourth example of the present invention, compared to the operation of the terminal position determination device in the positional information notification system according to the first example of the present invention, is different only in the operation flow for the privacy check unit, the description other than the operation of the privacy check unit is omitted herein.

### [DESCRIPTION OF OPERATION]

By referring to Figs. 1, 10, 11 and 12, an operation whereby the terminal 101 obtains the positional information from the terminal position determination device and notifies the server 102 of the information in the positional information notification system according to the fourth example of the present invention will be described.

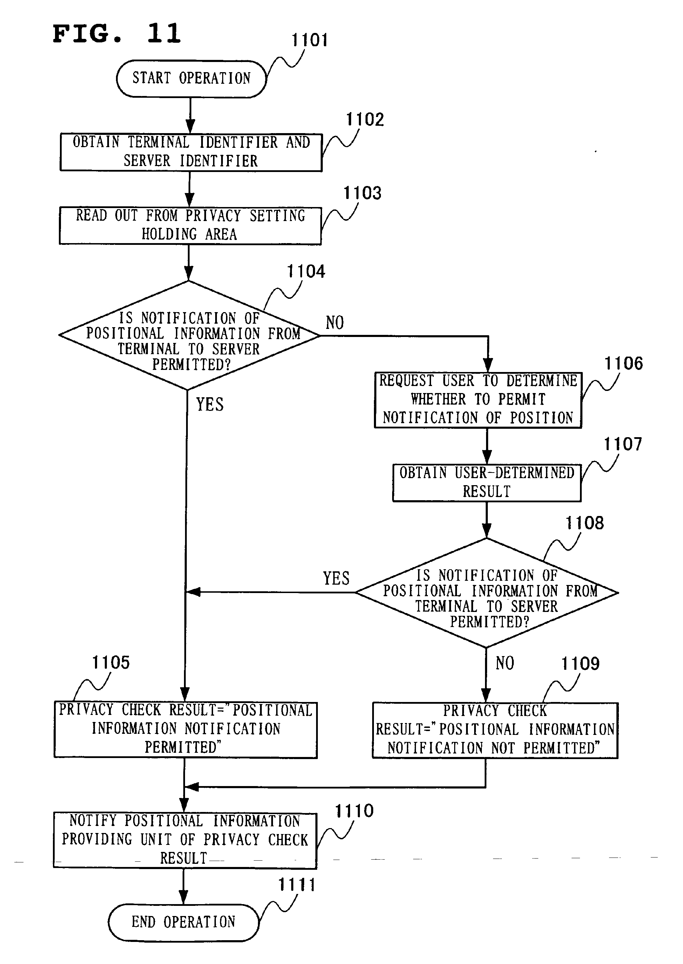

Fig. 11 shows an operation flow for the privacy check unit 1003 of the terminal position determination device 103 in the positional information notification system according to the fourth example of the present invention. Since the processes in Steps 1101, 1102, 1103, 1104, 1110 and 1111 shown in Fig. 11 are respectively the same as the processes in Steps 301, 302, 303, 304, 307 and 308 of the operation flow for the privacy check unit 203 of the terminal position determination device 103 in the positional information notification system according to the first example described in connection with Fig. 3, the description is omitted herein. If the notification of the positional information from the terminal to the server is determined to be not permitted in Step 1104, the privacy check unit 1003 in the positional information notification system according to the fourth example of the present invention sends the terminal a user determination request message to request a determination of whether the notification of the position is to be performed, in Step 1106 (1017 in Fig. 10). When the privacy check unit receives a user-determined result message (1018 in Fig. 10) from the user of the terminal in Step 1107, the privacy check unit checks the result of the determination (Step 1108), and if the privacy check unit determines that the notification of the positional information to the server can be performed based on the determination by the user, the privacy check unit sets the privacy check result to "positional information notification permitted" in Step 1105. If the positional information notification to the server is determined to be not permitted by the determination of the user in Step 1108, the privacy check result is set to "positional information notification not permitted" in Step 1109.

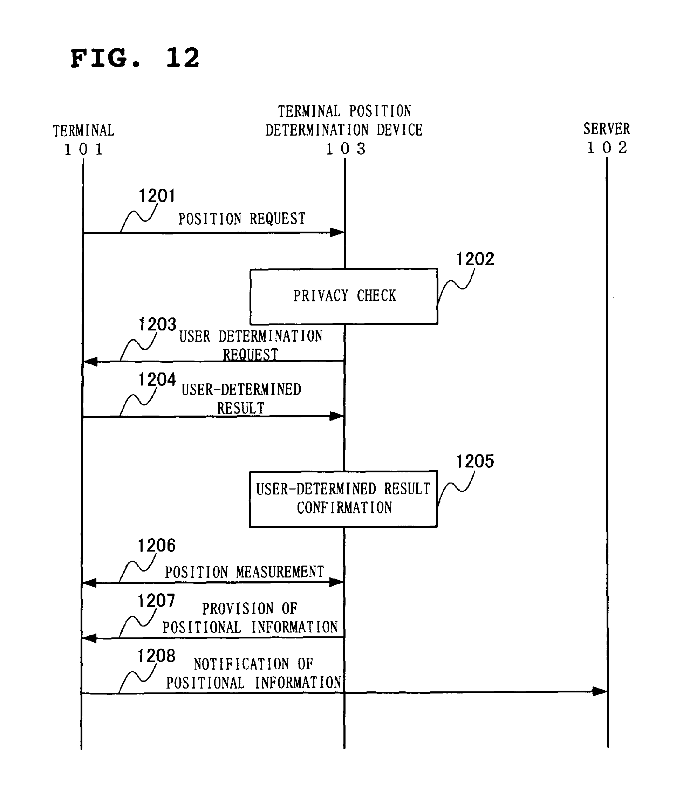

Fig. 12 is a sequence diagram illustrating a procedure whereby the terminal 101 obtains the positional information from the terminal position determination device 103, and notifies the server 102 of the positional information in the positional information notification system according to the fourth example of the present invention. In addition, in the operation step 1104 of the privacy check unit 1003 in Fig. 11, the operation in the case where the notification of the positional information from the terminal 101 to the server 102 has been determined to be permitted based on the privacy setting for the user is the same as the operation in the sequence diagram, which shows the notification procedures of the positional information from the terminal 101 to the server 102, in the positional information notification system according to the first example of the present invention shown in Fig. 4. Thus, in the operation step 1104 of the privacy check unit, the operation in the case where the notification of the positional information from the terminal 101 to the server 102 has been determined to be not permitted based on the privacy setting for the user will now be described.

The terminal 101 sends a position request message to the terminal position determination device 103 in Procedure 1201, the terminal position determination device 103, upon receiving the position request message, determines whether the server 102 can be notified of the positional information from the terminal 101 in the privacy check unit. In the privacy check procedure 1202, through processes from Step 1101 to Step 1104 of the operation flow shown in Fig. 11, the privacy check unit 1003 of the terminal position determination device 103 determines whether the notification of the positional information from the terminal 101 to the server 102 is permitted based on the user setting, if the notification is determined to be not permitted, the terminal position determination device 103 sends the user of the terminal 101 a user determination request message for inquiring about whether to notify the server 102 of the positional information (Procedure 1203 and Step 1106 in Fig. 11), and the terminal 101 notifies the terminal position determination device 103 of the user-determined result (Procedure 1204). The user-determined result confirmation procedure 1205 contains Step 1107 to Step 1111 in the operation flow for the privacy check unit shown in Fig. 11. If the result determined by the user is "positional information notification permitted", position measurement 1206 is performed between the terminal 101 and the terminal position determination device 103, the terminal position determination device 103 obtains the positional information of the terminal 101, and the positional information is provided to the terminal 101 in Procedure 1207. If the result determined by the user is "positional information notification not permitted", the position measurement 1206 is not performed, and the terminal position determination device 103 notifies the terminal 101 of an error in Procedure 1207. If the result of position measurement is provided as the positional information, the terminal 101 notifies the server 102 of the positional information in Procedure 1208.

An example where the position measurement shown in Procedure 1206 in Fig. 12 is performed before the privacy check in Procedure 1202 in Fig. 12 can also be considered.

Further, another example where the position measurement shown in Procedure 1206 in Fig. 12 is performed simultaneously with procedures from Procedure 1202 to Procedure 1205 in Fig. 12 can also be considered. In this way, the time required for the overall procedure for the notification of the positional information from the terminal 101 to the server 102 can be shortened.

Furthermore, an example where a change from the privacy check unit of the positional information determination device in the positional information notification system according to the first example to the privacy check unit of the positional information determination device in the positional information notification system according to the fourth example is applied to the privacy check unit of the terminal position determination device in the positional information notification system according to the second example can also be considered.

### (EXAMPLE 5)

### [DESCRIPTION OF CONFIGURATION]

A positional information notification system according to a fifth example of the present invention will be described by referring to diagrams.

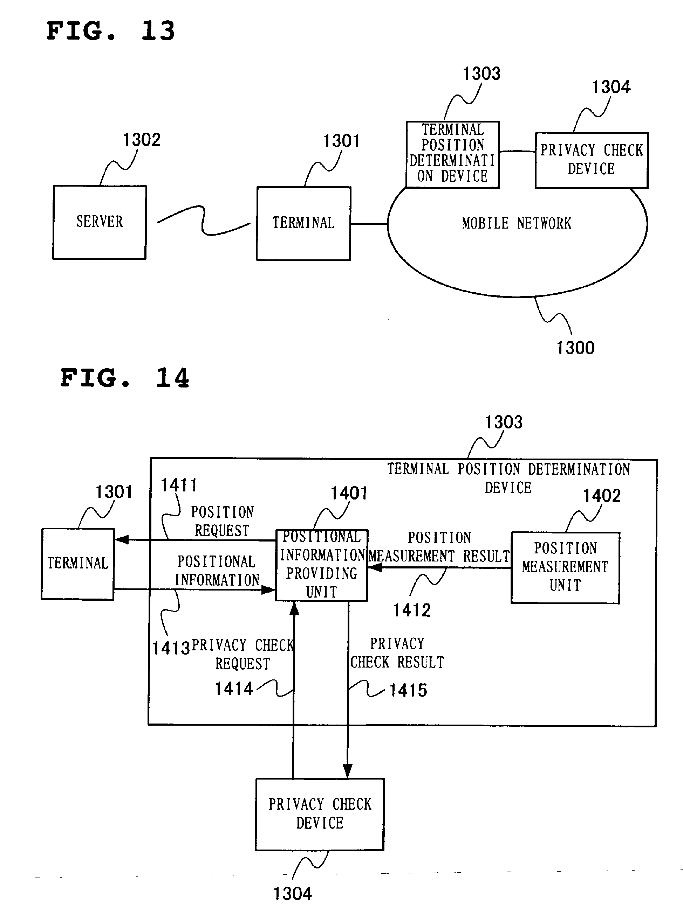

Fig. 13 shows the system configuration of the positional information notification system according to the fifth example of the present invention. In Fig. 13, the positional information notification system according to the fifth example of the present invention comprises a terminal 1301, a terminal position determination device 1303 and a privacy check device 1304 connected to a mobile network 1300, and a server 1302, which can communicate with the terminal 1301. Since the communication method between the terminal 1301 and the server 1302 is not directly related to the present invention, it is omitted herein. In addition, to simplify the description, Fig. 13 includes one terminal, one terminal position determination device, one privacy check device and one server, however, one or more terminals, terminal determination devices, privacy check devices and servers may be included.

Fig. 14 shows the configuration of the terminal position determination device 1303 in the positional information notification system according to the fifth example of the present invention. The terminal position determination device 1303 comprises a positional information providing unit 1401 and a position measurement unit 1402.

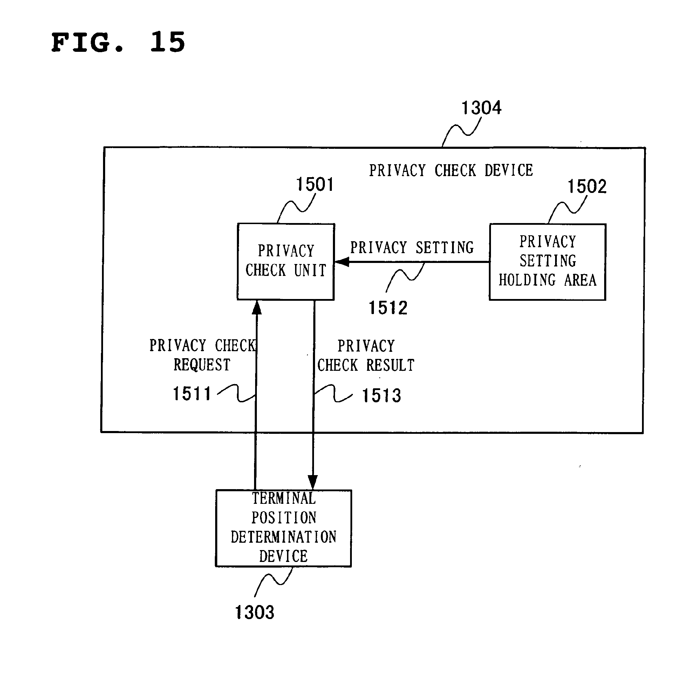

Fig. 15 shows the configuration of the privacy check unit 1304 in the positional information notification system according to the fifth example of the present invention. The privacy check device 1304 comprises a privacy check unit 1501 and a privacy setting holding area 1502. The privacy setting by the user of the terminal 1301 is held in the privacy setting holding area 1502. For example, the setting held in the privacy setting holding area of the terminal position determination device in the positional information notification system according to the first example can be considered as a privacy setting for a user. In addition, the above example is intended to be illustrative, and does not limit the privacy setting method.

### [DESCRIPTION OF OPERATION]

By referring to Figs. 13, 14, 15, 16 and 17, an operation whereby the terminal 1301 obtains the positional information from the terminal position determination device 1303 and notifies the server 1302 of the information in the positional information notification system according to the fifth example of the present invention will be described.

In Fig. 14, when the terminal information providing unit 1401 receives a position request message 1411 from the terminal 1301, terminal position determination device 1303 in the positional information notification system according to the fifth example of the present invention sends the privacy check device 1304 a privacy check request message 1414 for inquiring about whether the notification of the positional information from the terminal 1301 to the server 1302 is permitted. In so doing, the position request message 1411 contains a terminal identifier for specifying the terminal 1301, and a server identifier for specifying a counterpart server 1301, which the terminal 1301 attempts to notify of the positional information, and the privacy check request 1414 contains these terminal identifier and server identifier. The positional information providing unit 1401 of the terminal position determination device 1303, upon notification of the privacy check result 1415 by the privacy check device 1304, if the privacy check result 1415 is "positional information notification permitted", performs position measurement of the terminal 1301 with the position measurement unit 1402, obtains a position measurement result 1412 from the position measurement unit 1402, and provides the positional information 1413 to the terminal 1301. If the privacy check result 1415 is "positional information notification not permitted", the position measurement is not performed, and the terminal 1301 is notified of an error as the positional information 1413.

In Fig. 15, the privacy check device 1304, upon receiving a privacy check request 1511 from the terminal position determination device 1303, in the privacy check unit 1501, reads out the privacy setting from the privacy setting holding area 1502, determines whether the notification of the positional information from the terminal 1301 to the server 1302 is permitted, and notifies the terminal position determination device 1303 of the result of the determination as a privacy check result message 1513.

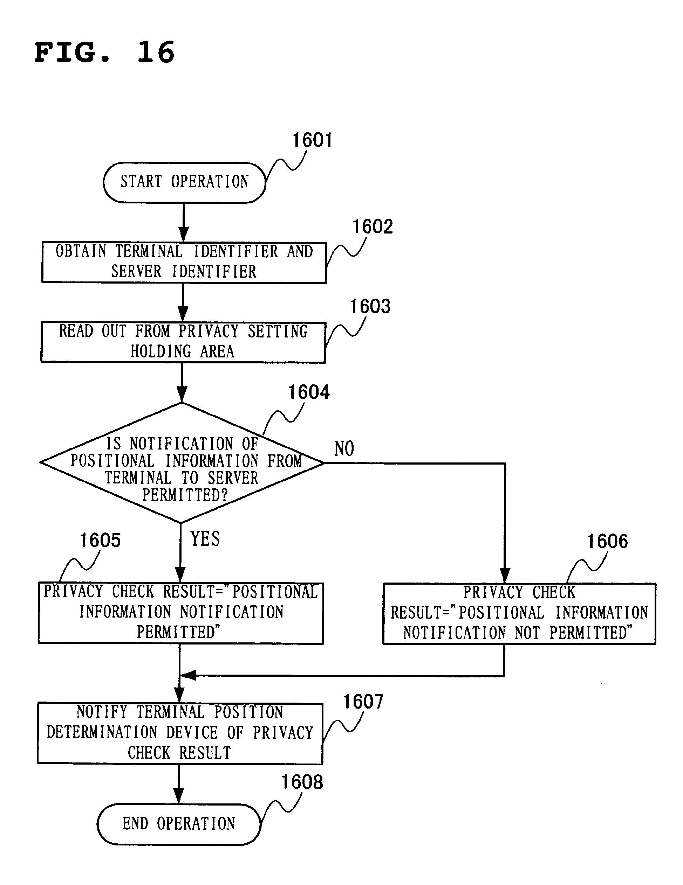

Fig. 16 shows an operation flow for the privacy check unit 1501 in the privacy check device 1304. The privacy check unit 1501 is started for operation by the privacy check request message 1511 from the terminal position determination device 1303 (Step 1601), and obtains the terminal identifier and the server identifier contained in the privacy check request message 1511 in Step 1602. In Step 1603, the privacy check unit 1501 reads out the privacy setting 1512 for the user of the terminal specified by the terminal identifier from the privacy setting holding area 1502, and determines whether to permit the notification of the positional information to the server specified by the server identifier (Step 1604). As an example, a determination method similar to that using the privacy check unit of the terminal position determination device in the positional information notification system according to the first example of the present invention can be considered. In addition, the above example is intended to be illustrative, and does not limit the determination method. If the notification of the positional information from the terminal to the server is determined to be permitted in Step 1604, "positional information notification permitted" is set as a privacy check result (Step 1605). If the notification of the positional information from the terminal to the server is determined to be not permitted in Step 1604, "positional information notification not permitted" is set as a privacy check result (Step 1606). In Step 1607, the terminal position determination device 1303 is notified of the privacy check result 1513, and the operation ends (Step 1608).

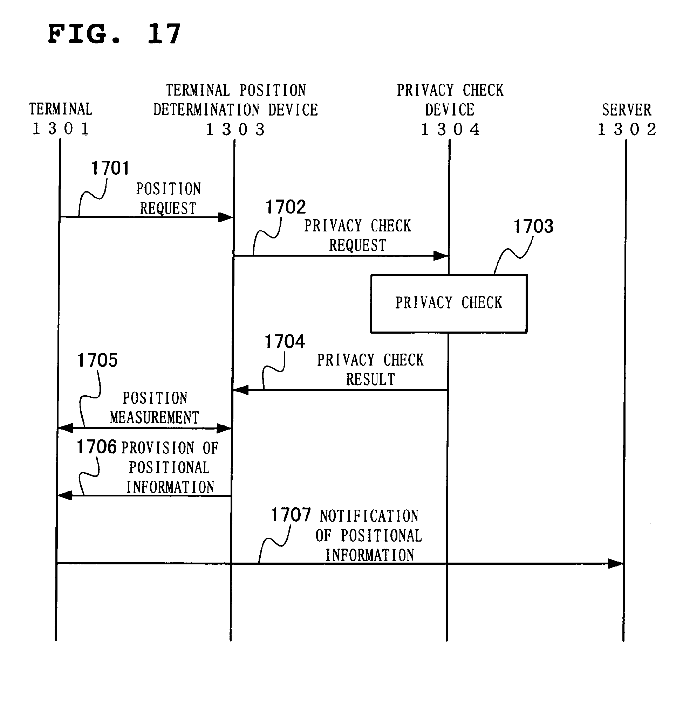

Fig. 17 is a sequence diagram illustrating a procedure whereby the terminal 1301 obtains the positional information from the terminal position determination device 1303, and notifies the server 1302 of the positional information in the positional information notification system according to the fifth example of the present invention. The terminal 1301 sends the position request message to the terminal position determination device 1303 in Procedure 1701, and upon receiving the position request message, the terminal position determination device 1303 sends a privacy check request message to the privacy check device 1304 (Procedure 1702). The privacy check device 1304, through the operation flow shown in Fig. 16, determines whether the notification of the positional information from the terminal 1301 to the server 1302 can be performed (Procedure 1703), and sends the privacy check result message to the terminal position determination device 1303 in Procedure 1704. If the privacy check result is "positional information notification permitted", the terminal position determination device 1303 performs position measurement 1705 between the terminal 1301 and the terminal position determination device 1303 to obtain the positional information of the terminal 1301, and provides the positional information to the terminal 1301 in Procedure 1706. If the privacy check result is "positional information notification not permitted", the terminal position determination device 1303 does not perform the position measurement 1705, and notifies the terminal 1301 of an error in Procedure 1706. If the position measurement result is provided in Procedure 1706, the terminal 1301 notifies the server 1302 of the positional information in Procedure 1708.

An example where the position measurement shown in Procedure 1705 in Fig. 17 is performed before the privacy check request is sent in Procedure 1702 can also be considered.

Further, another example where the position measurement shown in Procedure 1705 in Fig. 17 is performed simultaneously with procedures from Procedure 1702 to Procedure 1704 can also be considered. In this way, the time required for the overall procedure for the notification of the positional information from the terminal 1301 to the server 1302 can be shortened.

In addition, although, in the present example, the case where the terminal position determination device 1303 comprises a positional information providing unit and a position measurement unit, and performs position measurement between the terminal 1301 and the terminal position determination device to provide the positional information to the terminal has been described, similarly to the second example, an example where the terminal position determination device 1303 comprises a supplementary information providing unit and a supplementary information determination unit to provide supplementary information for determining the positional information to the terminal can also be considered. In this case, in Fig. 17, if the position measurement in Procedure 1705 is not performed, and the privacy check result is "positional information notification permitted" in Procedure 1704, the supplementary information is provided from the terminal position determination device 1303 to the terminal 1301, which in turn, determines the positional information based on the supplementary information, and notifies the server 1302 of the positional information.

### (EXAMPLE 6)

### [DESCRIPTION OF CONFIGURATION]

A positional information notification system according to a sixth example of the present invention will be described by referring to diagrams.

The system configuration of the positional information notification system according to the sixth example of the present invention is the same as that of the positional information notification system according to the fifth example of the present invention shown in Fig. 13. Further, the terminal position determination device 1303 in the positional information notification system according to the sixth example of the present invention has the same configuration as that of the terminal position determination device in the positional information notification system according to the fifth example shown in Fig. 14.

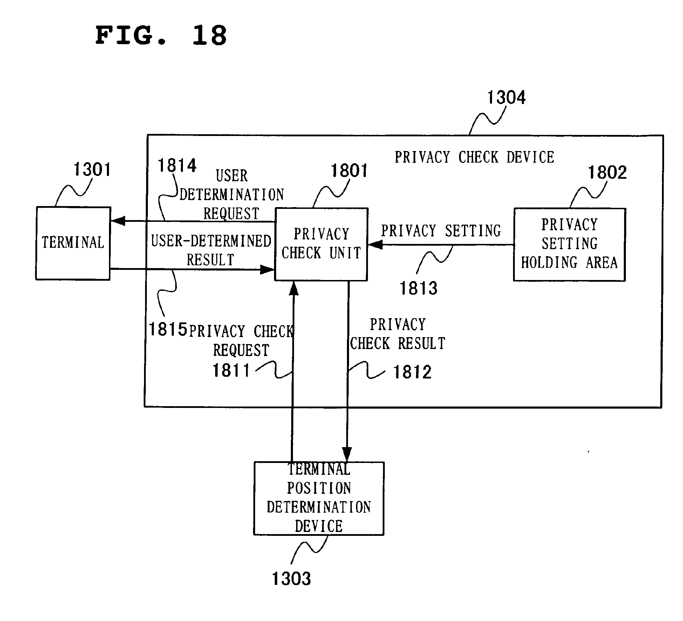

Fig. 18 shows the configuration of the privacy check device 1304 in the positional information notification system according to the sixth example of the present invention, which, compared to the configuration of the privacy check device in the positional information notification system according to the fifth example shown in Fig. 15, is different only on the point that the privacy check unit 1801 has an interface with the terminal 1301.

### [DESCRIPTION OF OPERATION]

By referring to Figs. 13, 18, 19 and 20, an operation whereby the terminal 1301 obtains the positional information from the terminal position determination device 1303 and notifies the server 1302 of the information in the positional information notification system according to the sixth example of the present invention will be described.

Since the operation of the terminal position determination device 1303 in the positional information notification system according to the sixth example of the present invention is the same as the operation of the terminal position determination device in the positional information notification system according to the fifth- example described above, the description is omitted herein.

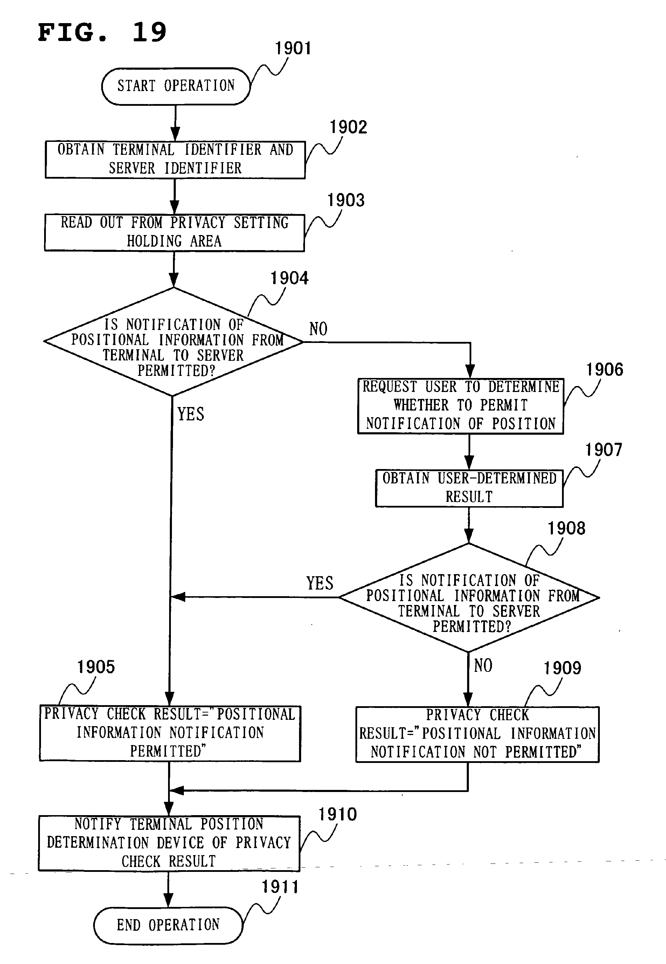

Fig. 19 shows an operation flow for the privacy check unit 1801 of the privacy check device 1304 in the positional information notification system according to the sixth example of the present invention. Since the processes in Steps 1901, 1902, 1903, 1904, 1910 and 1911 shown in Fig. 19 are respectively the same as the processes in Steps 1601, 1602, 1603, 1604, 1607 and 1608 of the operation flow for the privacy check unit 1501 of the privacy check device 1304 in the positional information notification system according to the fifth example described in connection with Fig. 16, the description is omitted. If the notification of the positional information from the terminal to the server is determined to be not permitted in Step 1904, the privacy check unit 1801 in the positional information notification system according to the sixth example of the present invention sends the terminal a user determination request message to request a determination of whether the notification of the position is to be performed, in Step 1906 (1814 in Fig. 18). When the privacy check unit receives a user-determined result message (1815 in Fig. 18) from the user of the terminal in Step 1907, the privacy check unit checks the result of the determination (Step 1908), and if the privacy check unit determines that the notification of the positional information to the server can be performed based on the determination by the user, the privacy check unit sets the privacy check result to "positional information notification permitted" in Step 1905. If the positional information notification to the server is determined to be not permitted by the determination of the user in Step 1908, the privacy check result is set to "positional information notification not permitted" in Step 1909.

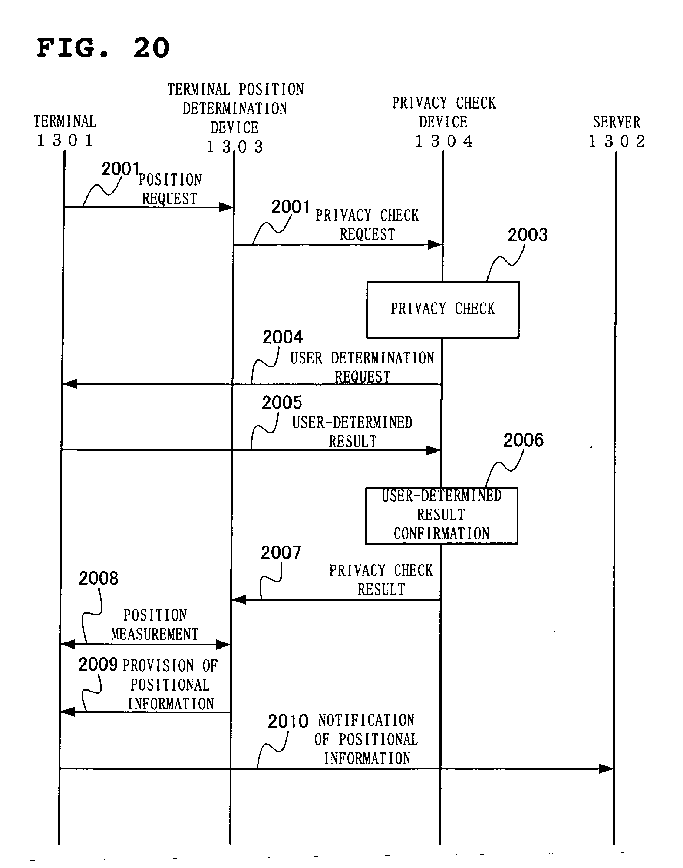

Fig. 20 is a sequence diagram illustrating a procedure whereby the terminal 1301 obtains the positional information from the terminal position determination device 1303, and notifies the server 1302 of the positional information in the positional information notification system according to the sixth example of the present invention. In addition, in the operation step 1904 of the privacy check unit, the operation in the case where the notification of the positional information from the terminal 1301 to the server 1302 have been determined to be permitted based on the privacy setting for the user is the same as the operation in the sequence diagram, which shows the notification procedures of the positional information from the terminal 1301 to the server 1302, in the positional information notification system according to the fifth example of the present invention shown in Fig. 17. Thus, in the operation step 1904 of the privacy check unit, the operation in the case where the notification of the positional information from the terminal 1301 to the server 1302 has been determined to be not permitted based on the privacy setting for the user will now be described.

The terminal 1301 sends the position request message to the terminal position determination device 1303 in Procedure 2001, and upon receiving the position request message, the terminal position determination device 1303 sends a privacy check request message to the privacy check device 1304 (Procedure 2002). In the privacy check procedure 2003, through processes from Step 1901 to Step 1904 of the operation flow shown in Fig. 19, the privacy check unit 1801 of the privacy check device 1304 determines whether the notification of the positional information from the terminal 1301 to the server 1302 is permitted based on the user setting, if the notification is determined to be not permitted, the privacy check unit sends the user of the terminal 1301 a user determination request message for inquiring about whether to notify the server 1302 of the positional information (Procedure 2004 and Step 1906 in Fig. 19), and the terminal 1301 notifies the privacy check device 1304 of the user-determined result (Procedure 2005). The user-determined result confirmation procedure 2006 contains Step 1907 to Step 1911 in the operation flow for the privacy check unit shown in Fig. 19. The terminal position determination device 1303, which has obtained the privacy check result from the privacy check device 1304 in Procedure 2007 performs position measurement 2008 between the terminal 1301 and the terminal position determination device to obtain the positional information of the terminal 1301 and provide the positional information to the terminal 1310 in Procedure 2009, if the privacy check result is "positional information notification permitted". If the privacy check result is "positional information notification not permitted", the terminal position determination device 1303 does not perform the position measurement 2008, and notifies the terminal 1301 of an error in Procedure 2009. If the positional information is provided in Procedure 2009, the terminal 1301 notifies the server 1302 of the positional information in Procedure 2010.

An example where the position measurement shown in Procedure 2008 in Fig. 20 is performed before the privacy check request message is sent in Procedure 2002 can also be considered.

Further, another example where the position measurement shown in Procedure 2008 in Fig. 20 is performed simultaneously with procedures from Procedure 2002 to Procedure 2007 can also be considered. In this way, the time required for the overall procedure for the notification of the positional information from the terminal 1301 to the server 1302 can be shortened.

In addition, although, in the present example, the case where the terminal position determination device 1303 comprises a positional information providing unit and a position measurement unit, and performs position measurement between the terminal 1301 and the terminal position determination device to provide the positional information to the terminal has been described, similarly to the second example, an example where the terminal position determination device 1303 comprises a supplementary information providing unit and a supplementary information determination unit to provide supplementary information for determining the positional information to the terminal can also be considered. In this case, in Fig. 20, if the position measurement in Procedure 2008 is not performed, and the privacy check result is "positional information notification permitted" in Procedure 2007, the supplementary information is provided from the terminal position determination device 1303 to the terminal 1301, which in turn, determines the positional information based on the supplementary information, and notifies the server 1302 of the positional information.

Further, although, in the present example, the case where the privacy check unit 1801 checks the user setting in the privacy setting holding area 1802, and if the notification of the position from the terminal 1301 to the server 1302 is not permitted, the privacy check device 1304 sends the terminal 1301 a user determination request has been described, similarly to the third example, an example where the privacy check device 1304 does not comprise a privacy setting holding area, and sends the user determination request message immediately after the privacy check device has received the privacy check request can also be considered.

### (EXAMPLE 7)

### [DESCRIPTION OF CONFIGURATION]

A positional information notification system according to a seventh example of the present invention will be described by referring to diagrams.

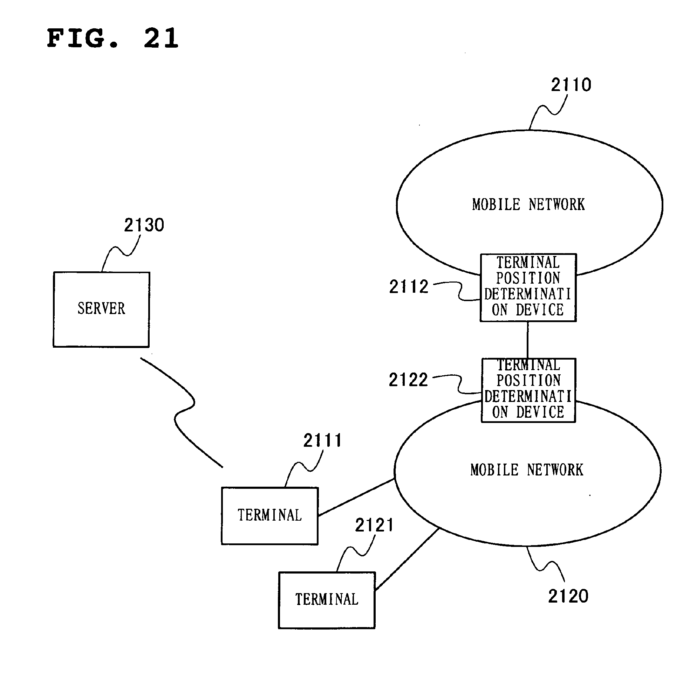

Fig. 21 shows the system configuration of .the positional information notification system according to the seventh example of the present invention. In Fig. 21, the positional information notification system according to the example of the present invention comprises mobile networks 2110 and 2120, a terminal 2111 and a terminal position determination device 2112 associated with the mobile network 2110, a terminal 2121 and a terminal position determination device 2122 associated with the mobile network 2120, and a server, which can communicate with the terminal 2111. The terminal 2111 associated with the mobile network 2110 is connected to the mobile network 2120 in the present example. Since the communication method between the terminal 2111 and the server 2130 is not directly related to the present invention, it is omitted herein. In addition, to simplify the description, Fig. 21 includes one terminal and one terminal position determination device associated with each mobile network, and one server; however, one or more terminals, terminal determination devices, and servers may be included.

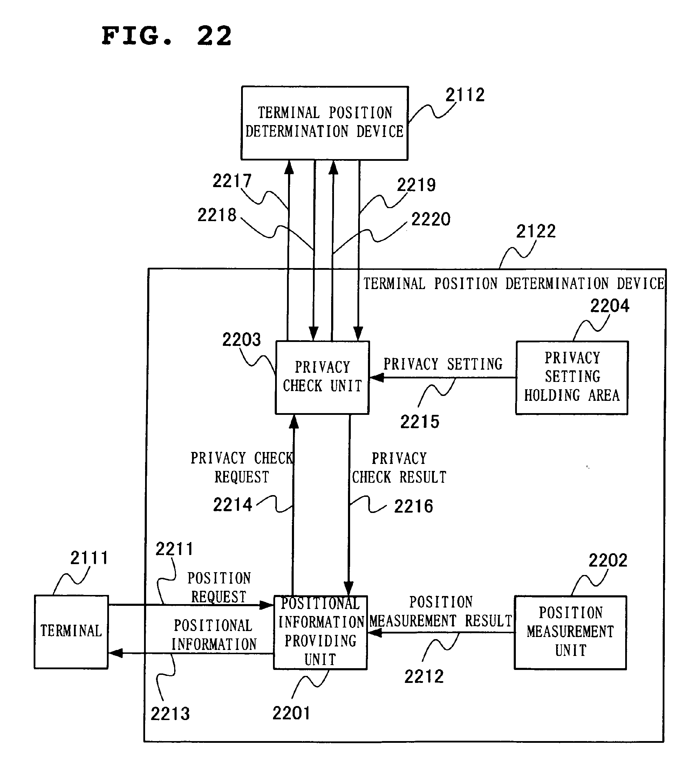

Fig. 22 shows the configuration of the terminal position determination devices 2112 and 2122 in the positional information notification system according to the seventh example of the present invention. The terminal position determination devices 2112 and 2122 have the same configuration, and Fig. 22 shows the terminal position determination device 2122. The terminal position determination device 2122 comprises a positional information providing unit 2201, a position measurement unit 2202, a privacy check unit 2203 and a privacy setting holding area 2204. Privacy settings for users of the terminals associated with the same mobile network are held in the privacy setting holding area 2204. In the present example, the privacy setting for the user of the terminal 2111 is held in the privacy setting holding area in the terminal position determination device 2112, and the privacy setting for the user of the terminal 2121 is held in the privacy setting holding area in the terminal position determination device 2122. Although examples similar to those of the privacy settings described in the first example can be considered as examples of privacy settings, the method of the setting is not limited.

### [DESCRIPTION OF OPERATION]

By referring to Figs. 21, 22, 23 and 24, an operation whereby the terminal 2111 obtains the positional information from the terminal position determination device 2122 and notifies the server 2130 of the information in the positional information notification system according to the seventh example of the present invention will be described. In addition, the operations whereby the terminal 2111 is connected to the mobile network 2110, obtains the positional information from the terminal position determination device 2112, and notifies the server 2130 of the positional information, are the same as the operations in the first example.

In Fig. 22, when the positional information providing unit 2201 receives a position request 2211 from the terminal 2111, the terminal position determination device 2122 in the positional information notification system according to the seventh example of the present invention inquires of the privacy check unit 2203 about whether the notification of the positional information from the terminal 2111 to the server 2122 is permitted. In so doing, the position request 2211 contains a terminal identifier for specifying the terminal 2111, and a server identifier for specifying a counterpart server 2130, which the terminal 2111 attempts to notify of the positional information, and the privacy check request 2214 contains these terminal identifier and server identifier. Upon receiving the privacy check result 2216 from the privacy check unit 2203, if the privacy check result 2216 is "positional information notification permitted", the terminal position providing unit 2201 performs the position measurement of the terminal 2111 with the position measurement unit 2202, obtains a position measurement result 2212 from the position measurement unit 2202, and provides the positional information 2213 to the terminal 2111. If the privacy check result 2216 is "positional information notification not permitted", the position measurement is not performed, and the terminal 2111 is notified of an error as the positional information 2213. A method of using the cell ID scheme may be mentioned as the position measurement method of the terminal 2111 by the position measurement unit 2202; however, the method is not limited herein.

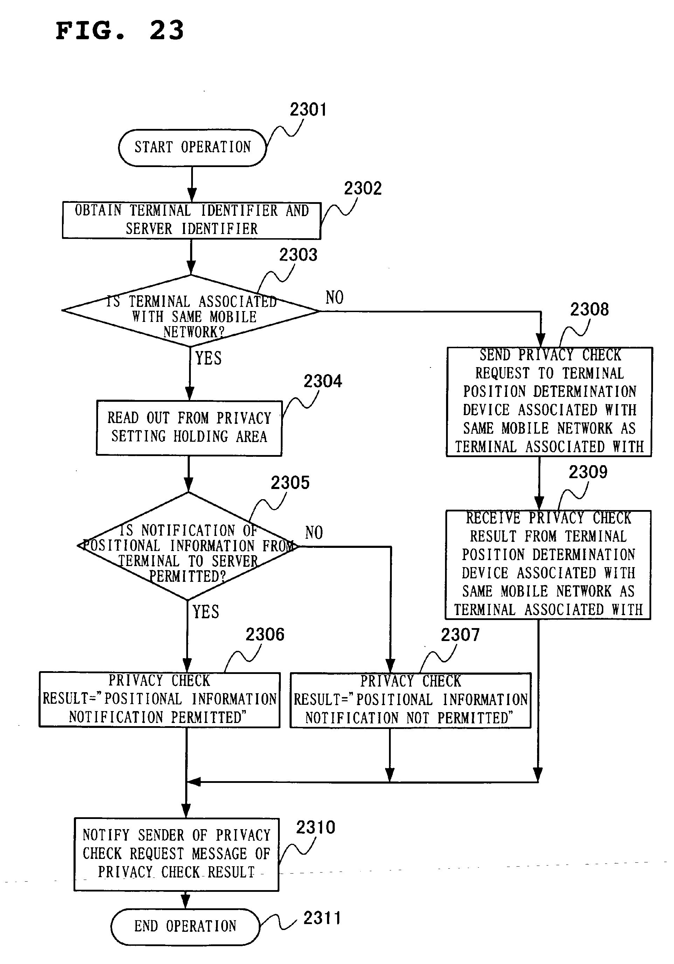

Fig. 23 is a flow chart illustrating the activity of the privacy check unit 2203 of the terminal position determination device in the positional information notification system according to the seventh examples of the present invention. The privacy check unit is started for operation upon receiving a privacy check request from the positional information providing unit 2201 in the same terminal position determination device or from another terminal position determination device (Step 2301). The privacy check unit 2203 obtains the terminal identifier and the server identifier contained in the privacy check request in Step 2302, and determines whether the terminal specified by the obtained terminal identifier is associated with the same mobile network as the terminal position determination device itself associated with in Step 2303. If the terminal is determined to be associated with the same mobile network in Step 2303, in Step 2304, the privacy check unit 2203 reads out the privacy setting 2215 for the user of the terminal specified by the terminal identifier from the privacy setting holding area 2204, and determines whether to permit the notification of the positional information to the server specified by the server identifier (Step 2305). If the result determined in Step 2305 permits the notification of the positional information from the terminal to the server, the privacy check result is set to "positional information notification permitted" in Step 2305. If the result determined in Step 2305 does not permit the notification of the positional information from the terminal to the server, the privacy check result is set to "positional information notification not permitted" in Step 2307. If the terminal is determined to be associated with a mobile network different from the mobile network with which the terminal position determination device itself is associated in Step 2303, the privacy check request message containing the terminal identifier and the server identifier obtained in Step 2302 is sent to the terminal position determination device associated with the same mobile network as the terminal associated with. When the privacy check result is received from the terminal position determination device associated with the same mobile network as the terminal associated with in Step 2309, the result serves as the final privacy check result. In Step 2310, the privacy check unit 2203 notifies the requester of the privacy check of the privacy check result, and terminates the operation (Step 2311).

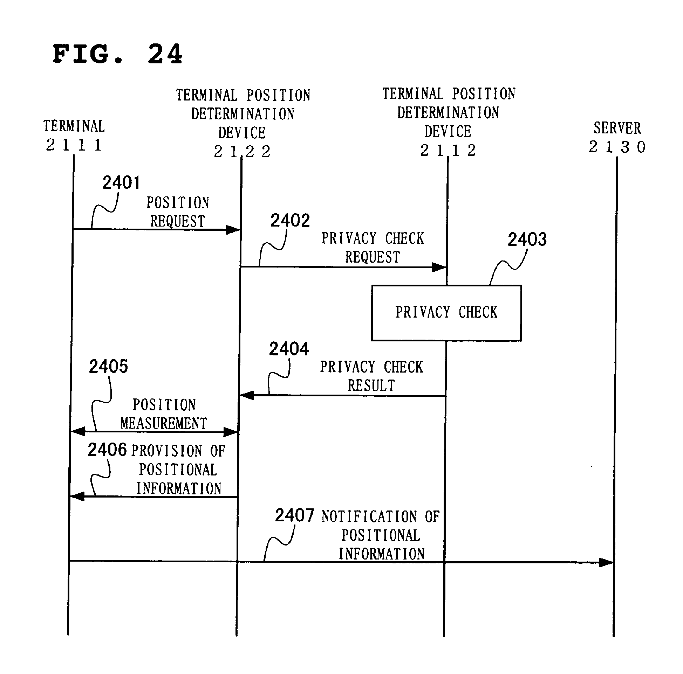

Fig. 24 shows a sequence whereby the terminal 2111 requests the terminal position determination device 2122 for a position, and notifies the server 2130 of the obtained positional information, in the positional information notification system according to the seventh example of the present invention. In addition, the operations whereby the terminal 2111 is connected to the mobile network 2110, and requests the terminal position determination device 2112 for a position are the same as the operations in the first example shown in Fig. 4.

In Fig. 24, when the terminal position determination device 2122 receives a position request message from the terminal 2111 in Step 2401, the operation described in connection with Fig. 23 starts in the privacy check unit of the terminal position determination device 2122. The privacy check unit of the terminal position determination device 2112 examines whether the terminal is associated with the same network in Step 2303 in Fig. 23, and since the terminal is associated with a different network in the present example, forwards a privacy check request to the terminal position determination device 2112 associated with the same network as the terminals associated with (Procedure 2402, Step 2308). Upon receiving the privacy check request, the terminal position determination device 2112 performs the privacy check described in connection with Fig. 23, in the privacy check unit. In Step 2303, the terminal position determination device 2112 determines that the terminal 2111 is associated with the same mobile network as the terminal position determination device itself 2112 associated with, performs the privacy check operations from Step 2304 to Step 2307 (Procedure 2403), and returns the result to the terminal position determination device 2122, which originally requested the privacy check (Procedure 2404). In the terminal position determination device 2122, when the privacy check result is received from the terminal position determination device 2112 in Step 2404, this result serves as the final privacy check result in the privacy check unit. If the notification of the positional information from the terminal 2111 to the server 2130 is permitted based on the privacy check result, position measurement 2405 is performed between the terminal 2111 and the terminal positional determination device 2122, the terminal position determination device 2122 obtains the positional information of the terminal 2111, and the positional information is provided to the terminal 2111 in Procedure 2406. If the notification of the positional information from the terminal 2111 to the server 2130 is not permitted based on the privacy check result, the terminal position determination device 2122 does not perform position measurement 2405, and notifies the terminal 2111 of an error in Procedure 2406. If the positional information is provided in Procedure 2406, the terminal 2111 notifies the server 2130 of the positional information in Procedure 2407.

An example where the position measurement shown in Procedure 2405 in Fig. 24 is performed before the privacy check request message is sent in Procedure 2402 in Fig. 24 can also be considered.

Further, another example where the position measurement shown in Procedure 2405 in Fig. 24 is performed simultaneously with procedures from Procedure 2402 to Procedure 2404 in Fig. 24 can also be considered. In this way, the time required for the overall procedure for the notification of the positional information from the terminal 2111 to the server 2130 can be shortened.

In addition, although, in the seventh example, the case where the terminal position determination device performs position measurement of the terminal and provides the positional information of the terminal to the terminal has been described, similarly to the second example, an example where the terminal position determination device provides the supplementary information required for the terminal to determine the current position can also be considered.

Further, although, in the seventh example, the privacy check unit of the terminal position determination device 2112 determines whether to permit the notification of the positional information from the terminal to the server based on the privacy setting for the user of the terminal, similarly to the third example, an example where the user of the terminal is inquired about whether or not the notification of the positional information is possible, and the determination by the user serves as the result of the privacy check, can also be considered. In this case, the inquiry about whether or not the notification of the positional information from the terminal position determination device 2112 to the user of the terminal 2111 is possible and the result determined by the user are sent and received through the mobile networks 2110 and 2120.

Further, although, in the seventh example, the privacy check unit of the terminal position determination device 2112 determines whether to permit the notification of the positional information from the terminal to the server based on the privacy setting for the user of the terminal, similarly to the fourth example, an example where, if the notification of the positional information from the terminal to the server is determined to be not permitted based on the privacy setting for the user, the user of the terminal is inquired about whether or not the notification of the positional information is possible, and the result determined by the user serves as the final privacy check result, can also be considered. In this case, the inquiry about whether or not the notification of the positional information from the terminal position determination device 2112 to the user of the terminal 2111 is possible and the result determined by the user are sent and received through the mobile networks 2110 and 2120.

### (EXAMPLE 8)

A positional information notification system according to a eighth example of the present invention will be described by referring to diagrams.

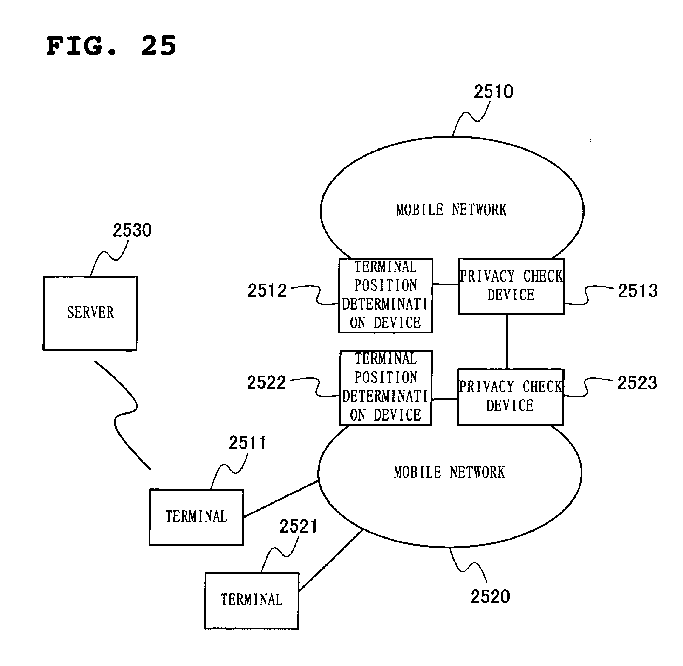

Fig. 25 shows the system configuration of the positional information notification system according to the eighth example of the present invention. In Fig. 25, the positional information notification system according to the example of the present invention comprises mobile networks 2510 and 2520, a terminal 2511, a terminal position determination device 2512 and a privacy check device 2513 associated with the mobile network 2510, a terminal 2521, a terminal position determination device 2522 and a privacy check device 2523 associated with the mobile network 2520, and a server 2530, which can communicate with the terminal 2511. The terminal 2511 associated with the mobile network 2510 is connected to the mobile network 2520 in the present example. Since the communication method between the terminal 2511 and the server 2530 is not directly related to the present invention, it is omitted herein. In addition, to simplify the description, Fig. 25 includes one terminal, one terminal position determination device, and one privacy check device associated with each mobile network, and one server; however, one or more terminals, terminal determination devices, privacy check devices and servers may be included.

Since the terminal position determination devices 2512 and 2522 in the positional information notification system according to the eighth example of the present invention has the same configuration as that of the terminal position determination device in the positional information notification system according to the fifth example shown in Fig. 14, the description is omitted herein.

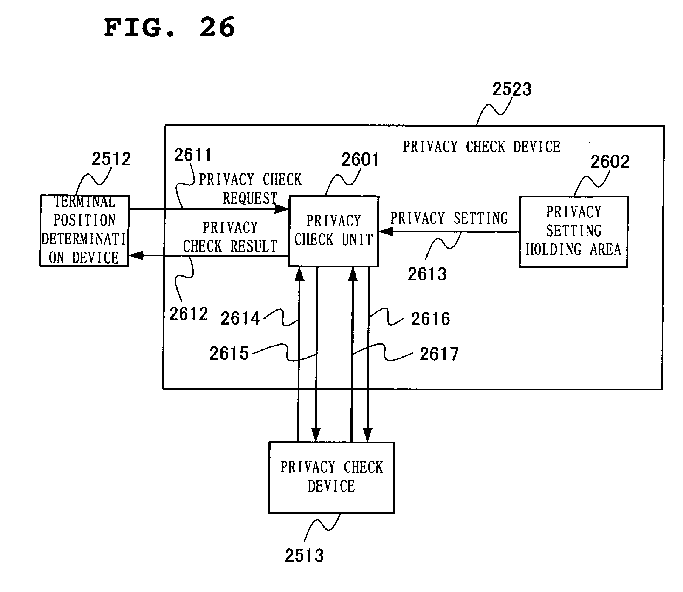

Fig. 26 shows the configuration of the privacy check devices 2513 and 2523 in the positional information notification system according to the eighth example of the present invention. The privacy check devices 2513 and 2523 have the same configuration, and Fig. 26 shows the privacy check device 2523. The privacy check device 2523 has a privacy check unit 2601 and a privacy setting holding area 2602. Privacy settings for users of the terminals associated with the same mobile network are held in the privacy setting holding area. In the present example, the privacy setting for the user of the terminal 2511 is held in the privacy setting holding area in the privacy check device 2513, and the privacy setting for the user of the terminal 2521 is held in the privacy setting holding area in the privacy check device 2522. Although examples similar to those of the privacy settings described in the first example can be considered as examples of privacy settings, the method of the setting is not limited.

### [DESCRIPTION OF OPERATION]

By referring to Figs. 25, 26, 27 and 28, an operation whereby the terminal 2511 obtains the positional information from the terminal position determination device 2522 and notifies the server 2530 of the information in the positional information notification system according to the eighth example of the present invention will be described. In addition, the operations whereby the terminal 2511 is connected to the mobile network 2510, obtains the positional information from the terminal position determination device 2512, and notifies the server of the positional information, are the same as the operations in the fifth example.

Upon receiving a position request message from the terminal 2511, the terminal position determination device 2522 sends a privacy check request message to the privacy check device 2523 associated with the same mobile network to inquire about whether the notification of the positional information from the terminal 2511 to the server 2530 is permitted. In so doing, the position request message contains a terminal identifier for specifying the terminal 2511, and a server identifier for specifying a counterpart server 2530, which the terminal 2511 attempts to notify of the positional information, and the privacy check request contains these terminal identifier and server identifier. Upon receiving the privacy check result from the privacy check device 2523, if the privacy check result is "positional information notification permitted", the terminal position determination device 2522 performs the position measurement of the terminal 2511 and provides the positional information to the terminal 2511. If the privacy check result is "positional information notification not permitted", the position measurement is not performed, and the terminal 2511 is notified of an error as the positional information.

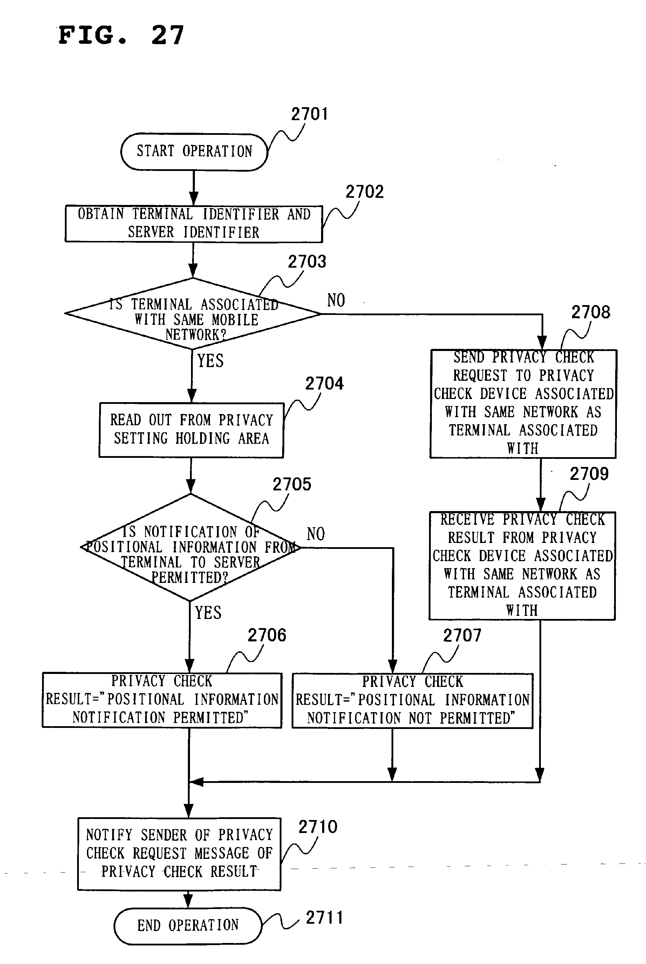

Fig. 27 is a flow chart illustrating the operation sequence of the privacy check device in the positional information notification system according to the eighth example of the present invention. The privacy check device is started for operation upon receiving a privacy check request from the terminal position determination device associated with the same mobile network or from a privacy check device associated with another mobile network (Step 2701). The privacy check device obtains the terminal identifier and the server identifier contained in the privacy check request in Step 2702, and determines whether the terminal specified by the obtained terminal identifier is associated with the same mobile network as the privacy check device itself associated with in Step 2703. If the terminal is determined to be associated with the same mobile network in Step 2703, in Step 2704, the privacy check unit 2601 reads out the privacy setting 2613 for the user of the terminal specified by the terminal identifier from the privacy setting holding area 2602 (Step 2704), and determines whether to permit the notification of the positional information to the server specified by the server identifier (Step 2705). If the result determined in Step 2705 permits the notification of the positional information from the terminal to the server, the privacy check result is set to "positional information notification permitted" in Step 2706. If the result determined in Step 2705 does not permit the notification of the positional information from the terminal to the server, the privacy check result is set to "positional information notification not permitted" in Step 2707. If the terminal is determined to be associated with a mobile network different from the mobile network with which the privacy check device itself is associated in Step 2703, the privacy check request message containing the terminal identifier and the server identifier obtained in Step 2702 is sent to the privacy check device associated with the same mobile network as the terminal associated with. When the privacy check result is received from the privacy check device associated with the same mobile network as the terminal associated with in Step 2709, the result serves as the final privacy check result. In Step 2710, the privacy check device notifies the requester of the privacy check of the privacy check result, and terminates the operation (Step 2611).

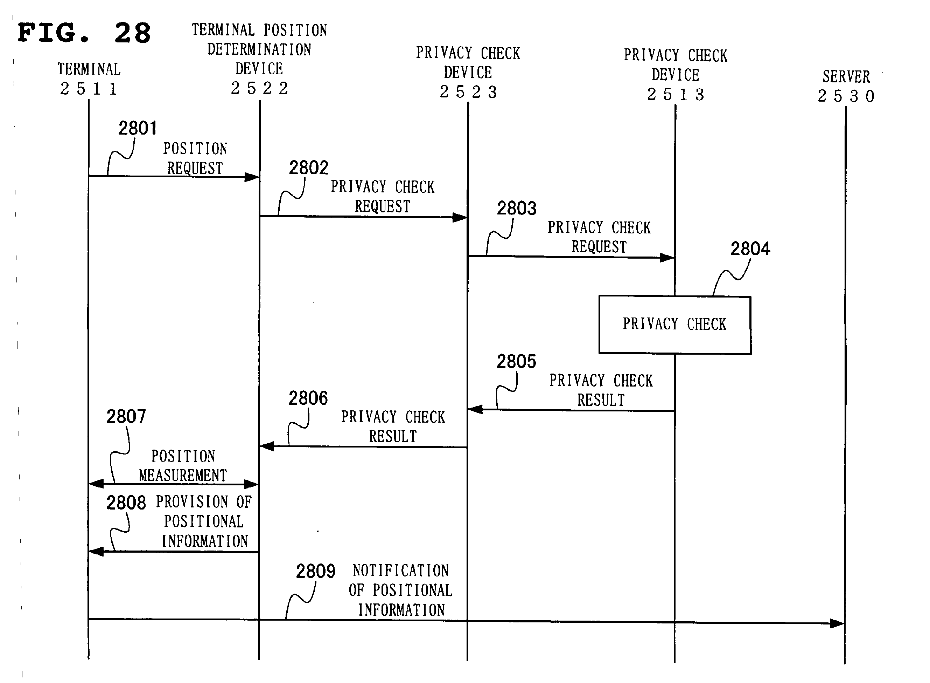

Fig. 28 shows a sequence whereby the terminal 2511 requests the terminal position determination device 2522 for a position, and notifies the server 2530 of the obtained positional information, in the positional information notification system according to the eighth example of the present invention. In addition, the operations whereby the terminal 2511 is connected to the mobile network 2510, obtains the positional information from the terminal position determination device 2512, and notifies the server of the positional information, are the same as the sequences according to the fifth example shown in Fig. 17.

In Fig. 28, when the terminal position determination device 2522 receives the position request message from the terminal 2511 in Procedure 2801, the terminal position determination device 2522 requests the privacy check device 2523 associated with the same mobile network for a privacy check (Procedure 2802). The privacy check device 2523 examines whether the terminal is associated with the same mobile network in Step 2703 in Fig. 27, and since the terminal is associated with a different network in the present example, forwards a privacy check request to the privacy check device 2513 associated with the same network as the terminal associated with (Procedure 2803, Step 2708). Upon receiving the privacy check request, the privacy check device 2513 performs the privacy check through the operations described in Fig. 27. In Step 2703, the privacy check device determines that the terminal is associated with the same mobile network 2510, performs the privacy check operations from Step 2704 onward (Procedure 2804), and returns the result to the privacy check device 2523, which originally requested the privacy check (Procedure 2805). In Step 2806, the privacy check device 2523 notifies the terminal position determination device 2522 of the privacy check result notified by the privacy check device 2513 as the final privacy check result. If the notification of the positional information from the terminal 2511 to the server 2530 is permitted based on the notified privacy check result, the terminal position determination device 2522 performs the position measurement 2807 between the terminal 2511 and the terminal position determination device to obtain the positional information of the terminal 2511, and provides the positional information to the terminal 2511 in Procedure 2808. If the notification of the positional information from the terminal 2511 to the server 2530 is not permitted based on the privacy check result notified in Procedure 2806, the terminal position determination device 2522 does not perform position measurement 2807, and notifies the terminal 2511 of an error in Procedure 2808. If the positional information is provided in Procedure 2808, the terminal 2511 notifies the server 2530 of the positional information in Procedure 2809.

An example where the position measurement shown in Procedure 2807 in Fig. 28 is performed before the privacy check request in Procedure 2802 in Fig. 28 can also be considered.

Further, another example where the position measurement shown in Procedure 2807 in Fig. 28 is performed simultaneously with procedures from Procedure 2802 to Procedure 2806 can also be considered. In this way, the time required for the overall procedure for the notification of the positional information from the terminal 2511 to the server 2530 can be shortened.

In addition, although, in the eighth example, the case where the terminal position determination device performs position measurement of the terminal and provides the positional information of the terminal to the terminal has been described, similarly to the second example, an example where the terminal position determination device provides the supplementary information required for the terminal to determine the current position can also be considered.

Further, although, in the eighth example, the privacy check unit of the privacy check device 2513 determines whether to permit the notification of the positional information from the terminal to the server based on the privacy setting for the user of the terminal, similarly to the third example, an example where the user of the terminal is inquired about whether or not the notification of the positional information is possible, and the determination by the user serves as the result of the privacy check, can also be considered. In this case, the inquiry about whether or not the notification of the positional information from the privacy check device 2513 to the user of the terminal 2511 is possible and the result determined by the user are sent and received through the mobile networks 2510 and 2520.

Further, although, in the eighth example, the privacy check unit of the privacy check device 2513 determines whether to permit the notification of the positional information from the terminal to the server based on the privacy setting for the user of the terminal, similarly to the fourth example, an example where, if the notification of the positional information from the terminal to the server is determined to be not permitted based on the privacy setting for the user, the user of the terminal is inquired about whether or not the notification of the positional information is possible, and the result determined by the user serves as the final privacy check result, can also be considered.

Although in the eighth example, when receiving a position request from the terminal 2511, the terminal position determination device 2522 requests the privacy check device 2523 associated with the same mobile network for a privacy check, an example where, when the terminal is determined to be associated with a different mobile network as per the terminal identifier contained in the position request, the privacy check is requested from the privacy check device 2513 associated with the same mobile network as this terminal associated with, and the position measurement between the terminal and the terminal position determination device is determined based on this privacy check result, can also be considered. In this case, the inquiry about whether or not the notification of the positional information from the privacy check device 2513 to the user of the terminal 2511 is possible and the result determined by the user are sent and received through the mobile networks 2510 and 2520.

### (EXAMPLE 9)

### [DESCRIPTION OF CONFIGURATION]

A positional information notification system according to a ninth example of the present invention will be described by referring to diagrams.

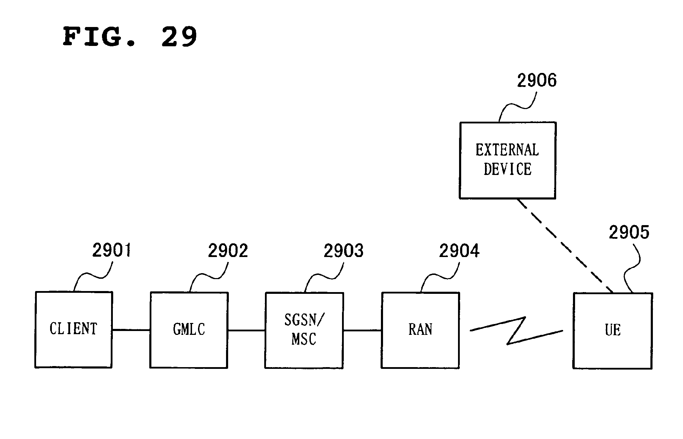

By referring to Fig. 29, the positional information notification system according to the ninth example of the present invention comprises a plurality of nodes, such as, a radio access network (RAN) 2904, which comprises a base station or the like, and a plurality of other radio access networks (RANs), a UE device 2905, which is a mobile device, and a plurality of other UE devices, an SGSN/MSC device 2903 for managing a plurality of radio access networks (RANs) 2904 and having a terminal location determination function, and a plurality of other SGSN/MSC devices, a GMLC device 2902 for holding the privacy information of each UE device 2905 in a mobile network, and an external device 2906 for providing services to the UE device 2905 using the positional information, and a plurality of other external devices. Although the communication between the UE device 2905 and the external device 2906 is performed through a network device such as the RAN 2904, the communication method between the UE device 2905 and the external device 2906 is not directly related to the present invention, thus it is omitted herein. In addition, by comparison of the configuration of the positional information notification system according to the present example with that of the positional information notification system according to the example 5 shown in Fig. 13, the UE device 2905 corresponds to the terminal 1301, the external device 2906 corresponds to the server 1302, the SGSN/MSC device 2903 corresponds to the terminal position determination device 1303, and the GMLC device 2902 corresponds to the privacy check device 1340, respectively.

### [DESCRIPTION OF OPERATION]

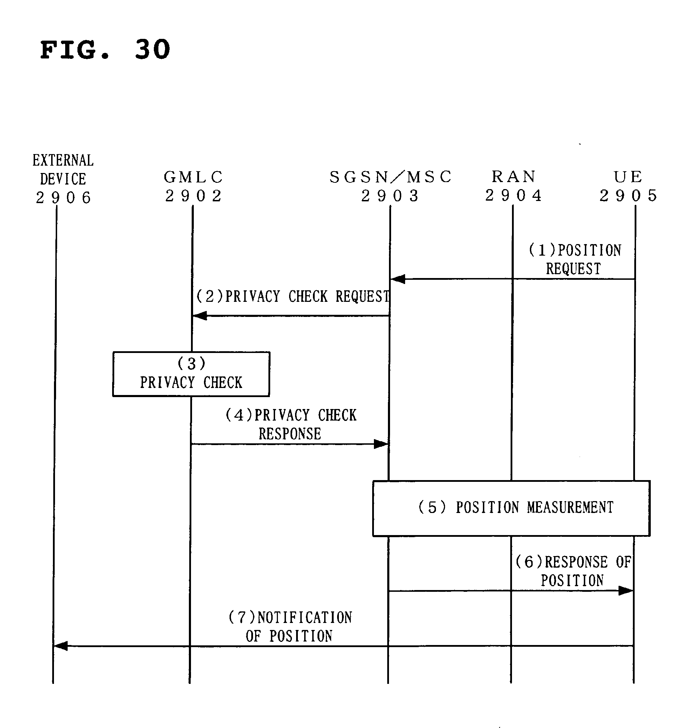

By referring to Figs. 29 and 30, an operation whereby the UE device 2905 notifies the external device 2907 of the positional information in the positional information notification system according to the ninth example of the present invention will be described.

Fig. 30 shows the processes in each node in the mobile network and the flow for messages sent to/received from each node in a case where the UE device 2905 obtains the position of the device itself and notifies the external device 2906 of the position, in the positional information notification system according to ninth example of the present invention. In mobile originating location request (MO-LR), the UE device 2905 sends a position request message to the SGSN/MSC device 2903 (Step 1 in Fig. 30). In the present invention, the position request message sent by the UE device 2905 may include information related to the requested positional information and the information on the usage of the positional information, the address information of the GMLC device 2902, which holds the privacy setting information of the UE device 2905, and information on the presence or the absence of the privacy check request. As an example of information related to the requested positional information, information on the precision of the request for the requested positional information may be considered. As an example of information on the usage of the positional information, information on whether the positional information is used within the UE device, or sent to the external device 2906, can be considered. When sending the positional information to the external device 2906, communicating to the SGSN/MSC device 2903 that information is being sent to the external device 2906 by including sending destination information, that is, information such as the IP address or the telephone number of the external device 2906, in the position request message before sending, can be considered.

The SGSN/MSC device 2903, which has received the position request from the UE device 2905, checks the information on the usage of the positional information of the UE device 2905 included in the position request message, and if the SGSN/MSC device 2903 determines that the UE device 2905 is attempting to send the positional information to the outside for such reason as information such as the IP address or the telephone number of the external device 2906 to which the UE device 2905 is attempting to send the obtained positional information is included in the position request message, the SGSN/MSC device 2903 verifies the presence or the absence of the privacy check request information included in the position request message. Determination that a privacy check is requested when information such as the IP address or the telephone number of the external device 2906 is included without including the privacy check request information in the position request message can also be considered. If the privacy check has been determined to be requested, the SGSN/MSC device 2903, based on the address information on the GMLC device 2902 included in the position request message from the UE device 2905, sends a privacy check request message to the GMLC device 2902, which holds the privacy information on the UE device 2905 (Step 2 in Fig. 30). The terminal ID such as the telephone number of the UE device 2905, and information such as the IP address or the telephone number of the external device 2907 to which the positional information obtained by the UE device 2905 is to be sent, are included in the privacy check request message before being sent. If the address information on the GMLC device 2902 is not included in the position request message from the UE device 2905, the SGSN/MSC device 2903 sends a privacy check request message to an GMLC device registered internally, or responds to the UE device 2905 with an error message.

The GMLC device 2902, which has received the privacy check request message from the SGSN/MSC device 2903, based on the privacy setting information of the UE device 2905 and other information held by the GMLC device, determines whether there is no problem sending the positional information of the UE device 2905 to the external device 2906 (Step 3 in Fig. 30). The privacy check response message is sent back to the SGSN/MSC device 2903 (Step 4 in Fig. 30). The setting held in the privacy setting holding area of the terminal position determination device in the positional information notification system according to the first example of the present invention can be considered as an example of privacy setting information, without limitation to this. Further, a determination method using the privacy check unit of the terminal position determination device in the positional information notification system according to the first example of the present invention can be considered as an example of method for determining whether there is no problem sending the positional information of the UE device 2905 to the external device 2906, without limitation to this. If it is determined that sending the positional information of the UE device 2905 to the external device 2906 is a problem, error information is included in the privacy check response message, the SGSN/MSC device 2903 sends the UE device 2905 an error message, which does not contain the positional information, and terminates the process.

The SGSN/MSC device 2903, which has received the privacy check result indicating that there is no problem sending the positional information of the UE device 2905 to the external device 2906 through the privacy check response message, performs position measurement in cooperation with the UE device 2950, the RAN 2904 and the like, to obtain the positional information of the UE device 2905 (Step 5 in Fig. 30).

The SGSN/MSC device 2903, which has obtained the positional information of the terminal, responds to the UE device 2905 with the positional information (Step 6 in Fig. 30), and the UE device 2905 sends the positional information to the external device 2906 (Step 7 in Fig. 30).

Processing the position measurement shown in Step 5 in Fig. 30 concurrently with Step 2 to Step 4 of Fig. 30 can also be considered. In this way, the overall processing time can be shortened.

Further, performing position measurement between Step 1 and Step 2 of Fig. 30, and sending the positional information of the UE device 2905 to the GMLC device 2902 with the positional information included in the privacy check request message, can also be considered. In this way, privacy check can be performed based on the positional information of the terminal.

Although, in the present example, the case where the UE device 2905 requests the SGSN/MSC device 2903 for the position of the device itself in Step 1 of Fig. 30, and the positional information of the UE device 2905 is notified from the SGSN/MSC device 2903 to the UE device 2905 in Step 6 of Fig. 30 has been described, similarly to the second example, an example where the SGSN/MSC device 2903 notifies the UE device 2905 of the supplementary information in order for the UE device 2905 to determine the positional information of the device itself in Step 6 of Fig. 30 can also be considered.

### (EXAMPLE 10)

### [DESCRIPTION OF CONFIGURATION]

A tenth example of the present invention will be described in detail by referring to diagrams.

The present example is an example where a plurality of mobile network operators provide positional information services in cooperation, and particularly describes the operation in a case where a mobile network 1, which the GMLC 3112 that holds the privacy setting information of the UE device 3115 is associated with, and a mobile network 2, which the RAN 3104 to which the UE device 3115 is connected is associated with, are different.

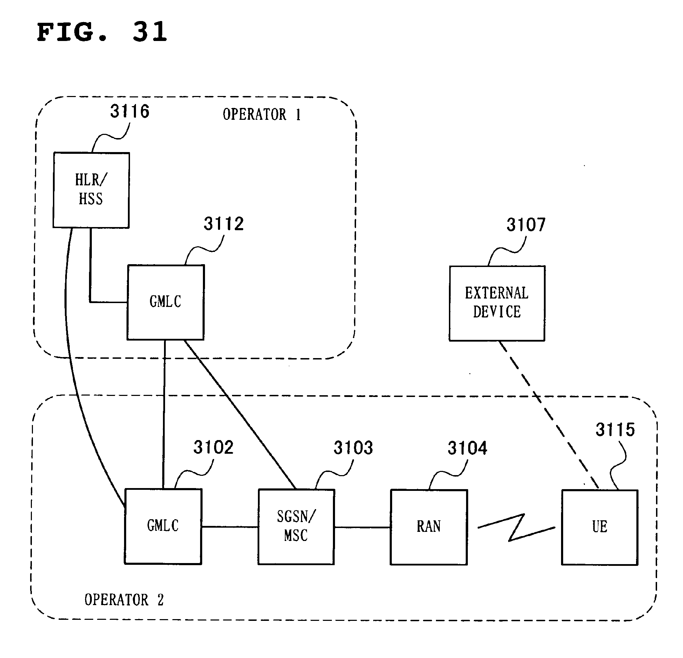

By referring to Fig. 31, the positional information notification system according to the tenth example of the present invention comprises a plurality of nodes, such as, GMLC devices 3102 and 3112 for holding the privacy information of each UE device associated with each mobile network, an SGSN/MSC device 3103 for managing a plurality of radio access networks (RANs), and a plurality of other SGSN/MSC devices, a radio access network (RAN) 3104, which comprises a base station or the like, and a plurality of other radio access networks (RAN), a UE device 3115, which is a mobile device, and a plurality of other UE devices, an HLR/HSS device 3116 for holding the address information of the GMLC device 3112, which holds the privacy setting information of the UE device 3115, and an external device 3107 for providing services to the UE device using the positional information, and a plurality of other external devices. Although the communication between the UE device 3115 and the external device 3107 is performed through a network device such as the RAN 3104, the communication method between the UE device 3115 and the external device 3107 is not directly related to the present invention, thus it is omitted herein. In the present example, it is assumed that the UE device 3115 is a terminal associated with the mobile network 1, and the privacy setting information of the UE device 3115 is held in the GMLC device 3112. The setting held in the privacy setting holding area of the terminal position determination device in the positional information notification system according to the first example of the present invention can be considered as an example of privacy setting information, without limitation to this.

### [DESCRIPTION OF OPERATION]

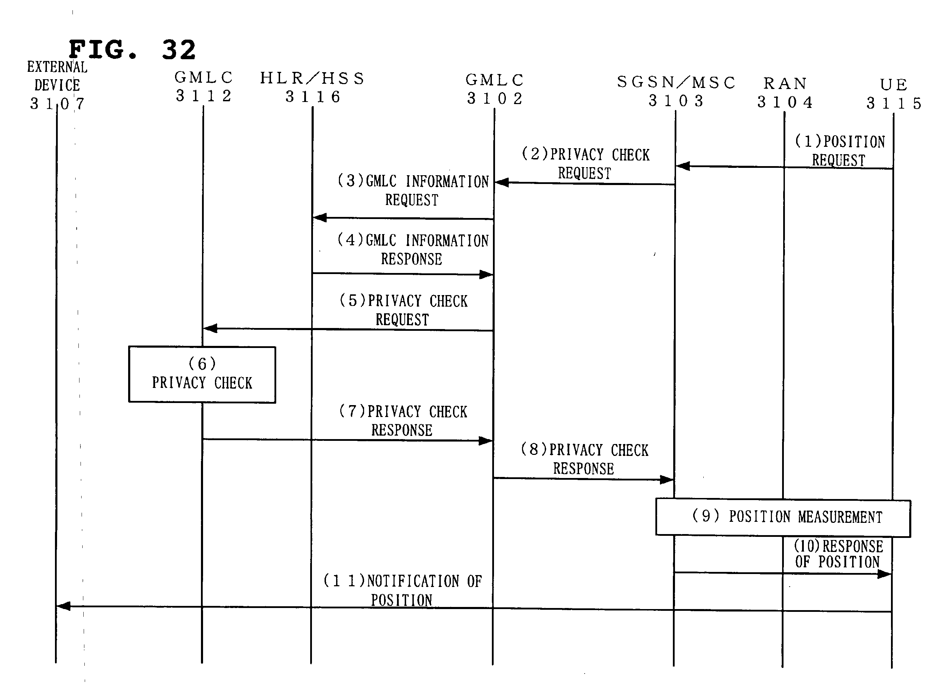

By referring to Figs. 31 and 32, an operation whereby the UE device 3115 notifies the external device 3107 of the positional information in the positional information notification system according to the tenth example of the present invention will be described.

Fig. 32 shows the processes in each node in the mobile network and the flow for messages sent to/received from each node in a case where the UE device 3115 obtains the positional information from the SGSN/MSC device 3103 and notifies the external device 3107 of the positional information. In mobile originating location request (MO-LR), the UE device 3115 sends a position request message to the SGSN/MSC device 3103 (Step 1 in Fig. 32). In the present invention, the position request message sent by the UE device 3115 may include information related to the requested positional information and the information on the usage of the positional information, the address information of the GMLC device 3112, which holds the privacy setting information of the UE device 3115, and information on the presence or the absence of the privacy check request. As an example of information related to the requested positional information, information on the precision of the request for the requested positional information may be considered. As an example of information on the usage of the positional information, information on whether the positional information is used within the UE device, or sent to the external device 3107, can be considered. When sending the positional information to the external device 3107, communicating to the SGSN/MSC device 3103 that information is being sent to the external device 3107 by including sending destination information, that is, information such as the IP address or the telephone number of the external device 3107, in the position request message before sending, can be considered.

The SGSN/MSC device 3103, which has received the position request from the UE device 3115, checks the information on the usage of the positional information of the UE device 3115 included in the position request message, and if the SGSN/MSC device 3103 determines that the UE device 3115 is attempting to send the positional information to the outside for such reason as information such as the IP address or the telephone number of the external device 3107 to which the UE device 3115 is attempting to send the obtained positional information is included in the position request message, the SGSN/MSC device 3103 verifies the presence or the absence of the privacy check request information included in the position request message. Determination that a privacy check is requested when information such as the IP address or the telephone number of the external device 3107 is included without including the privacy check request information in the position request message can also be considered. If the privacy check has been determined to be requested, the SGSN/MSC device 3103, based on the address information of the GMLC device 3112 included in the position request message from the UE device 3115, determines whether or not sending the privacy check request message to the GMLC device 3112, which holds the privacy information on the UE device 3115, is possible. If the SGSN/MSC device 3103 determines that the privacy check request message cannot be sent directly to the GMLC device 3112, or if the address information on the GMLC device 3112 is not included in the position request message from the UE device 3115, the SGSN/MSC device 3103 sends a privacy check request message to the GMLC device 3102 registered internally (Step 2 in Fig. 32). The terminal ID such as the telephone number of the UE device 3115, and information such as the address information on the GMLC device 3112, which holds the privacy setting information of the UE device 3115, and the IP address or the telephone number of the external device 3107 to which the positional information obtained by the UE device 3115 is to be sent, are included in the privacy check request message before being sent. If the SGSN/MSC device 3103 can directly send the privacy check request message to the GMLC device 3112, the privacy check request message in Step 2 of Fig. 32 is sent to the GMLC device 3112, omitting Step 3 to Step 5 in Fig. 32.

The GMLC device 3102, which has received the privacy check request message form the SGSN/MSC device 3103, determines whether the address information of the GMLC device 3112, which holds the privacy setting information of the UE device 3115, is contained in the privacy check request message. If the address information of the GMLC device 3112, which holds the privacy setting information of the UE device 3115, is not included, the SGSN/MSC device 3103 sends a GMLC ' information request message, including the terminal ID such as telephone number of the UE device 3115, to the HLR/HSS device 3116 (Step 3 in Fig. 32), the HLR/HSS device 3116, based on the terminal ID such as the telephone number of the UE device 3115, searches for the address information of the GMLC device 3112, which holds the privacy setting information of the UE deice 3115, and responds to the SGSN/MSC device 3103 (Step 4 in Fig. 32). It is assumed that the address of the HLR/HSS device 3116 can be uniquely determined based on the terminal ID such as the telephone number of the UE device 3115. Upon receiving the privacy check request message from the SGSN/MSC device 3103 or the response by the HLR/HSS device 3116, the GMLC device 3102, which has obtained the address information of the GMLC device 3112 that holds the privacy setting information of the UE device 3115, sends the privacy check request message to the GMLC device 3112 (Step 5 in Fig. 32).

The GMLC device 3112, which has received the privacy check request message from the SGSN/MSC device 3103 or the GMLC device 3102, based on the privacy setting information of the UE device 3115 and other information held by the GMLC device, determines whether there is no problem sending the positional information of the UE device 3115 to the external device 3115 (Step 32 in Fig. 6). If the sender of the privacy check request message is the GMLC device 3102, the GMLC device 3112 sends the privacy check response message to the GMLC device 3102 (Step 7 in Fig. 32), and the GMLC device 3102 sends the privacy check response message to the SGSN/MSC device 3103 (Step 8 in Fig. 32). If the sender of the privacy check request message is the SGSN/MSC device 3103, the privacy check response message that is sent in Step 7 of Fig. 32 is directly sent from the GMLC device 3112 to the SGSN/MSC device 3103, omitting Step 8 in Fig. 32. If it is determined that sending of the positional information of the UE device 3115 to the external device 3107 is a problem, error information is included in the privacy check response message in Step 7 and Step 8 of Fig. 32, the SGSN/MSC device 3103 sends the UE device 3115 an error message, which does not contain the positional information, and terminates the process.

The SGSN/MSC device 3103, which has received the privacy check result indicating that there is no problem sending the positional information of the UE device 3115 to the external device 3107 through the privacy check response message, performs position measurement in cooperation with the UE device 3115, the RAN 3104 and the like, to obtain the positional information of the UE device 3115 (Step 9 in Fig. 32).

The SGSN/MSC device 3103, which has obtained the positional information of the terminal, responds to the UE device 3115 with the positional information (Step 10 in Fig. 32), and the UE device 3115 sends the positional information to the external device 3107 (Step 11 in Fig. 32).

Processing the position measurement shown in Step 9 in Fig. 32 concurrently with Step 2 to Step 8 of Fig. 32 can also be considered. In this way, the overall processing time can be shortened.

Further, performing position measurement between Step 1 and Step 2 of Fig. 32, and sending the positional information of the UE device 3115 to the GMLC device 3112 with the positional information included in the privacy check request message, can also be considered. In this way, privacy check can be performed based on the positional information of the terminal.

Although, in the present example, the case where the UE device 3115 requests the SGSN/MSC device 3103 for the position of the device itself in Step 1 of Fig. 32, and the positional information of the UE device 3115 is notified from the SGSN/MSC device 3103 to the UE device 3115 in Step 10 of Fig. 32 has been described, similarly to the second example, an example where the SGSN/MSC device 3103 notifies the UE device 3115 of the supplementary information in order for the UE device 3115 to determine the positional information of the device itself in Step 10 of Fig. 32 can also be considered.

Although the examples of the present invention have been described above, the present invention is not limited to only the above examples, and various modifications can be made. The functions of the terminal position determination device, the privacy check device and terminal of the present invention may be achieved in computers and programs in addition to hardware. The program is stored and provided on a computer-readable storage media such as a magnetic disc and a semiconductor memory, read by a computer during computer startup or the like, and controls the operation of the computer, causing the computer to function as a terminal position determination device, a privacy check device and a terminal in each of above-mentioned examples.

An effect of the present invention is the ability to achieve privacy protection when the terminal obtains the position of the terminal itself in a mobile network, and notifies the server of the position. The reason is, when the terminal requests the mobile network for information on the position of the terminal itself, the information on the position is provided to the terminal only when privacy determination is performed in the mobile network and notification of the positional information from the terminal to the server is permitted.

Although the invention has been illustrated and described with respect to exemplary embodiment and example thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

### INDUSTRIAL APPLICABILITY

Utilization examples of the present invention include, a system using a mobile phone network having a function for determining the position of the terminal to notify from the mobile phone a server outside the mobile phone network of the positional information. In particular, in a case where the positional information is obtained from the mobile phone network, and the server outside the mobile phone network is notified of the positional information through other networks, mobile phone network providers can achieve privacy protection in regards to the positional information.

## Claims

1. A positional information notification system comprising a mobile communication network to which one or more terminals and one or more terminal position determination devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of the positional information,
wherein said terminal position determination device has privacy settings for users who use each of the terminals, and a privacy check unit, which privacy check unit having a function for determining, based on said privacy setting, whether to permit the notification of the positional information from said terminal to said selected server,
wherein said terminal position determination device, upon receiving said position request message from said terminal, determines by using said privacy check unit whether to permit the notification of the positional information from said terminal to said selected server, and if permitted, provides to said terminal said information on the position of said terminal.

2. The positional information notification system according to claim 1,
wherein said terminal position determination device inquires, by using said privacy check unit, of the user of said terminal about whether to permit the notification of the positional information to said selected server, and provides to said terminal said information on the position of said terminal only when said user permits the notification of the positional information to said selected server.

3. The positional information notification system according to claim 2,
wherein a condition for said inquiry of the user of said terminal in said privacy check unit is that the notification of the positional information from said terminal to said selected server is not permitted based on the privacy setting for the user who uses said terminal.

4. A positional information notification system comprising a mobile communication network to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of the positional information,
wherein said privacy check device holds privacy settings for users who use each of the terminals and has a privacy check unit, which privacy check unit having a function for determining whether to permit, based on said privacy setting, the notification of the positional information -from said terminal to said server,
wherein said terminal position determination device, upon receiving the position request message from said terminal, inquires of a privacy check device for holding the privacy setting for the user who uses said terminal about whether to permit the notification of the positional information from said terminal to said selected server,
wherein said privacy check device, upon receiving said inquiry from said terminal position determination device, determines by using said privacy check unit whether to permit, based on said privacy setting, the notification of the positional information from said terminal to said selected server, and notifies said terminal position determination device of the result of the determination,
wherein said terminal position determination device provides to said terminal said information on the position of said terminal if the notification of the positional information from said terminal to said selected server is permitted based on the result of said determination notified from said privacy check device.

5. The positional information notification system according to claim 4,
wherein said privacy check device for holding the privacy setting of said terminal inquires of the user of said terminal about whether to permit the notification of the positional information to said selected server, and notifies said terminal position determination device of the result, notified from said terminal, of the determination by said user.

6. The positional information notification system according to claim 5,
wherein a condition for said inquiry of the user of said terminal in said privacy check device for holding the privacy setting of said terminal is that the notification of the positional information from said terminal to said selected server is not permitted based on the privacy setting for the user who uses said terminal.

7. A positional information notification system comprising two or more mobile communication networks to which one or more terminals and one or more terminal position determination devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining said positional information of the terminal itself and notifying said selected server of said positional information,
wherein a first of said terminal position determination device associated with a first of said mobile communication network has privacy settings for users who use each of the terminals associated with said first mobile communication network, and a privacy check unit, which privacy check unit having a function for determining whether to permit, based on said privacy setting, the notification of the positional information from said terminal associated with said first mobile communication network to said selected server,
wherein a second of said terminal position determination device associated with a second of said mobile communication network, upon receiving said position request message from said terminal associated with the first mobile communication network, inquires of said first terminal position determination device about whether to permit the notification of the positional information from said terminal to said selected server,
wherein said first terminal position determination device determines by using said privacy check unit whether to permit, based on said privacy setting, the notification of the positional information from said terminal to said selected server, and notifies said second terminal position determination device of the result of the determination,
wherein said second terminal determination device provides to said terminal said information on the position of said terminal, if the notification of the positional information from said terminal to said selected server is permitted based on the result of said determination notified from said first terminal position determination device.

8. The positional information notification system according to claim 7,
wherein said first terminal position determination device inquires, by using said privacy check unit, of the user of said terminal about whether to permit the notification of the positional information to said selected server, and notifies said second terminal position determination device of the result, notified from said terminal, of the determination by said user.

9. The positional information notification system according to claim 8,
wherein a condition for said inquiry of the user of said terminal in said privacy check unit in said first terminal position determination device is that the notification of the positional information from said terminal to said selected server is not permitted based on the privacy setting for the user who uses said terminal

10. A positional information notification system of the present invention comprising two or more mobile communication networks to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information,
wherein a first of said privacy check device associated with a first of said mobile communication network holds privacy settings for users who use each of the terminals associated with said first mobile communication network, and has a privacy check unit, which privacy check unit having a function for determining whether to permit, based on said privacy setting, the notification of the positional information from the terminal associated with said first network to said selected server,
wherein a second of said terminal position determination device associated with a second of said mobile communication network, upon receiving said position request message from said terminal associated with said first mobile communication network, inquiries of said second privacy check device associated with said second mobile communication network about whether to permit the notification of the positional information from said terminal to said selected server,
wherein said second privacy check device inquires of said first privacy check device about whether to permit the notification of the positional information from said terminal to said selected server,
wherein said first privacy check device determines by using said privacy check unit whether to permit, based on said privacy setting, the notification of the positional information from said terminal to said selected server, and notifies said second privacy check device of the result of the determination,
wherein said second privacy check device notifies said second terminal position determination device of the result of said determination from said first privacy check device,
wherein said second terminal position determination device provides to said terminal said information on the position of said terminal, if the notification of the positional information from the terminal to said selected server is permitted based on the result of said determination notified from said second privacy check device.

11. The positional information notification system according to claim 10,
wherein said first privacy check device inquires, by using said privacy check unit, of the user of said terminal about whether to permit the notification of the positional information to said server, and notifies said second privacy check device of the result, notified from said terminal, of the determination by said user.

12. The positional information notification system according to claim 10,
wherein a second of said terminal position determination device associated with a second of said mobile communication network, upon receiving said position request message from said terminal associated with said first mobile communication network, inquires of said first privacy check device about whether to permit the notification of the positional information from said terminal to said selected server,
wherein said first privacy check device determines by using said privacy check unit whether to permit, based on said privacy setting, the notification of the positional information from said terminal to said selected server, and notifies said second terminal position determination device of the result of the determination,
wherein said second terminal position determination device provides to said terminal said information on the position of said terminal, if the notification of the positional information from said terminal to said selected server is permitted based on the result of said determination notified from said first privacy check device.

13. The positional information notification system according to claim 12,
wherein said first privacy check device inquires, by using said privacy check unit, of the user of said terminal about whether to permit the notification of the positional information to said server, and notifies said second terminal position determination device of the result, notified from said terminal, of the determination by said user.

14. The positional information notification system according to claim 11 or 13,
wherein a condition for said inquiry of the user of said terminal in said first privacy check device for holding the privacy setting of said terminal is that the notification of the positional information from said terminal to said selected server is not permitted based on the privacy setting for the user who uses said terminal.

15. The positional information notification system according to any one of claims 1 to 14,
wherein said information on the position provided to said terminal from said terminal position determination device is the positional information of said terminal.

16. The positional information notification system according to any one of claims 1 to 14,
wherein said information on the position provided to said terminal from said terminal position determination device is supplementary information required for said terminal to determine the positional information of the terminal itself.

17. A positional information notification method comprising the steps:
(1) a terminal for notifying a server that can communicate with the terminal of the positional information of the terminal itself transmits a position request message to a terminal position determination device,
(2) said terminal position determination device determines whether to permit the notification of the positional information from said terminal to said server based on privacy setting information for a user who uses said terminal,
(3) if the notification of the positional information from said terminal to said server has been determined to be permitted, position measurement is performed between said terminal position determination device and said terminal,
(4) said terminal position determination device provides to said terminal the positional information of said terminal obtained by said position measurement, and
(5) said terminal notifies said server of said provided positional information of the terminal itself.

18. A positional information notification method comprising the steps:
(1) a terminal for notifying a server that can communicate with the terminal of the positional information of the terminal itself transmits a position request message to a terminal position determination device,
(2) position measurement is performed between said terminal position determination device and said terminal,
(3) said terminal position determination device determines whether to permit the notification of the positional information from said terminal to said server based on privacy setting information for a user who uses said terminal,
(4) if the notification of the positional information from said terminal to said server has been determined to be permitted, said terminal position determination device provides to said terminal the positional information of said terminal obtained by said position measurement, and
(5) said terminal notifies said server of said provided positional information of the terminal itself.

19. A positional information notification method comprising the steps:
(1) a terminal for notifying a server that can communicate with the terminal of the positional information of the terminal itself transmits a position request message to a terminal position determination device,
(2) said terminal position determination device determines whether to permit the notification of the positional information from said terminal to said server based on privacy setting information for a user who uses said terminal, while performing position measurement between said terminal position determination device and said terminal,
(3) if the notification of the positional information from said terminal to said server has been determined to be permitted, said terminal position determination device provides to said terminal the positional information of said terminal obtained by said position measurement, and
(4) said terminal notifies said server of said provided positional information of the terminal itself.

20. A positional information notification method comprising the steps:
(1) a terminal for notifying a server that can communicate with the terminal of the positional information of the terminal itself transmits a position request message to a terminal position determination device,
(2) said terminal position determination device determines whether to permit the notification of the positional information from said terminal to said server based on privacy setting information for a user who uses said terminal,
(3) if the notification of the positional information from said terminal to said server has been determined to be permitted, said terminal position determination device provides to said terminal supplementary information required for said terminal to determine the positional information of the terminal itself,
(4) said terminal determines the positional information of the terminal itself using said provided supplementary information, and
(5) said terminal notifies said server of said determined positional information of the terminal itself.

21. A positional information notification method comprising the steps:
(1) a terminal for notifying a server that can communicate with the terminal of the positional information of the terminal itself transmits a position request message to a terminal position determination device,
(2) said terminal position determination device inquires of a user of said terminal about whether to permit the notification of the positional information to said server,
(3) said terminal notifies said terminal position determination device of the user-determined result for the terminal itself,
(4) said terminal position determination device confirms the notified user-determined result,
(5) if the notification of the positional information from said terminal to said server has been determined to be permitted, position measurement is performed between said terminal position determination device and said terminal,
(6) said terminal position determination device provides to said terminal the positional information of said terminal obtained by said position measurement, and
(7) said terminal notifies said server of said provided positional information of the terminal itself.

22. A positional information notification method comprising the steps:
(1) a terminal for notifying a server that can communicate with the terminal of the positional information of the terminal itself transmits a position request message to a terminal position determination device,
(2) said terminal position determination device determines whether the notification of the positional information from said terminal to said server is permitted based on privacy setting information for a user who uses said terminal,
(3) if the notification of the positional information from said terminal to said server has been determined to be not permitted, said terminal position determination device inquires of the user of said terminal about whether to permit the notification of the positional information to said server,
(4) said terminal notifies said terminal position determination device of the user-determined result of the terminal itself,
(5) said terminal position determination device confirms the notified user-determined result,
(6) if the notification of the positional information from said terminal to said server has been determined to be permitted, position measurement is performed between said terminal position determination device and said terminal,
(7) said terminal position determination device provides to said terminal the positional information of said terminal obtained by said position measurement, and
(8) said terminal notifies said server of said provided positional information of the terminal itself.

23. A positional information notification method comprising the steps:
(1) a terminal for notifying a server that can communicate with the terminal of the positional information of the terminal itself transmits a position request message to a terminal position determination device,
(2) upon receiving said position request message, said terminal position determination device requests a privacy check from a privacy check device,
(3) said privacy check device determines whether the notification of the positional information from said terminal to said server is permitted based on privacy setting information for a user who uses said terminal,
(4) said privacy check device notifies said terminal position determination device of the privacy check result,
(5) if the notification of the positional information from said terminal to said server has been permitted based on said privacy check result, position measurement is performed between said terminal position determination device and said terminal,
(6) said terminal position determination device provides to said terminal the positional information of said terminal obtained by said position measurement, and
(7) said terminal notifies said server of said provided positional information of the terminal itself.

24. A positional information notification method comprising the steps:
(1) a terminal for notifying a server that can communicate with the terminal of the positional information of the terminal itself transmits a position request message to a terminal position determination device,
(2) upon receiving said position request message, said terminal position determination device requests a privacy check from a privacy check device,
(3) said privacy check device determines whether the notification of the positional information said the terminal to said server is permitted based on privacy setting information for a user who uses said terminal,
(4) if the notification of the positional information from said terminal to said server has been determined to be not permitted, said privacy check device inquires of the user of said terminal about whether to permit the notification of the positional information to said server,
(5) said terminal notifies said privacy check device of the user-determined result of the terminal itself,
(6) said privacy check device confirms the notified user-determined result,
(7) said privacy check device notifies said terminal position determination device of the privacy check result,
(8) if the notification of the positional information from said terminal to said server has been determined to be permitted based on said privacy check result, position measurement is performed between said terminal position determination device and said terminal,
(9) said terminal position determination device provides to said terminal the positional information of said terminal obtained by said position measurement, and
(10) said terminal notifies said server of said provided positional information of the terminal itself.

25. A positional information notification method comprising the steps:
(1) a terminal for notifying a server that can communicate with the terminal of the positional information of the terminal itself transmits a position request message to a first terminal position determination device connected to a first mobile communication network to which the terminal itself is connected,
(2) said first terminal position determination device requests a privacy check from a second terminal position determination device connected to a second mobile communication network with which said terminal is associated,
(3) said second terminal position determination device determines whether the notification of the positional information from said terminal to said server is permitted based on privacy setting information for a user who uses said terminal,
(4) said second terminal position determination device notifies said first terminal position determination device of the privacy check result,
(5) if the notification of the positional information from said terminal to said server has been permitted based on said privacy check result, position measurement is performed between said first terminal position determination device and said terminal,
(6) said first terminal position determination device provides to said terminal the positional information of said terminal obtained by said position measurement, and
(7) said terminal notifies said server of said provided positional information of the terminal itself.

26. A positional information notification method comprising the steps:
(1) a terminal for notifying a server that can communicate with the terminal of the positional information of the terminal itself transmits a position request message to a first terminal position determination device connected to a first mobile communication network to which the terminal itself is connected,
(2) said first terminal position determination device requests a privacy check from a second terminal position determination device connected to a second mobile communication network with which said terminal is associated,
(3) said second terminal position determination device inquires of a user of said terminal about whether to permit the notification of the positional information to said server,
(4) said terminal notifies said second terminal position determination device of the user-determined result of the terminal itself,
(5) said second terminal position determination device confirms the notified user-determined result,
(6) said second terminal position determination device notifies said first terminal position determination device of the privacy check result,
(7) if the notification of the positional information from said terminal to said server has been permitted based on said privacy check result, position measurement is performed between said first terminal position determination device and said terminal,
(8) said first terminal position determination device provides to said terminal the positional information of said terminal obtained by said position measurement, and
(9) said terminal notifies said server of said provided positional information of the terminal itself.

27. A positional information notification method comprising the steps:
(1) a terminal for notifying a server that can communicate with the terminal of the positional information of the terminal itself transmits a position request message to a first terminal position determination device connected to a first mobile communication network to which the terminal itself is connected,
(2) said first terminal position determination device requests a privacy check from a second terminal position determination device connected to a second mobile communication network with which said terminal is associated,
(3) said second terminal position determination device determines whether the notification of the positional information from said terminal to said server is permitted based on privacy setting information for a user who uses said terminal,
(4) if the notification of the positional information from said terminal to said server has been determined to be not permitted, said second terminal position determination device inquires of the user of said terminal about whether to permit the notification of the positional information to said server,
(5) said terminal notifies said second terminal position determination device of the user-determined result of the terminal itself,
(6) said second terminal position determination device confirms the notified user-determined result,
(7) said second terminal position determination device notifies said first terminal position determination device of the privacy check result,
(8) if the notification of the positional information from said terminal to said server is permitted based on said privacy check result, position measurement is performed between said first terminal position determination device and said terminal,
(9) said first terminal position determination device provides to said terminal the positional information of said terminal obtained by said position measurement, and
(10) said terminal notifies said server of said provided positional information of the terminal itself.

28. A positional information notification method comprising the steps:
(1) a terminal for notifying a server that can communicate with the terminal of the positional information of the terminal itself transmits a position request message to a first terminal position determination device connected to a first mobile communication network to which the terminal itself is connected,
(2) said first terminal position determination device requests a privacy check from a first privacy check device connected to said same first mobile communication network,
(3) said first privacy check device requests a privacy check from a second privacy check device connected to a second mobile communication network with which said terminal is associated,
(4) said second privacy check device determines whether the notification of the positional information from said terminal to said server is permitted based on privacy setting information for a user who uses said terminal,
(5) said second privacy check device notifies said first privacy check device of the privacy check result,
(6) said first privacy check device notifies said first terminal position determination device of said notified privacy check result,
(7) if the notification of the positional information from said terminal to said server is permitted based on said privacy check result, position measurement is performed between said first terminal position determination device and said terminal,
(8) said first terminal position determination device provides to said terminal the positional information of said terminal obtained by said position measurement, and
(9) said terminal notifies said server of said provided positional information of the terminal itself.

29. A positional information notification method comprising the steps:
(1) a terminal for notifying a server that can communicate with the terminal of the positional information of the terminal itself transmits a position request message to a first terminal position determination device connected to a first mobile communication network to which the terminal itself is connected,
(2) said first terminal position determination device requests a privacy check from said first privacy check device connected to said same first mobile communication network,
(3) said first privacy check device requests a privacy check from a second privacy check device connected to a second mobile communication network with which said terminal is associated,
(4) said second privacy check device inquires of a user of said terminal about whether to permit the notification of the positional information to said server,
(5) said terminal notifies said second privacy check device of the user-determined result of the terminal itself,
(6) said second privacy check device confirms the notified user-determined result,
(7) said second privacy check device notifies said first privacy check device of the privacy check result,
(8) said first privacy check device notifies said first terminal position determination device of said notified privacy check result,
(9) if the notification of the positional information from said terminal to said server is permitted based on said privacy check result, position measurement is performed between said first terminal position determination device and said terminal,
(10) said first terminal position determination device provides to said terminal the positional information of said terminal obtained by said position measurement, and
(11) said terminal notifies said server of said provided positional information of the terminal itself.

30. A positional information notification method comprising the steps:
(1) a terminal for notifying a server that can communicate with the terminal of the positional information of the terminal itself transmits a position request message to a first terminal position determination device connected to a first mobile communication network to which the terminal itself is connected,
(2) said first terminal position determination device requests a privacy check from a first privacy check device connected to said same first mobile communication network,
(3) said first privacy check device requests a privacy check from a second privacy check device connected to a second mobile communication network with which said terminal is associated,
(4) said second privacy check device determines whether the notification of the positional information from said terminal to said server is permitted based on privacy setting information for a user who uses said terminal,
(5) if the notification of the positional information from said terminal to said server has been determined to be not permitted, said second privacy check device inquires of the user of said terminal about whether to permit the notification of the positional information to said server,
(6) said terminal notifies said second privacy check device of the user-determined result of the terminal itself,
(7) said second privacy check device confirms the notified user-determined result,
(8) said second privacy check device notifies said first privacy check device of the privacy check result,
(9) said first privacy check device notifies said first terminal position determination device of said notified privacy check result,
(10) if the notification of the positional information from said terminal to said server is permitted based on said privacy check result, position measurement is performed between said first terminal position determination device and said terminal,
(11) said first terminal position determination device provides to said terminal the positional information of said terminal obtained by said position measurement, and
(12) said terminal notifies said server of said provided positional information of the terminal itself.

31. A terminal position determination device in a positional information notification system comprising a mobile communication network to which one or more terminals and one or more terminal position determination devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of said terminal, said terminal obtaining via said position request message said information on the position of the terminal itself from said terminal position determination device, determining the positional information of the terminal itself and notifying said selected server of the positional information,
wherein said terminal position determination device comprises a holding unit for holding a privacy setting for a user who uses said terminal, a privacy check unit for determining whether to permit, based on said privacy setting, the notification of the positional information from said terminal to said selected server, and a providing unit for, upon receiving said position request message from said terminal, determining by using said privacy check unit whether to permit the notification of the positional information from said terminal to said selected server, and, if permitted, providing to said terminal said information on the position of said terminal.

32. The terminal position determination device according to claim 31,
wherein the user of said terminal is inquired by said privacy check unit about whether to permit the notification of the positional information to said selected server, and said information on the position of said terminal is provided to said terminal only when said user permits the notification of the positional information to said selected server.

33. The terminal position determination device according to claim 32,
wherein a condition for said inquiry of the user of said terminal in said privacy check unit is that the notification of the positional information from said terminal to said selected server is not permitted based on the privacy setting for the user who uses said terminal.

34. A terminal position determination device in a positional information notification system comprising a mobile communication network to which one or more terminals, one or more terminal position determination devices and one or more privacy check devices are connected, and one or more servers that can communicate with said terminal, said privacy check device holding privacy settings for users who use each of the terminals, and having a privacy check unit, said privacy check unit having a function for determining whether to permit, based on said privacy setting, the notification of the positional information from said terminal to said server, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information,
wherein said terminal position determination device, upon receiving the position request message from said terminal, inquires of a privacy check device for holding the privacy setting for the user who uses said terminal about whether to permit the notification of the positional information from said terminal to said selected server, when said terminal position determination device is notified of the result of the determination, if the notification of the positional information from said terminal to said selected server is permitted based on the result of said determination notified from said privacy check device, said information on the position of said terminal is provided to said terminal.

35. A terminal position determination device in a positional information notification system comprising two or more mobile communication networks to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information,
wherein said terminal position determination device comprises a holding unit for holding privacy settings for users who use each of the terminals associated with the mobile communication network to which the terminal position determination device itself is connected, and a privacy check unit for determining whether to permit, based on said privacy setting, the notification of the positional information from said terminal associated with the mobile communication network to which the device itself is connected to the selected server,
wherein said terminal position determination device, upon receiving said position request message from said terminal associated with the mobile communication network to which the terminal position determination device itself is connected, determines by using said privacy check unit whether to permit, based on said privacy setting, the notification of the positional information from said terminal to said selected server, and, if permitted, provides to said terminal said information on the position of said terminal,
wherein said terminal position determination device, upon receiving said position request message from said terminal not associated with the mobile communication network to which the terminal position determination device itself is connected, inquires of other terminal position determination devices connected to other mobile communication networks with which said terminal is associated about whether to permit the notification of the positional information from said terminal to said selected server, and based on the result of the inquiry, if permitted, provides to said terminal said information on the position of said terminal,
wherein said terminal position determination device, when inquired by the other terminal position determination devices connected to the other mobile communication networks than the mobile communication network to which the terminal position determination device itself is connected, about whether to permit the notification of the positional information from said terminal to said selected server regarding said position request message issued by said terminal associated with the mobile communication network to which the terminal position determination device itself is connected, determines by using said privacy check unit whether to permit, based on said privacy setting, the notification of the positional information from said terminal to said selected server, and notifies said other terminal position determination devices of the result of the determination.

36. The terminal position determination device according to claim 35,
wherein said privacy check unit inquires of the user of said terminal about whether to permit the notification of the positional information to said server, and uses the result, notified from said terminal, of the determination by said user.

37. The terminal position determination device according to claim 36,
wherein a condition for said inquiry of the user of said terminal in said privacy check unit is that the notification of the positional information from said terminal to said selected server is not permitted based on the privacy setting for the user who uses said terminal.

38. The terminal position determination device according to any one of claims 31 to 37,
wherein said information on the position provided to said terminal is the positional information of said terminal.

39. The terminal position determination device according to any one of claims 31 to 37,
wherein said information on the position provided to said terminal is supplementary information required for said terminal to determine the positional information of the terminal itself.

40. A privacy check device in a positional information notification system comprising a mobile communication network to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with the terminal of the positional information of the terminal itself, said terminal obtaining via said position request message said information on the position of the terminal itself from said terminal position determination device, determining the positional information of the terminal itself and notifying said selected server of the positional information,
wherein said privacy check device comprises a holding unit for holding privacy settings for users who use each of the terminals, and a privacy check unit for determining whether to permit, based on said privacy setting, the notification of the positional information from said terminal to said server,
wherein, when said terminal position determination device receives the position request message from said terminal, and inquires of said privacy check device about whether to permit the notification of the positional information from said terminal to said selected server, said privacy check device determines by using said privacy check unit whether to permit, based on said privacy setting, the notification of the positional information from said terminal to said selected server, and notifies said terminal position determination device of the result of the determination.

41. The privacy check device according to claim 40,
wherein said privacy check device inquires of the user of said terminal about whether to permit the notification of the positional information to said selected server, and notifies said terminal position determination device of the result, notified from said terminal, of the determination by said user.

42. The privacy check device according to claim 41,
wherein a condition for said inquiry of the user of said terminal is that the notification of the positional information from said terminal to said selected server is not permitted based on the privacy setting for the user who uses said terminal.

43. A privacy check device in a positional information notification system comprising two or more mobile communication networks to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information, wherein said privacy check device comprises a holding unit for holding privacy settings for users who use each of the terminals associated with the mobile communication network to which the privacy check device itself is connected, and a privacy check unit for determining whether to permit, based on said privacy setting, the notification of the positional information from said terminal associated with the mobile communication network to which the device itself is connected to said selected server,
wherein, when said terminal position determination device connected to the mobile communication network to which the privacy check device itself is connected receives said position request message from said terminal, and inquires of the privacy check device about whether to permit the notification of the positional information from said terminal to said selected server, if said terminal is the one associated with the mobile communication network to which the privacy check device itself is connected, said privacy check device determines by using said privacy check unit whether to permit, based on said privacy setting, the notification of the positional information from said terminal to said selected server, and notifies said terminal position determination device of the result of the determination, on the other hand, if said terminal is the one not associated with the mobile communication network to which the privacy check device itself is connected, said privacy check device inquires of other privacy check devices connected to other mobile communication networks with which said terminal is associated about whether to permit the notification of the positional information from said terminal to said selected server, and notifies said terminal position determination device of the result of the inquiry,
wherein said privacy check device, when inquired by the other privacy check devices connected to the other mobile communication networks than the mobile communication network to which the privacy check device itself is connected, about whether to permit the notification of the positional information from said terminal residing the mobile communication network to which the privacy check device itself is connected to said selected server, determines by using said privacy check unit whether to permit, based on said privacy setting, the notification of the positional information from said terminal to said selected server, and notifies the other privacy check devices of the result of the determination.

44. The privacy check device according to claim 43,
wherein said privacy check unit inquires of the user of said terminal about whether to permit the notification of the positional information to said server, and uses the result, notified from said terminal, of the determination by said user.

45. A privacy check device in a positional information notification system comprising two or more mobile communication networks to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information,
wherein said privacy check device comprises a holding unit for holding privacy settings for users who use each of the terminals associated with the mobile communication network to which the privacy check device itself is connected, and a privacy check unit for determining whether to permit, based on said privacy setting, the notification of the positional information from said terminal associated with the mobile communication network to which the device itself is connected to said selected server,
wherein, when said terminal position determination device connected to the mobile communication network to which the privacy check device itself is connected receives said position request message from said terminal, and inquires of said privacy check device about whether to permit the notification of the positional information from said terminal to said selected server, if said terminal is the one associated with the mobile communication network to which the privacy check device itself is connected, said privacy check device determines by using said privacy check unit whether to permit, based on said privacy setting, the notification of the positional information from said terminal to said selected server, and notifies said terminal position determination device of the result of the determination, on the other hand, if- said terminal is the one not associated with the mobile communication network to which the privacy check device itself is connected, said privacy check device inquires of other privacy check devices connected to other mobile communication networks with which said terminal is associated about whether to permit the notification of the positional information from said terminal to said selected server, and notifies said terminal position determination device of the result of the inquiry,
wherein said privacy check device, when inquired by said terminal position determination device connected to the other mobile communication networks than the mobile communication network to which the privacy check device itself is connected, about whether to permit the notification of the positional information from said terminal residing the mobile communication network to which the privacy check device itself is connected to said selected server, determines by using said privacy check unit whether to permit, based on said privacy setting the notification of the positional information from said terminal to said selected server, and notifies said terminal position determination device of the result of the determination.

46. The privacy check device according to claim 45,
wherein said privacy check unit inquires of the user of said terminal about whether to permit the notification of the positional information to said server, and uses the result, notified from said terminal, of the determination by said user.

47. The privacy check device according to claim 44 or claim 46,
wherein a condition for said inquiry of the user of said terminal is that the notification of the positional information from said terminal to said server is not permitted based on the privacy setting for the user who uses said terminal.

48. The privacy check device according to any one of claims 40 to 47,
wherein said information on the position provided to said terminal from said terminal position determination device is the positional information of said terminal.

49. The privacy check device according to any one of claims 40 to 47,
wherein said information on the position provided to said terminal from said terminal position determination device is supplementary information required for said terminal to determine the positional information of the terminal itself.

50. A program causes, in a positional information notification system comprising a mobile communication network to which one or more terminals and one or more terminal position determination devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of said terminal, said terminal obtaining via said position request message said information on the position of the terminal itself from said terminal position determination device, determining the positional information of the terminal itself, and notifying said selected server of said positional information, a computer constituting said terminal position determination device to function as a holding unit for holding the privacy setting for a user who uses said terminal, a privacy check unit for determining whether to permit, based on said privacy setting, the notification of the positional information from said terminal to said selected server, and a providing unit for, upon receiving said position request message from said terminal, determining by using said privacy check unit whether to permit the notification of the positional information from said terminal to said selected server, and, if permitted, providing to said terminal said information on the position of said terminal.

51. A program causes, in a positional information notification system comprising a mobile communication network to which one or more terminals, one or more terminal position determination devices and one or more privacy check devices are connected, and one or more servers that can communicate with said terminal, said privacy check device holding privacy settings for users who use each of the terminals, and having a privacy check unit, said privacy check unit having a function for determining whether to permit, based on said privacy setting, the notification of the positional information from said terminal to said server, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information, a computer constituting said terminal position determination device to function as a means for, upon receiving the position request message from said terminal, inquiring of the privacy check device for holding the privacy setting for the user who uses said terminal about whether to permit the notification of the positional information from said terminal to said selected server, and a means for providing to said terminal said information on the position of said terminal if the notification of the positional information from said terminal to said selected server is permitted based on the result of said determination notified from said privacy check device.

52. A program causes, in a positional information notification system comprising two or more mobile communication networks to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information, a computer constituting said terminal position determination device to function as a holding unit for holding privacy settings for users who use each of the terminals associated with the mobile communication network to which the terminal position determination device itself is connected, and a privacy check unit for determining whether to permit, based on said privacy setting, the notification of the positional information from said terminal associated with the mobile communication network to which the device itself is connected to said selected server,
wherein said terminal position determination device, upon receiving said position request message from said terminal associated with the mobile communication network to which the terminal position determination device itself is connected, determines by using said privacy check unit whether to permit, based on said privacy setting, the notification of the positional information from said terminal to said selected server, and, if permitted, provides to said terminal said information on the position of said terminal,
wherein said terminal position determination device, upon receiving said position request message from said terminal not associated with the mobile communication network to which the terminal position determination device itself is connected, inquires of other terminal position determination devices connected to other mobile communication networks with which said terminal is associated about whether to permit the notification of the positional information from said terminal to said selected server, and based on the result of the inquiry, if permitted, provides to said terminal said information on the position of said terminal,
wherein said terminal position determination device, when inquired by the other terminal position determination devices connected to the other mobile communication networks than the mobile communication network to which the terminal position determination device itself is connected, about whether to permit the notification of the positional information from said terminal to said selected server, regarding said position request message issued by said terminal associated with the mobile communication network to which the terminal position determination device itself is connected, determines by using said privacy check unit whether to permit, based on said privacy setting, the notification of the positional information from said terminal to said selected server, and notifies said other terminal position determination devices of the result of the determination.

53. A program causes, in a positional information notification system comprising a mobile communication network to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from the one or more servers that can communicate with said terminal of the positional information of the terminal itself, said terminal obtaining via said position request message said information on the position of the terminal itself from said terminal position determination device, determining the positional information of the terminal itself and notifying said selected server of the positional information, a computer constituting said privacy check device to function as a holding unit for holding privacy settings for users who use each of the terminals, and a privacy check unit for determining whether to permit, based on said privacy setting, the notification of the positional information from said terminal to said server,
wherein, when said terminal position determination device receives the position request message from said terminal, and inquires of said privacy check device about whether to permit the notification of the positional information from said terminal to said selected server, said privacy check device determines by using said privacy check unit whether to permit, based on the privacy setting, the notification of the positional information from said terminal to said selected server, and notifies said terminal position determination device of the result of the determination.

54. A program causes, in a positional information notification system comprising two or more mobile communication networks to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from the one or more servers that can communicate with said terminal of the positional information of the terminal itself, said terminal obtaining via said position request message said information on the position of the terminal itself from said terminal position determination device, determining the positional information of the terminal itself and notifying said selected server of said positional information, a computer constituting said privacy check device to function as a holding unit for holding privacy settings for users who use each of the terminals associated with the mobile communication network to which the privacy check device itself is connected, and a privacy check unit for determining whether to permit, based on said privacy setting, the notification of the positional information from said terminal associated with the mobile communication network to which the device itself is connected to said selected server,
wherein, when said terminal position determination device connected to the mobile communication network to which the privacy check device itself is connected receives said position request message from said terminal, and inquires of the privacy check device about whether to permit the notification of the positional information from said terminal to said selected server, if said terminal is the one associated with the mobile communication network to which the privacy check device itself is connected, said privacy check device determines by using said privacy check unit whether to permit, based on said privacy setting, the notification of the positional information from said terminal to said selected server, and notifies said terminal position determination device of the result of the determination, on the other hand, if said terminal is the one not associated with the mobile communication network to which the privacy check device itself is connected, said privacy check device inquires of other privacy check devices connected to other mobile communication networks with which said terminal is associated about whether to permit the notification of the positional information from said terminal to said selected server, and notifies said terminal position determination device of the result of the inquiry,
wherein said privacy check device, when inquired by other privacy check devices connected to the other mobile communication networks than the mobile communication network to which the privacy check device itself is connected, about whether to permit the notification of the positional information from said terminal associated with the mobile communication network to which the privacy check device itself is connected to said-selected server, determines by using said privacy check unit whether to permit, based on said privacy setting, the notification of the positional information from said terminal to said selected server, and notifies said other privacy check devices of the result of the determination.

55. A program causes, in a positional information notification system comprising two or more mobile communication networks to which one or more terminals, one or more terminal position determination devices and one or more privacy check devices are connected, and one or more servers that can communicate with said terminal, said terminal position determination device having a function for receiving a position request message from said terminal and providing to said terminal, information on the position of said terminal, when said terminal notifies the server selected from said one or more servers that can communicate with said terminal of the positional information of the terminal itself, said terminal obtaining via said position request message said information on the position of the terminal itself from said terminal position determination device, determining the positional information of the terminal itself and notifying said selected server of said positional information, a computer constituting said privacy check device to function as a holding unit for holding privacy settings for users who use each of the terminals associated with the mobile communication network to which the privacy check device itself is connected, and a privacy check unit for determining whether to permit, based on said privacy setting, the notification of the positional information from said terminal associated with the mobile communication network to which the device itself is connected to said selected server,
wherein, when said terminal position determination device connected to the mobile communication network to which the privacy check device itself is connected receives said position request message from said terminal, and inquires of the privacy check device about whether to permit the notification of the positional information from said terminal to said selected server, if said terminal is the one associated with the mobile communication network to which the privacy check device itself is connected, said privacy check device determines by using said privacy check unit whether to permit, based on said privacy setting, the notification of the positional information from said terminal to said selected server, and notifies said terminal position determination device of the result of the determination, on the other hand, if said terminal is the one not associated with the mobile communication network to which the privacy check device itself is connected, said privacy check device inquires of other privacy check devices connected to other mobile communication networks with which said terminal is associated about whether to permit the notification of the positional information from said terminal to said selected server, and notifies said terminal position determination device of the result of the inquiry,
wherein said privacy check device, when inquired by said terminal position determination device connected to the other mobile communication networks than the mobile communication network to which the privacy check device itself is connected, about whether to permit the notification of the positional information from said terminal associated with the mobile communication network to which the privacy check device itself is connected to said selected server, determines by using said privacy check unit whether to permit, based on said privacy setting, the notification of the positional information from said terminal to said selected server, and notifies said terminal position determination device of the result of the determination.
